# EUROPÄISCHE PATENTSCHRIFT

(11) **EP 0 559 617 B1**
(45) Veröffentlichungstag und Bekanntmachung des Hinweises auf die Patenterteilung: **07.01.1998**
(21) Anmeldenummer: 93810136.7
(22) Anmeldetag: 25.02.1993
(51) Int. Cl.: C09B 62/507, C09B 62/47, C09B 62/08

(54) **Reaktivfarbstoffe, Verfahren zu deren Herstellung und deren Verwendung**
Reactive dyes, method for their preparation and the use thereof
Colorants réactifs, procédé pour leur préparation et leur utilisation

(30) Priorität: 05.03.1992 CH 691/92
(43) Veröffentlichungstag der Anmeldung: 08.09.1993
(73) Patentinhaber: Ciba Specialty Chemicals Holding Inc., 4057 Basel (CH)
(72) Erfinder: Tzikas, Athanassios, Dr., CH-4133 Pratteln (CH); Carisch, Claudia, CH-4153 Reinach (CH)

(56) Entgegenhaltungen:
- EP-A- 0 133 843
- FR-A- 2 110 325

## Beschreibung

Die vorliegende Erfindung betrifft neue Reaktivfarbstoffe, Verfahren zu deren Herstellung und deren Verwendung zum Färben und Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von cellulosehaltigen Stoffen wie Baumwolle werden heute Reaktivfarbstoffe gefordert, die eine ausreichende Substantivität haben, und die zugleich eine gute Auswaschbarkeit der nicht fixierten Anteile aufweisen. Sie sollen ferner eine hohe Reaktivität besitzen und insbesondere Färbungen mit hohen Fixiergraden liefern. Von den bekannten Farbstoffen werden diese Anforderungen nicht in allen Eigenschaften erfüllt.

Aus der EP-A-0 133 843 sind Reaktivfarbstoffe bekannt, welche im Unterschied zu den erfindungsgemässen Reaktivfarbstoffen einen Halogenpyrimidin-Reaktivrest enthalten.

Der vorliegenden Erfindung liegt daher die Aufgabe zugrunde, neue, verbesserte Reaktivfarbstoffe für das Färben und Bedrucken von cellulosehaltigen Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel 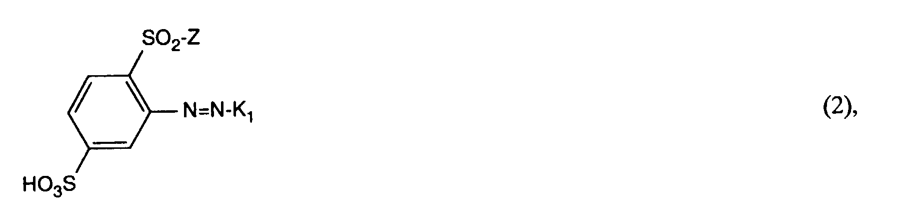 worin K₁ ein Rest der Formel 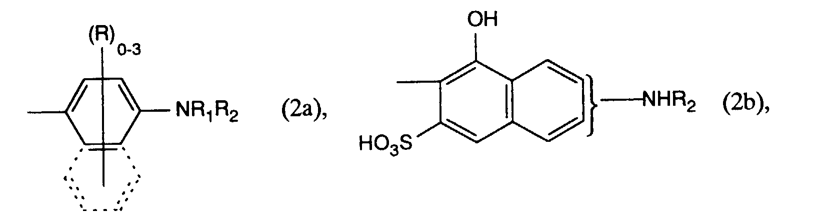 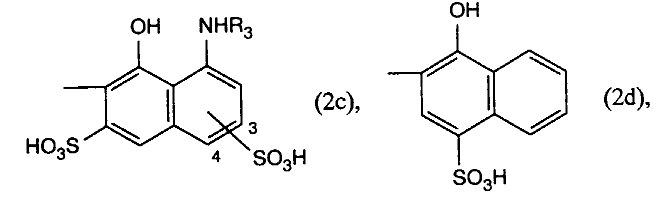 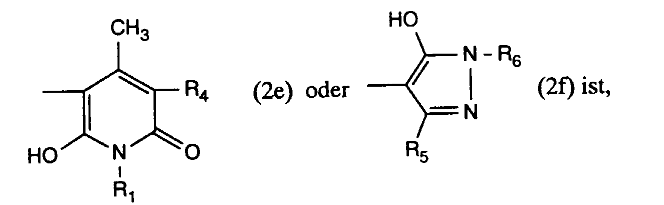
- (R)₀₋₃: 0 bis 3 Substituenten R aus der Gruppe C₁₋₂-Alkyl, C₁₋₂-Alkoxy, Hydroxy-C₁-C₂-Alkoxy, Halogen, Carboxy, Hydroxy, Amino, Acetylamino, Ureido oder Sulfo sind,
- R₁: Wasserstoff oder C₁₋₄-Alkyl,
- R₂: Wasserstoff, C₁₋₄-Alkyl, C₁₋₄-Alkanoyl oder C₁₋₄-Hydroxyalkyl,
- R₃: Wasserstoff, C₁₋₄-Alkyl, C₁₋₄-Alkanoyl, Benzoyl oder Aminobenzoyl ist und
- R₄: -CONH₂ oder -CH₂SO₃H,
- R₅: C₁₋₃-Alkyl oder Carboxy,
- R₆: Chloro- und/oder Sulfo-substituiertes Phenyl oder Naphthyl ist,
Z β-Sulfatoäthyl, β-Thiosulfatoäthyl, β-Phosphatoäthyl, β-Acyloxyäthyl, β-Halogenäthyl oder Vinyl ist und die zweite Sulfogruppe in Formel (2c) entweder in Position 3 oder 4 ist, Reaktivfarbstoffe der Formel 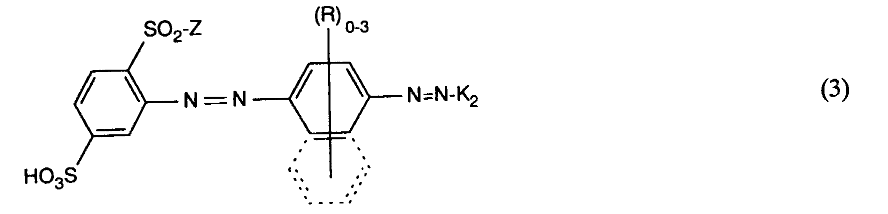 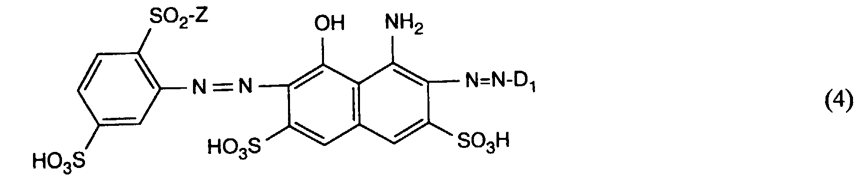 und 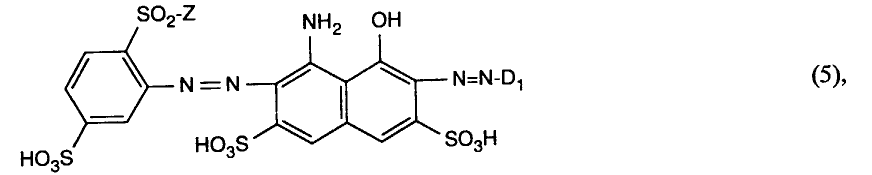 worin K₂ ein Rest der Formeln (2a) bis (2f) oder 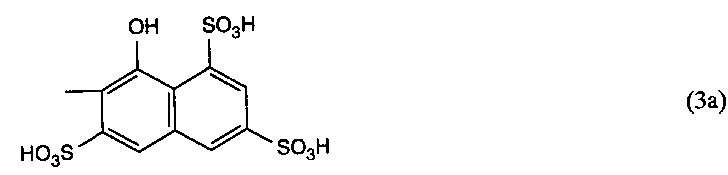 ist, D₁ ein Rest der Formel 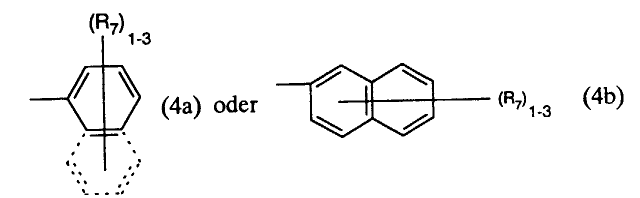 ist, worin
(R₇)₁₋₃ 1 bis 3 Substituenten aus der Gruppe C₁₋₂-Alkyl, C₁₋₂-Alkoxy, Halogen, Carboxy, Hydroxy, Amino oder Sulfo sind und
Z und (R)₀₋₃ die unter Formel (2) angegebene Bedeutung haben,
Reaktivfarbstoffe der Formel 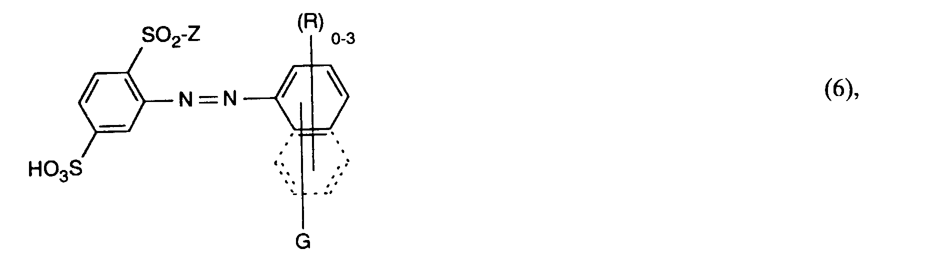 worin
Z und (R)₀₋₃ die unter der Formel (2) angegebene Bedeutung haben und
G ein Rest -NHCOCBr=CH₂, -NHCOCHBr-CH₂Br oder -SO₂Z, worin Z die zuvor angegebene Bedeutung hat, oder ein Rest der Formel 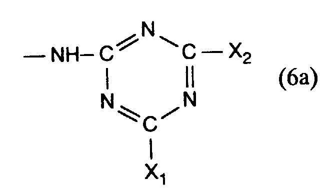
ist, worin
X₁ Halogen und
X₂ Halogen, Carboxy, Sulfo, Hydroxy, C₁-C₄-Alkoxy, Amino, N-Mono- oder
N,N-Dimethylamino, N-Mono- oder N,N-Diaethylamino, N-Methyl- oder
N-Aethyl-N-phenylamino, Morpholino, unsubstituiertes oder durch Methyl, Methoxy, Chlor oder Sulfo substituiertes Phenylamino, oder ein Rest der Formel

-NH-(CH₂)₂₋₃-SO₂Z,

-NH-(CH₂)₂-O-(CH₂)₂-SO₂Z,

-NH-(CH₂)₂₋₃-NH-(CH₂)₂₋₃-SO₂Z,

-N[(CH₂)₂₋₃-SO₂Z]₂,

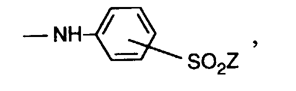

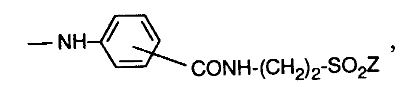

-NH-(CH₂)₂-O-(CH₂)₂-OH,

-NH-CH₂CH₂-OH

oder

-NH-CH₂CH₂SO₃H,

worin
Z jeweils die unter der Formel (2) angegebene Bedeutung hat, ist,
Reaktivfarbstoffe der Formel 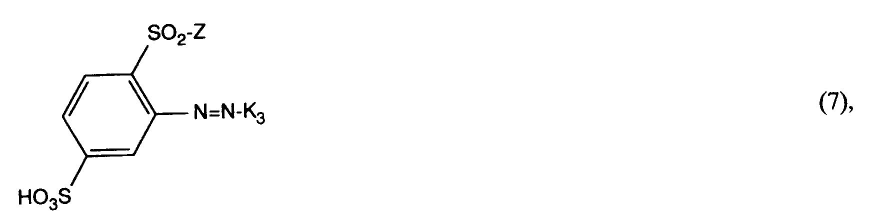 worin
K₃ den Rest von
1-Amino-8-hydroxynaphthalin-3,6-disulfosäure,
1-Amino-8-hydroxynaphthalin-4,6-disulfosäure oder
3-Amino-8-hydroxynaphthalin-6-sulfosäure,
worin die jeweilige Aminogruppe mit Benzoyl, halogenierten Acylgruppen oder einem Triazin gemäss Formel (6a) substituiert ist und Z die unter der Formel (2) angegebene Bedeutung hat,
oder den Rest von 2-Aminonaphthalin, welches in 5- oder 6-Stellung durch einen Rest -SO₂Z, worin Z die zuvor angegebene Bedeutung hat, substituiert ist, bedeutet,
Reaktivfarbstoffe der Formel 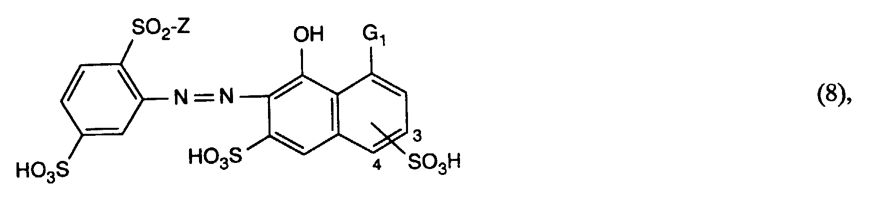 worin die zweite Sulfogruppe im Naphthalinrest entweder in Stellung 3 oder 4 ist,
G₁ ein Rest der Formel

-NHCOCHBr-CH₂Br (8a),

-NHCOCBr=CH₂ (8b),

-NHCOCH₂Cl (8c),

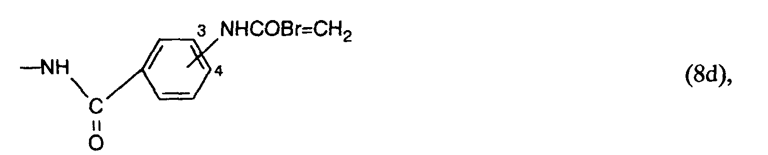

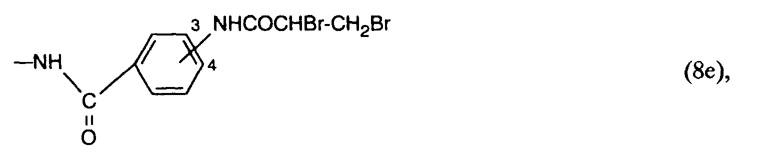

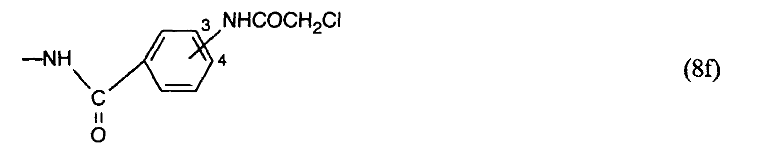

oder ein Rest der Formel (6a) ist, wobei die Reste der Formeln (8a), (8b) und (8c) in den Formeln (8d), (8e) und (8f) entweder in Stellung 3 oder 4 sind,
Z die in Formel (2) und X₁, X₂ die in Formel (6a) angegebene Bedeutung haben,
Reaktivfarbstoffe der Formel 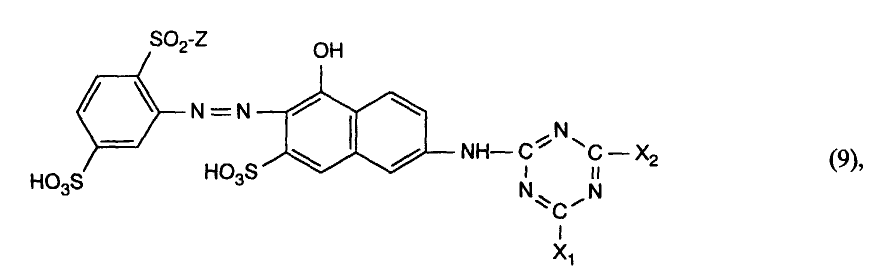 worin
Z die in Formel (2) und X₁, X₂ die in Formel (6a) angegebene Bedeutung haben,
Reaktivfarbstoffe der Formel 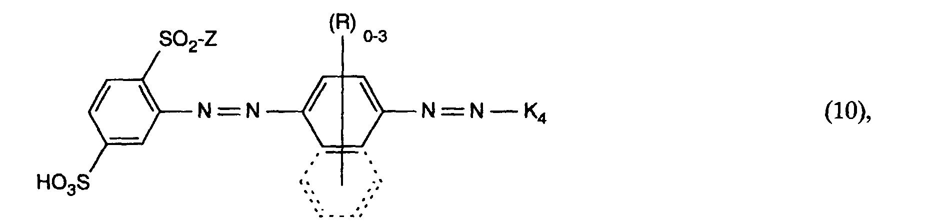 worin
K₄ der Rest der Formel 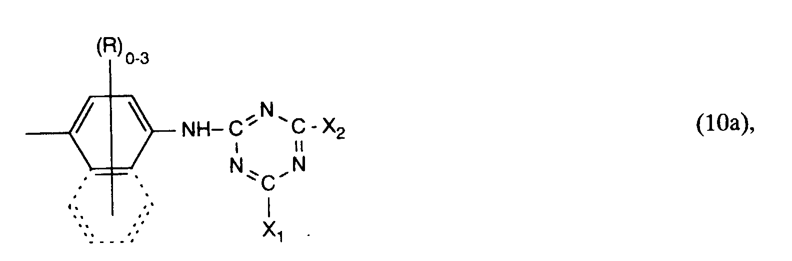 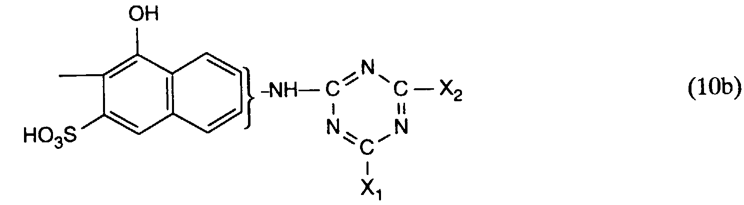 oder 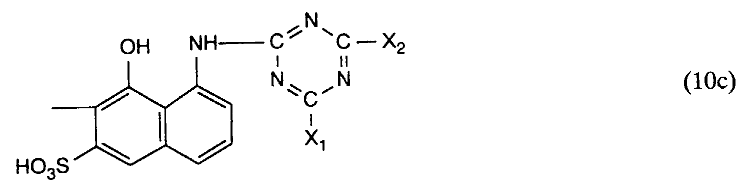 ist,
worin
Z und (R)₀₋₃ die unter der Formel (2) und X₁, X₂ die unter der Formel (6a) angegebene Bedeutung haben,
Reaktivfarbstoffe der Formel 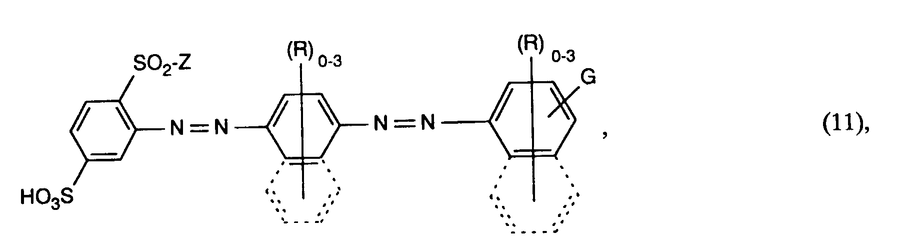 worin
Z und (R)₀₋₃ die in Formel (2) und G die in Formel (6) angegebene Bedeutung haben, sowie
Reaktivfarbstoffe der Formel 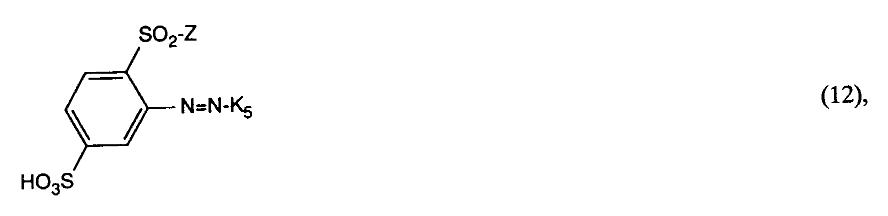 worin K₅ der Rest von
1-Amino-8-hydroxynaphthalin-3,6-disulfonsäure,
1-Amino-8-hydroxynaphthalin-3,5-disulfonsäure,
8-Amino-1-hydroxynaphthalin-3-(5,6)-disulfonsäure oder
8-Amino-1-hydroxynaphthalin-4,6-disulfonsäure
ist, der mit einem weiteren Rest der Formel 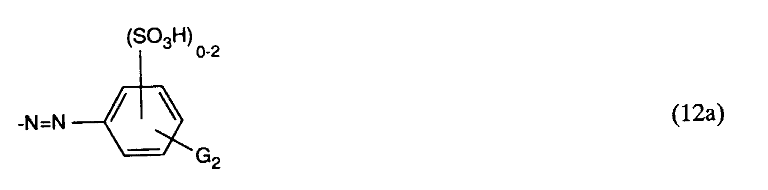 gekuppelt ist, worin
G₂ ein Rest der Formel

-SO₂-Z (12b),

-SO₂-CH₂CH=CH₂ (12c),

-NH-COCBr=CH₂ (8b),

-CONH-(CH₂)₂-SO₂-Z (12d),

-CONH-(CH₂)₂-O-(CH₂)₂-SO₂-Z (12f),

-NHCOCH₂Cl (8c)

oder

-NHCOCHBr-CH₂Br (8a)

ist, worin Z die in der Formel (2) angegebene Bedeutung hat.

Hervorzuheben sind monoreaktive Farbstoffe der Formel 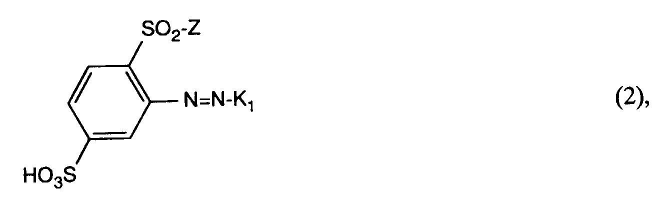 worin K₁ ein Rest der Formel 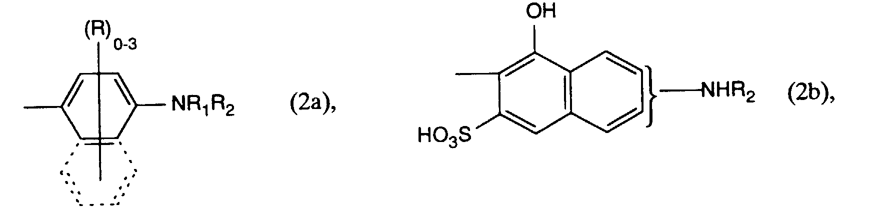 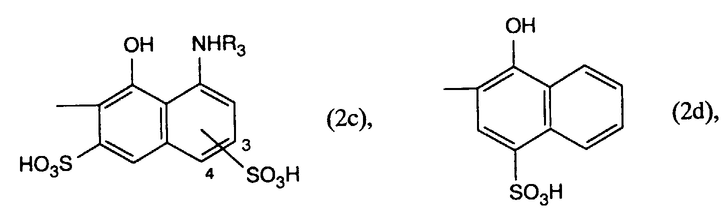 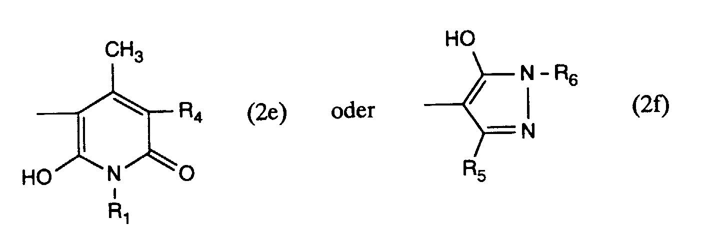 ist
- (R)₀₋₃: 0 bis 3 Substituenten R aus der Gruppe C₁₋₂-Alkyl, C₁₋₂-Alkoxy, Hydroxy-C₁-C₂-Alkoxy, Halogen, Carboxy, Hydroxy, Amino, Acetylamino, Ureido oder Sulfo sind,
- R₁: Wasserstoff oder C₁₋₄-Alkyl,
- R₂: Wasserstoff, C₁₋₄-Alkyl, C₁₋₄-Alkanoyl oder C₁₋₄-Hydroxyalkyl,
- R₃: Wasserstoff, C₁₋₄-Alkyl, C₁₋₄-Alkanoyl, Benzoyl oder Aminobenzoyl ist und
- R₄: -CONH₂ oder -CH₂SO₃H,
- R₅: C₁₋₃-Alkyl oder Carboxy,
- R₆: Chloro- und/oder Sulfo-substituiertes Phenyl oder Naphthyl ist,
Z die unter Formel (2) angegebene Bedeutung hat und die zweite Sulfogruppe in Formel (2c) entweder in Position 3 oder 4 ist.

Ebenfalls hervorzuheben sind monoreaktive Disazo-Farbstoffe der Formel 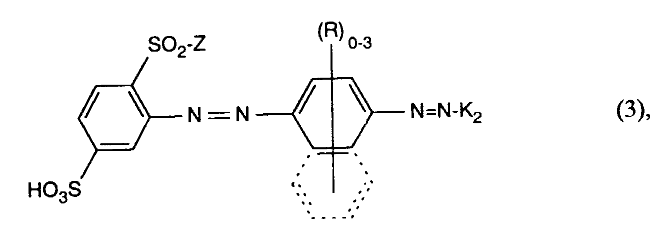 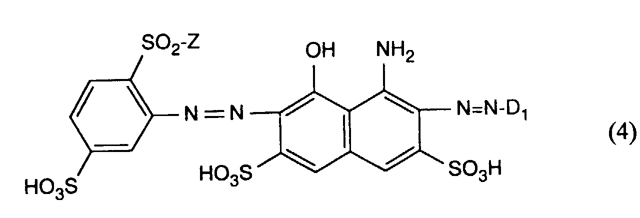 und 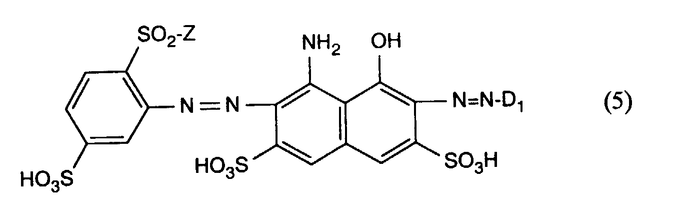 worin K₂ ein Rest der Formeln (2a) bis (2f) oder 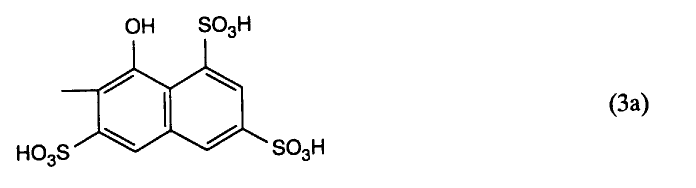 ist,
D₁ ein Rest der Formel 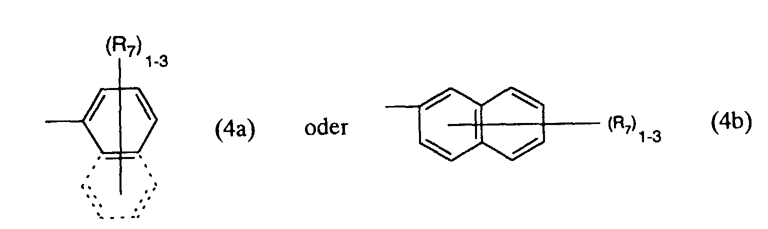 ist, worin (R₇)₁₋₃ 1 bis 3 Substituenten aus der Gruppe C₁₋₂-Alkyl, C₁₋₂-Alkoxy, Halogen, Carboxy, Hydroxy, Amino oder Sulfo sind und
Z die unter Formel (2) und
(R)₀₋₃ die unter Formel (2) angegebene Bedeutung haben.

Bevorzugt sind Mono- und Disazomonoreaktive Farbstoffe der Formel (2), in denen
- (R)₀₋₃: Methyl, Aethyl, Methoxy, Aethoxy, Hydroxyäthoxy, Hydroxy, Acetylamino, Ureido, oder Sulfo sind,
- R₁: Wasserstoff, Methyl oder Aethyl,
- R₂: Wasserstoff, Methyl oder Aethyl,
- R₃: Wasserstoff, Benzoyl, Aminobenzoyl oder -COCH₂CH₃,
- R₄: -CONH₂ oder -CH₂SO₃H,
- R₅: Methyl oder Carboxy. 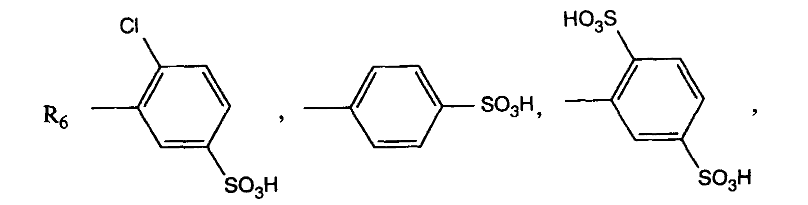 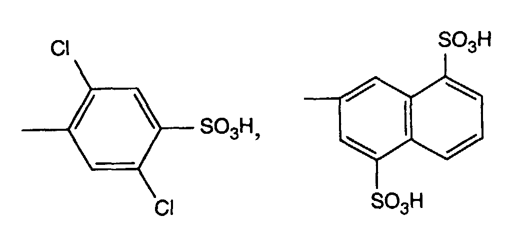
und Z β-Sulfatoäthyl ist.

Besonders bevorzugt sind Verbindungen der zuvor angegebenen Formel (3), worin Z Vinylsulfonyl oder β-Sulfatoaethylsulfonyl bedeutet, (R)₀₋₃ für 0-3, vorzugsweise 0-2 und insbesondere bevorzugt 1 oder 2 gleiche oder verschiedene Substituenten aus der Gruppe Methyl, Aethyl, Methoxy, Aethoxy, Hydroxyäthoxy, Hydroxy, Acetylamino, Ureido und Sulfo steht, und K₂ ein Rest der Formel 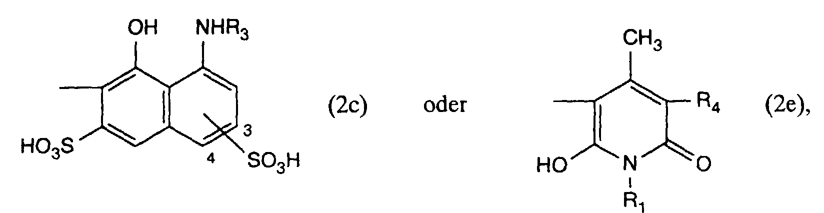 worin R₁ Methyl oder Ethyl, R₃ Acetyl oder Benzoyl und R₄ -CONH₂ oder -CH₂SO₃H bedeuten, ist.

Ebenso hervorzuheben sind Monoazo-bis-reaktive Farbstoffe der Formel 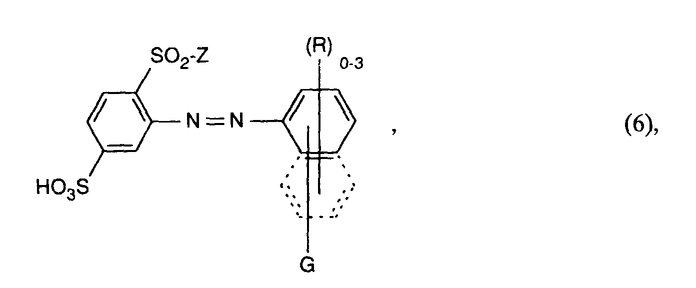 worin Z und (R)₀₋₃ die unter der Formel (2) angegebene Bedeutung haben und G ein Rest -NHCOCBr=CH₂ oder -NHCOCHBr-CH₂Br, ein Rest -SO₂Z, worin Z die zuvor angegebene Bedeutung hat oder ein Rest der Formel 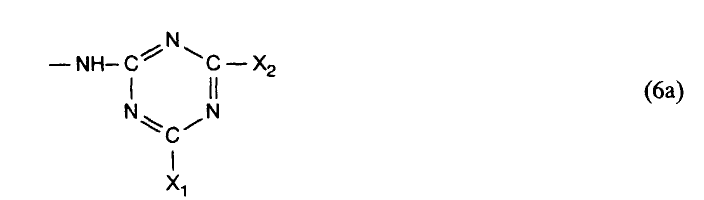 ist, worin X₁ Halogen und X₂ Halogen, Carboxy, Sulfo, Hydroxy, C₁-C₄-Alkoxy, Amino, N-Mono- oder N,N-Dimethylamino, N-Mono- oder N,N-Diaethylamino, N-Methyl- oder N-Aethyl-N-phenylamino, Morpholino, unsubstituiertes oder durch Methyl, Methoxy, Chlor oder Sulfo substituiertes Phenylamino, oder ein Rest der Formel

-NH-(CH₂)₂₋₃-SO₂Z,

-NH-(CH₂)₂-O-(CH₂)₂-SO₂Z,

-NH-(CH₂)₂₋₃-NH-(CH₂)₂₋₃-SO₂Z,

-N[(CH₂)₂₋₃-SO₂Z]₂,

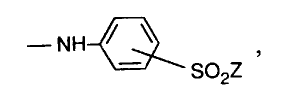

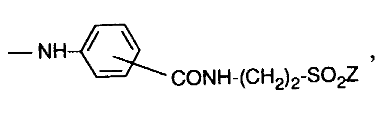

-NH-(CH₂)₂-O-(CH₂)₂-OH,

-NH-CH₂CH₂-OH

oder

-NH-CH₂CH₂SO₃H

ist, worin Z jeweils die unter der Formel (2) angegebene Bedeutung hat.

Hervorzuheben sind weiter Farbstoffe der Formel 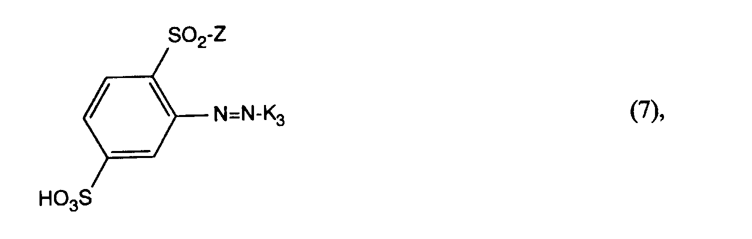 worin K₃ den Rest von
1-Amino-8-hydroxynaphthalin-3,6-disulfosäure,
1-Amino-8-hydroxynaphthalin-4,6-disulfosäure oder
3-Amino-8-hydroxynaphthalin-6-sulfosäure,
worin die jeweilige Aminogruppe mit Benzoyl, halogenierten Acylgruppen oder einem gegebenenfalls substituierten Triazin gemäss Formel (6a) substituiert ist und Z die unter der Formel (2) angegebene Bedeutung hat,
oder den Rest von 2-Aminonaphthalin, welches in 5- oder 6-Stellung durch einen Rest -SO₂Z, worin Z die zuvor angegebene Bedeutung hat, substituiert ist, bedeutet.

Besonders bevorzugt sind Verbindungen der Formel (7), worin Z Vinyl oder β-Sulfatoaethyl bedeutet und K₃ 2-Amino-6-vinyl- oder 2-Amino-6-β-Sulfatoaethylsulfonyl-1-naphthyl ist.

Besonders hervorzuheben sind Farbstoffe der Formel 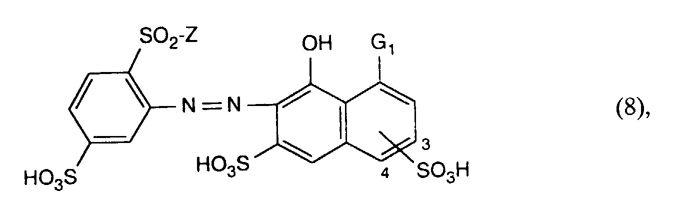 worin die zweite Sulfogruppe im Naphthalinrest entweder in Stellung 3 oder 4 ist,
G₁ ein Rest der Formel

-NHCOCHBr - CH₂Br (8a),

-NHCOCBr = CH₂ (8b),

-NHCOCH₂Cl (8c),

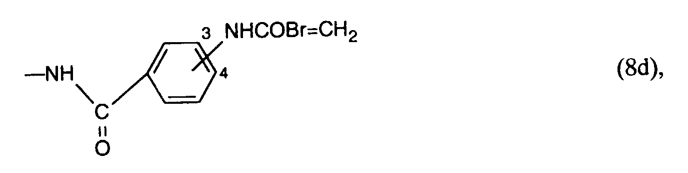

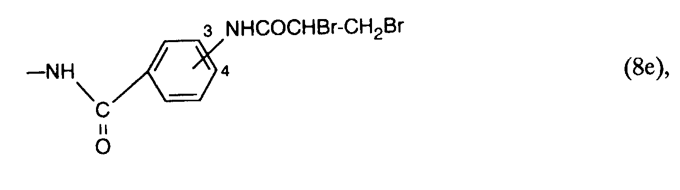

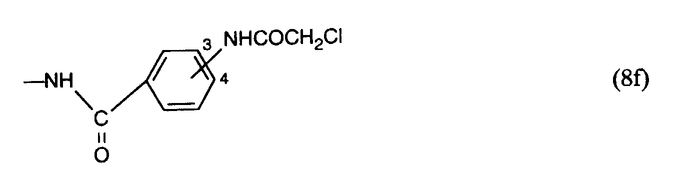

oder ein Rest der Formel (6a) ist wobei die Reste der Formeln (8a), (8b) und (8c) in den Formeln (8d), (8e) und (8f) entweder in Stellung 3 oder 4 sind, Z die in Formel (2) und X₁,
X₂ die in Formel (6a) angegebene Bedeutung haben,
sowie der Formel 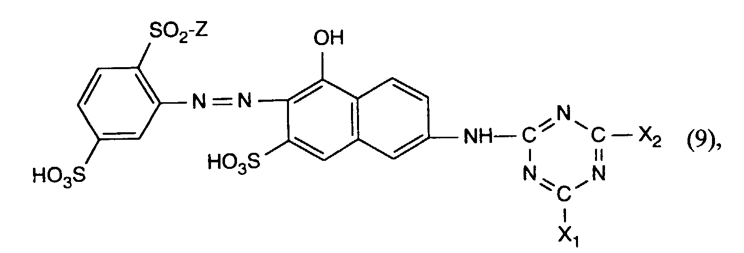 worin Z die in Formel (2) und X₁, X₂ die in Formel (6a) angegebene Bedeutung haben.

Ebenfalls hervorzuheben sind Farbstoffe der Formel 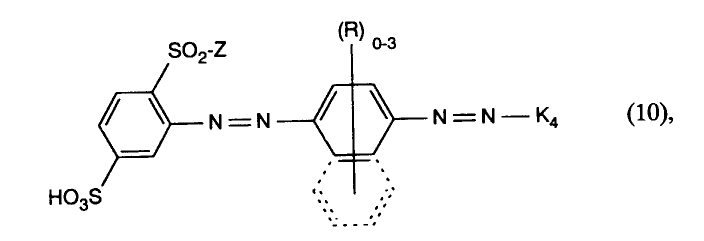 worin K₄ der Rest der Formel 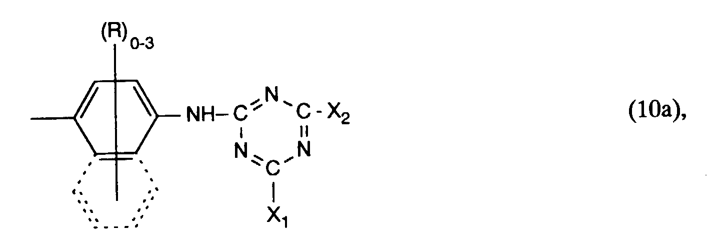 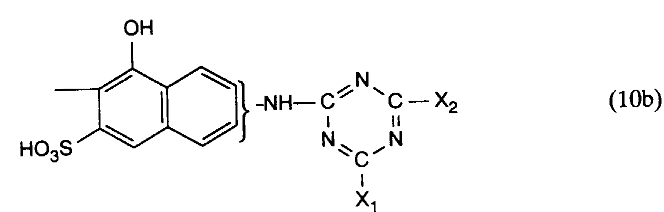 oder 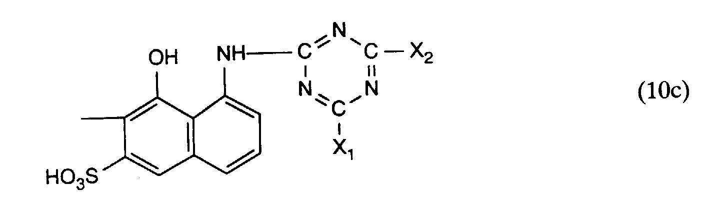 ist,
worin Z und (R)₀₋₃ die unter der Formel (2) und X₁, X₂ die unter der Formel (6a) angegebene Bedeutung haben.

Gegenstand dieser Erfindung sind weiterhin Disazo-bireaktive Farbstoffe der Formel 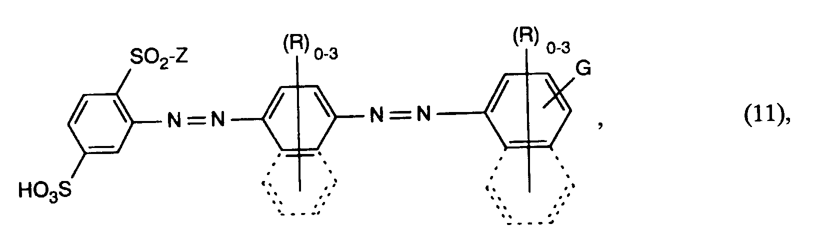 worin Z und (R)₀₋₃ die in Formel (2) und G die in Formel (6) angegebene Bedeutung haben,
sowie Reaktivfarbstoffe der Formel 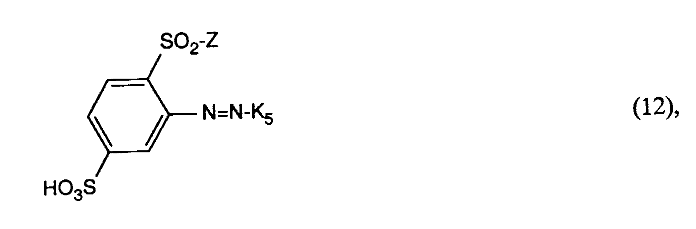 worin K₅ der Rest von
1 Amino-8-hydroxynaphthalin-3,6-disulfonsäure,
1-Amino-8-hydroxynaphthalin-3,5-disulfonsäure,
8-Amino-1-hydroxynaphthalin-3-(5,6)-disulfonsäure oder
8-Amino-1-hydroxynaphthalin-4,6-disulfonsäure
ist, der mit einem weiteren Rest der Formel 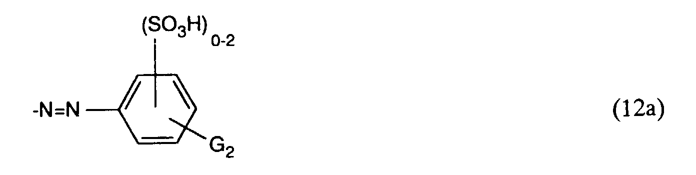 gekuppelt ist, worin G₂ ein Rest der Formel

-SO₂-Z (12b),

-SO₂-CH₂CH=CH₂ (12c),

-NH-COCBr=CH₂ (8b),

-CONH-(CH₂)₂-SO₂-Z (12d),

-CONH-(CH₂)₂-O-(CH₂)₂-SO₂-Z (12f),

-NHCOCH₂Cl (8c)

oder

-NHCOCHBr-CH₂Br (8a)

ist, worin Z die in der Formel (2) angegebene Bedeutung hat.

Das Verfahren zur Herstellung der Reaktivfarbstoffe ist dadurch gekennzeichnet, dass man Diazokomponenten der Formel 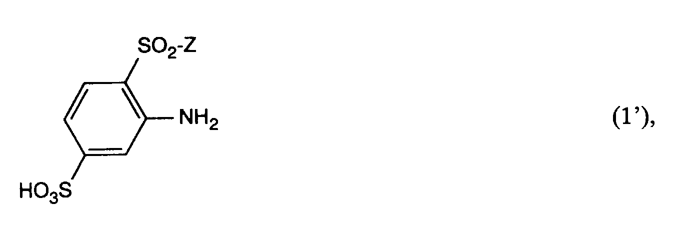 worin Z die unter der Formel (2) definierte Bedeutung hat, diazotiert und mit einer der Kupplungskomponenten kuppelt und gegebenenfalls eine weitere Umwandlungsreaktion anschliesst, z.B. das nach der Kupplung entstandene Zwischenprodukt wiederum diazotiert unt mit einer weiteren Kupplungskomponente kuppelt und gegebenenfalls weiter umsetzt, oder das Zwischenprodukt mit einer weiteren Diazokomponente kuppelt.

Im allgemeinen führt man die Umsetzung schrittweise nacheinander aus; dabei muss die Kupplung auf die Mittelkomponente in saurer Lösung, in ortho-Stellung zur NH₂ Gruppe, zuerst ausgeführt werden, da bei vorangehender Kupplung in neutraler oder alkalischer Lösung, in ortho-Stellung zur OH Gruppe, wie z.B. bei der Kupplungskomponente K₅ in der Formel (12) eine nachfolgende Kupplung in ortho-Amino-Stellung nicht mehr möglich ist.

Eine weitere Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion.

Ausserdem können Eliminierungsreaktionen an die Synthese angeschlossen werden. Beispielsweise kann man Reaktivfarbstoffe, welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Grundsätzlich lassen sich die Reaktivfarbstoffe der obigen Formeln in an sich bekannter Weise oder analog zu bekannten Verfahrensweisen herstellen, indem man von Vorprodukten oder Zwischenprodukten für Farbstoffe, die faserreaktive Reste enthalten, ausgeht, oder diese faserreaktive Reste in hierfür geeignete Zwischenprodukte mit Farbstoffcharakter einführt.

Die Reaktivfarbstoffe eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regerierte Cellulose. Die Reaktivfarbstoffe sind auch zum Färben oder Bedrucken von hydroxylgruppenhaltigen Fasern geeignet, die in Mischgeweben enthalten sind, z.B. von Gemischen aus Baumwolle mit Polyesterfasem oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit, Reibechtheit und insbesondere Chlorechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anderes vermerkt. Gewichtsteile stehen zu Volumenteilen im Verhältnis von Kilogramm zum Liter.

Die wichtigsten Verfahrensvarianten sind in den Ausführungsbeispielen dargestellt.

Beispiel 1: Eine Lösung von 21,7 g 2-β-Sulfatoäthylsulfonyl-5-sulfoanilin in 270 ml Wasser wurde mit 30 ml 5N-Salzsäure und 15 ml 3,33 N NaNO₂-Lösung bei 0 bis 5°C diazotiert und mit einer neutralen wässrigen Lösung von 14,2 g 1-(4-Sulfophenyl)3-carboxypyrazolon-5 versetzt. Durch Einstreuen von Natriumbicarbonat wurde ein pH-Wert von 5 bis 6 eingestellt. Nach beendeter Kupplung wurde der Farbstoff mit Kaliumchlorid ausgesalzen und unter vermindertem Druck schonend getrocknet. Er entspricht der Formel 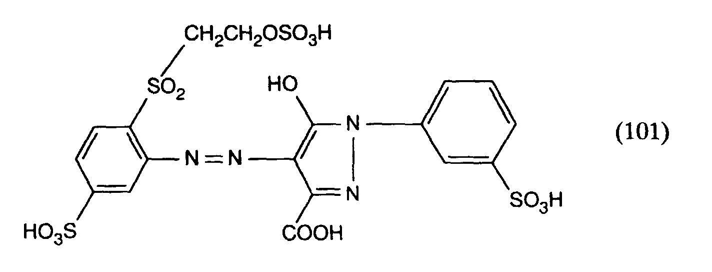 und färbt Baumwolle in lichtechten gelben Tönen.

Beispiel 2: 95 Teile Cyanurchlorid werden in bekannter Weise mit 1-Amino-8-hydroxy-naphthalin-3,6-disulfosäure in Wasser umgesetzt. Zu diesem Produkt wird eine frisch diazotierte äquivalente Lösung von 2-β-Sulfatoäthylsulfonyl-5-sulfoanilin gegeben und der pH-Wert auf 4 bis 4,5 eingestellt. Nach beendeter Kupplung wird 1 Teil 1-Amino-4-β-(β'-chloräthylsulfonyl)-äthylaminocarbonylbenzol-hydrochlorid zugegeben und bei pH 7 bis 7,5 und 35°C zur Reaktion gebracht. Nach Aussalzen mit KCI erhält man den Farbstoff der Formel 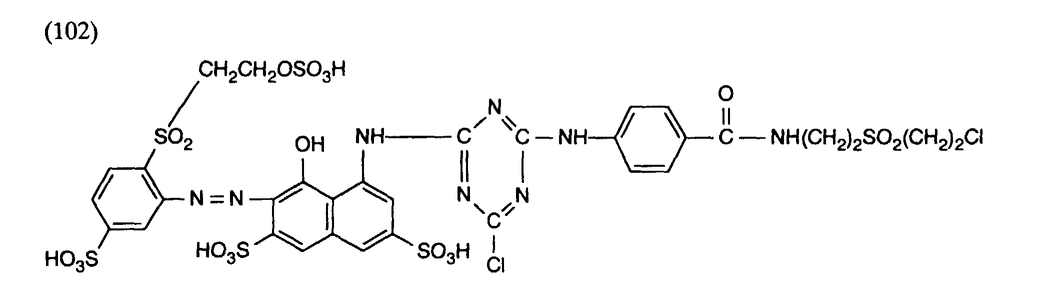 der Baumwolle in leuchtend roten, echten Tönen färbt.

Beispiel 3: 16 Teile 1-Amino-8-hydroxynaphthalin-3,6-disulfosäure werden in 400 Teilen Wasser neutral gelöst. Man stellt die Reaktionslösung auf einen pH-Wert von 4,5 und tropft bei 0 bis 3°C unter gutem Rühren 7,0 Teile Cyanurfluorid zu. Der dabei freiwerdende Fluorwasserstoff wird durch dosierte Zugabe von 2N-Natriumhydroxydlösung neutralisiert. Sobald keine freie 1-Amino-8-hydroxynaphthalin-3,6-disulfonsäure mehr nachweisbar ist, werden 17 Teile 1-Amino-3-β-(β'-chloräthylsulfonyl)-äthylaminocarbonylbenzol-hydrochlorid in 50 Teilen Wasser zugegeben. Man lässt die Temperatur auf 20 bis 25°C steigen und hält den pH-Wert der Reaktionslösung bei 4 bis 4,5. Nach beendeter Kondensation wird das Farbstoffzwischenprodukt bei 0 bis 10°C mit 18 Teilen diazotierter 2-β-Sulfatoäthylsulfonyl-5-sulfoanilin gekuppelt. Bei einem End-pH von 6,5 bis 7 wird der Farbstoff der Formel 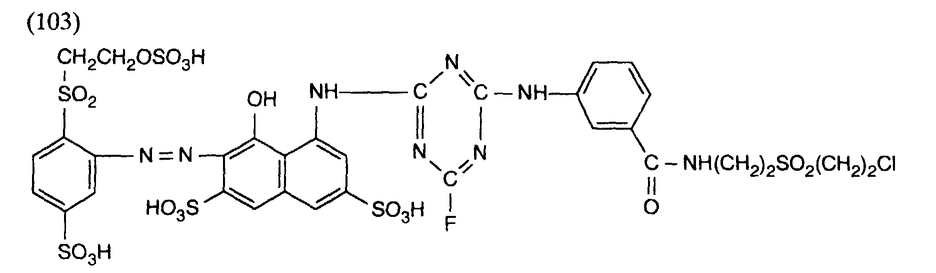 mit Natriumchlorid ausgesalzen, filtriert, gewaschen und im Vakuum getrocknet. Er stellt ein dunkelrotes Pulver dar und färbt Baumwolle und regenerierte Cellulose in blaustichigen Rottönen von guter Nass-, Reib- und Lichtechtheit.

Beispiel 4: Zu einer wässrigen, salzsauren Lösung des Diazoniumsalzes aus 37 Teilen 2-βSulfatoäthylsulfonyl-5-sulfoanilin führt man bei 0 bis 5°C eine wässrige Lösung von 22Teilen 1-Naphtylamino-6-sulfosäure zu und führt die Kupplung bei einem pH-Wert zwischen 2 und 3 durch. Das erhaltene Zwischenprodukt der Formel 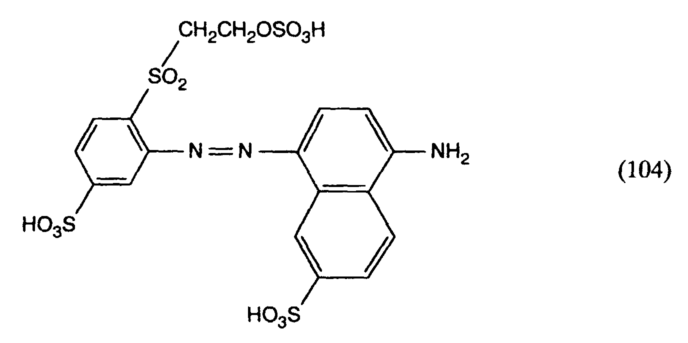 wird in üblicher Weise diazotiert und an 3-Acetylaminoanilin bei pH 5 bis 7 und Temperatur zwischen 0 und 10°C gekuppelt. Die so entstandene Verbindung der Formel 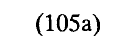 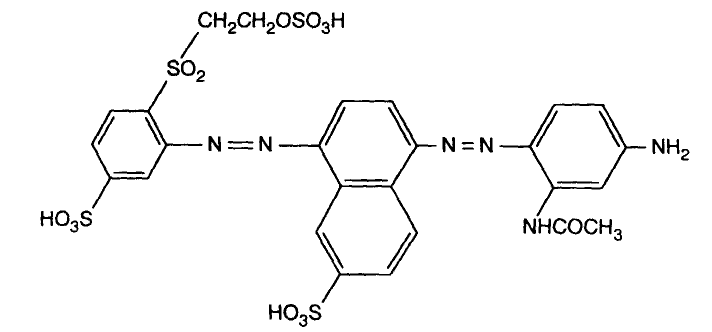 wird mit Dibrompropionylchlorid bei 0 bis 20°C und pH zwischen 5 und 8 kondensiert.

Der erhaltene Farbstoff der Formel 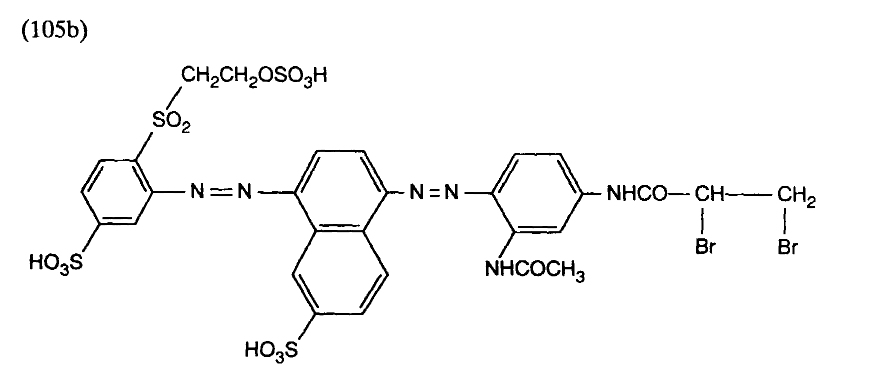 wird mit Kaliumchlorid ausgesalzen und schonend getrocknet. Er färbt Baumwolle in echten braunen Tönen.

Analog diesen Beispielen kann man weitere, in den folgenden Tabellen aufgeführte erfindungsgemässe Farbstoffe herstellen.

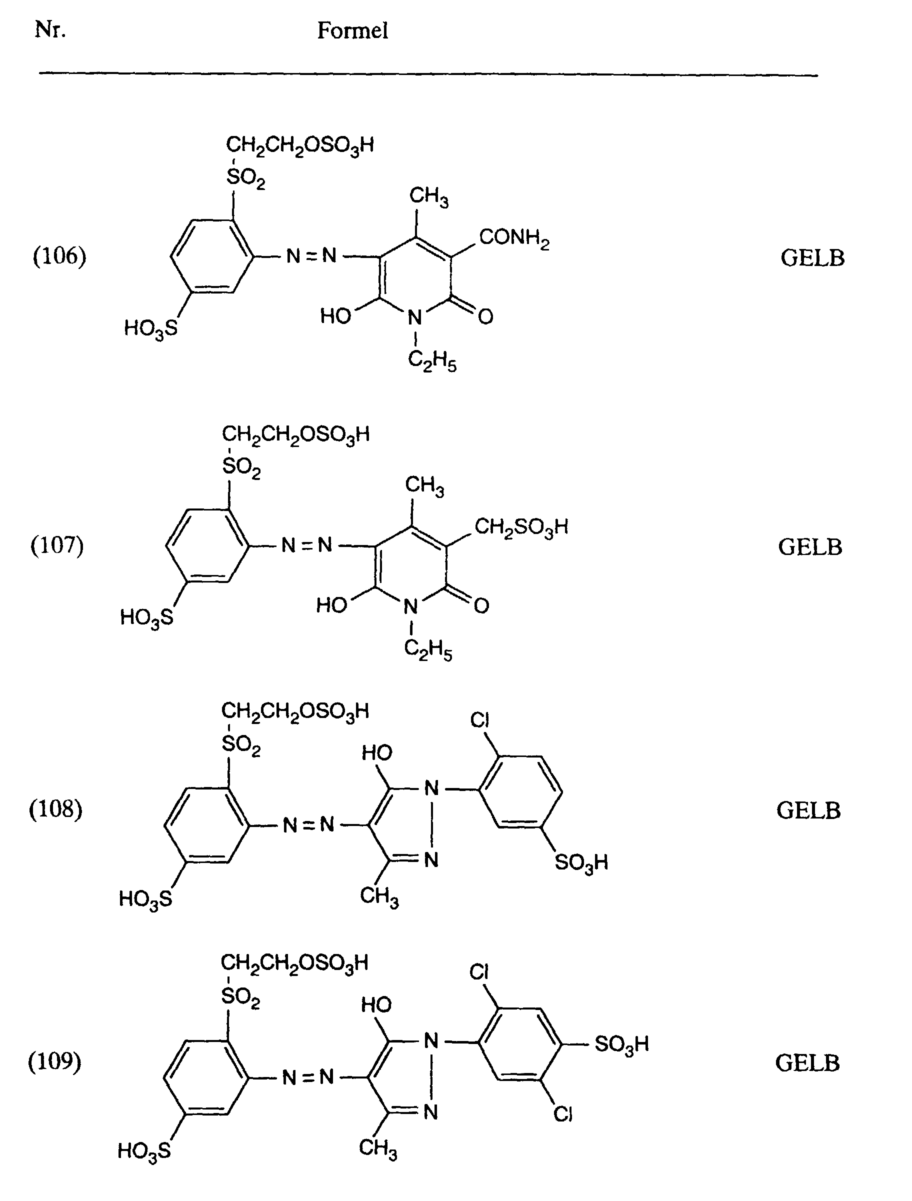

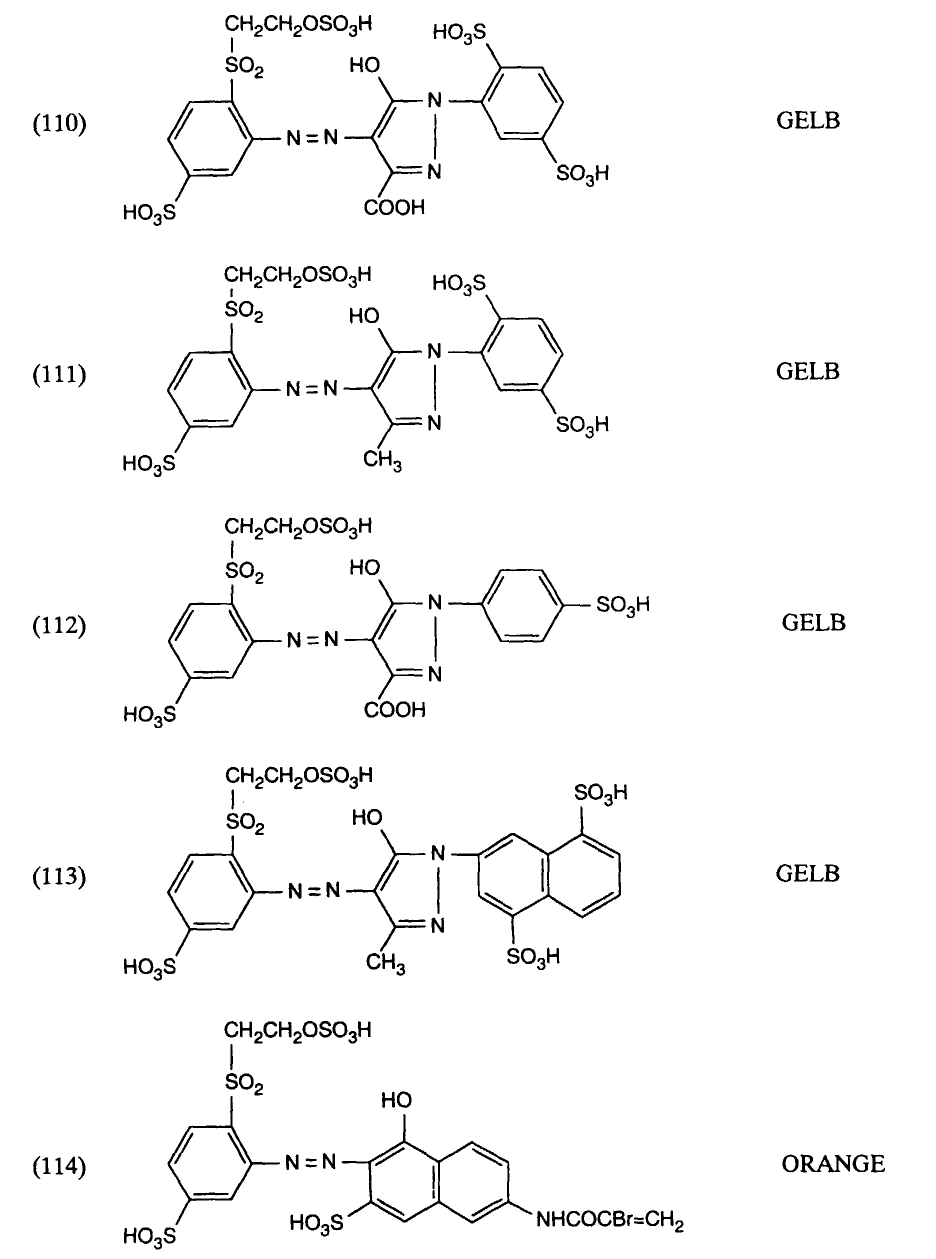

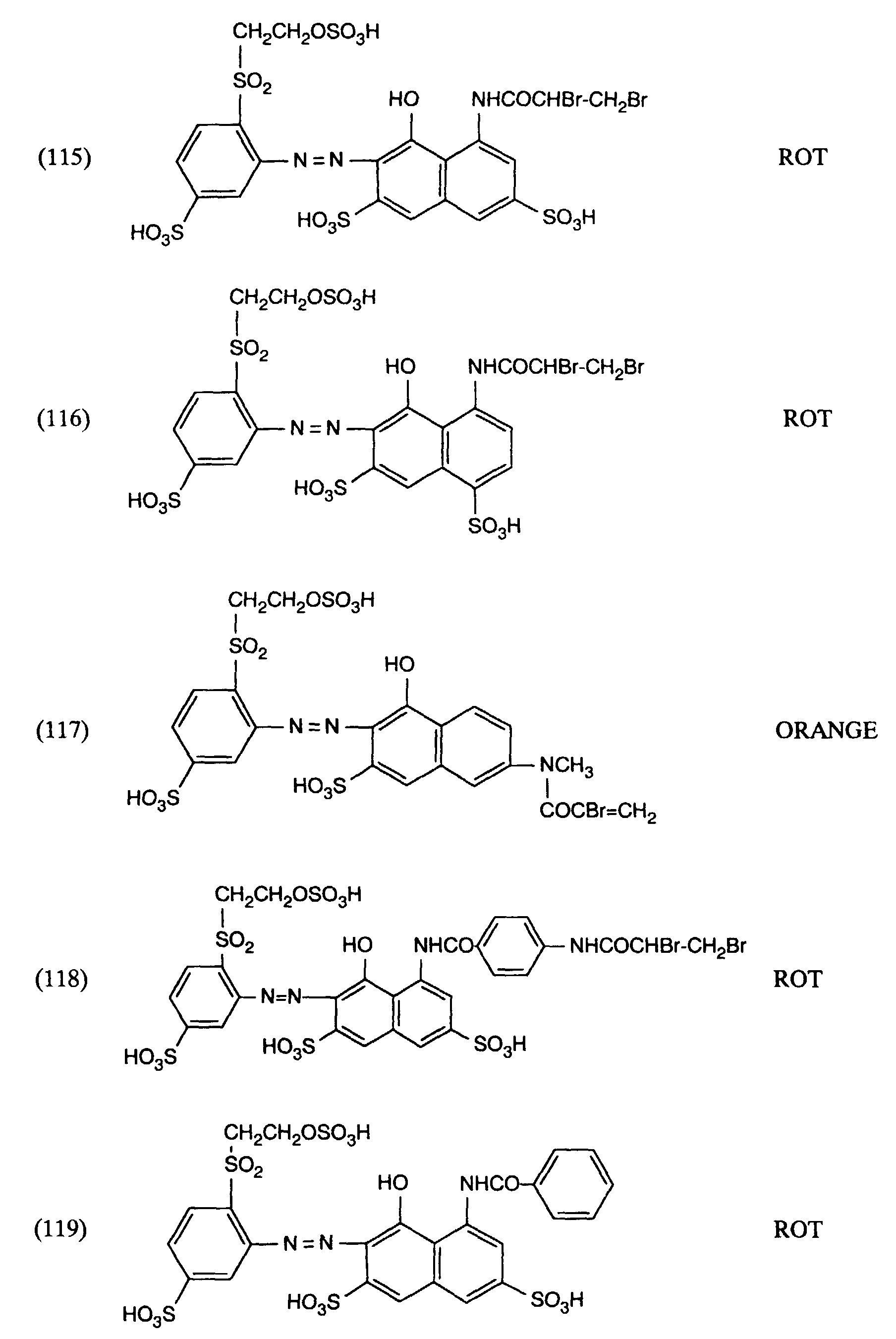

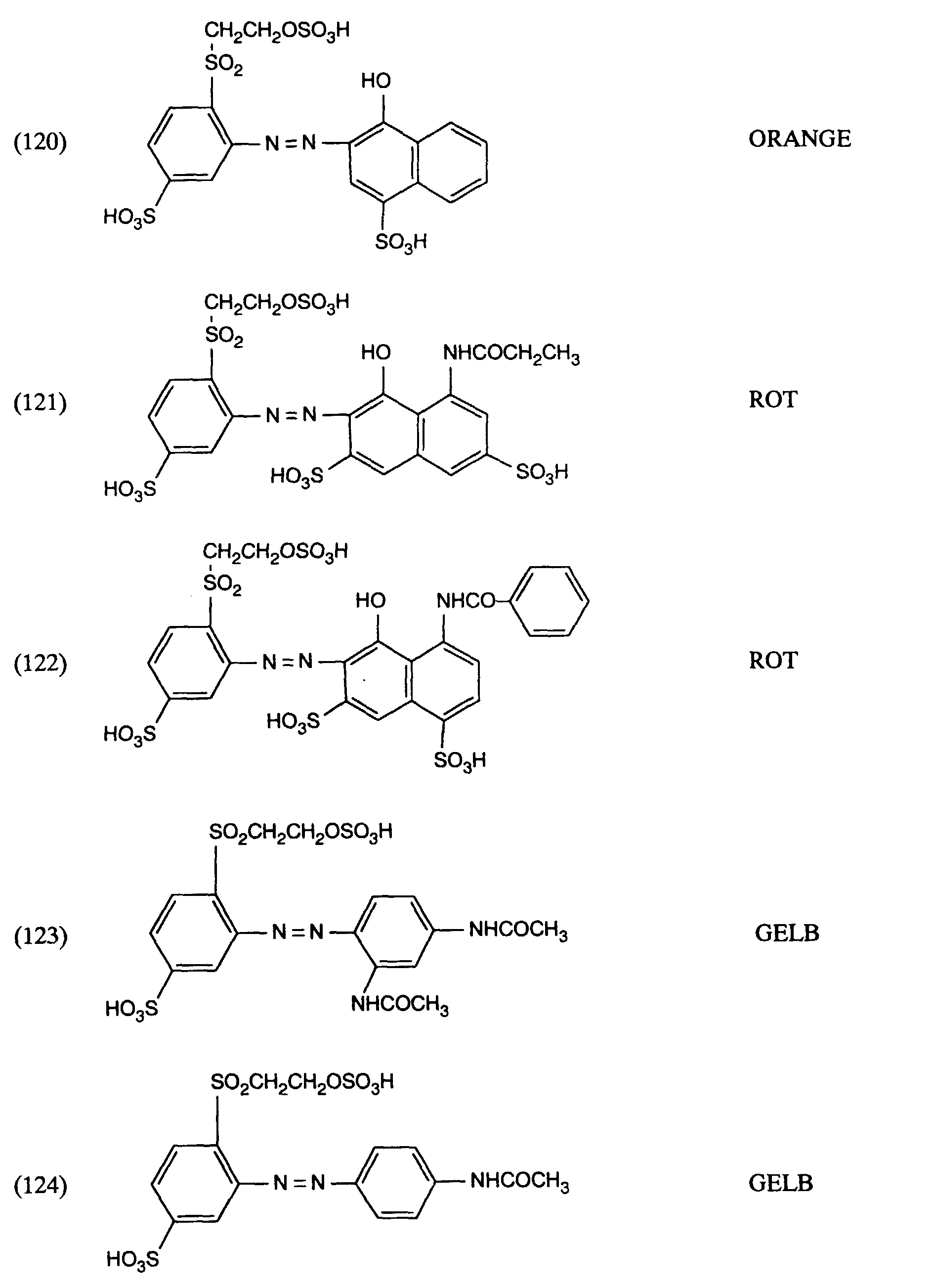

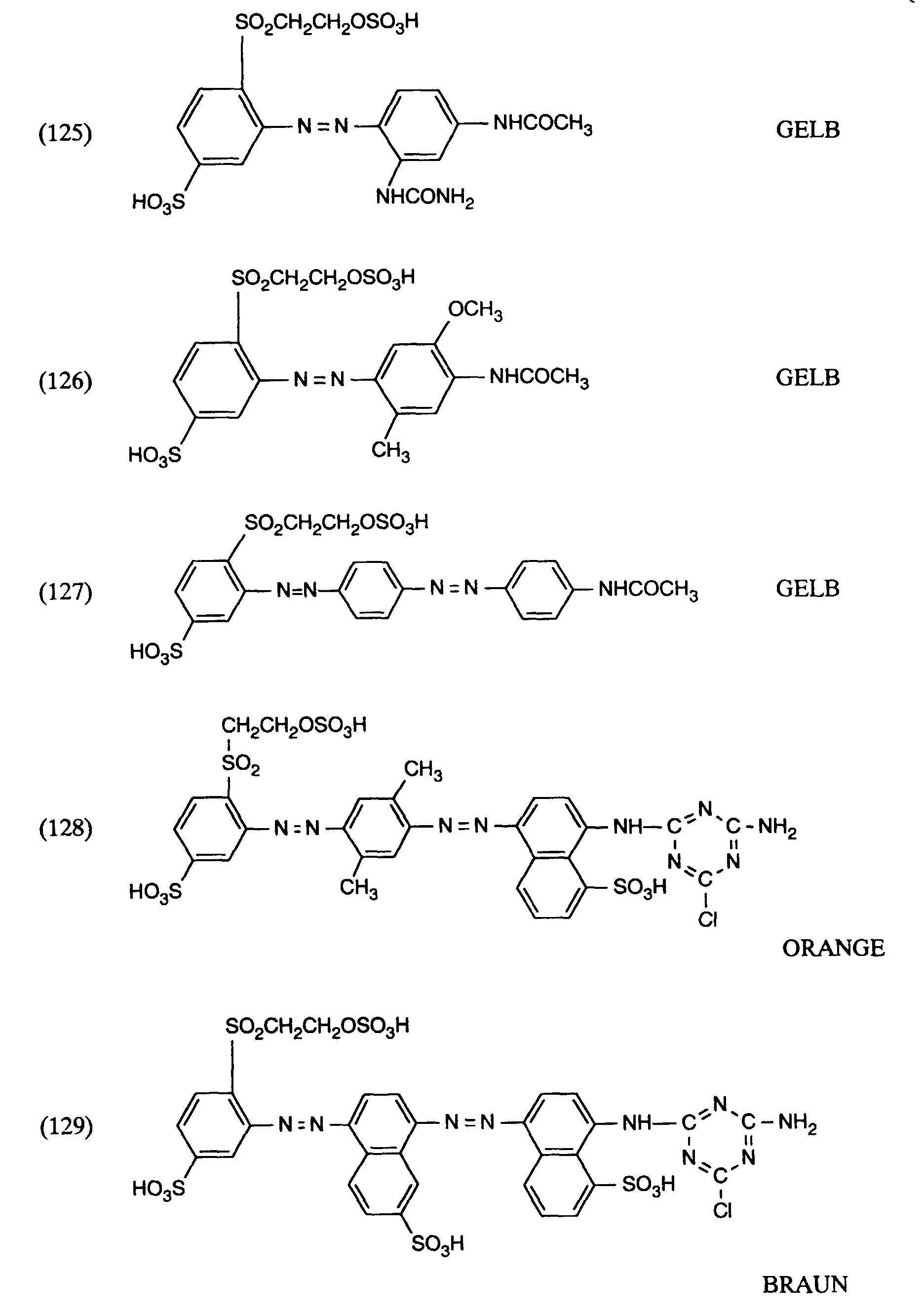

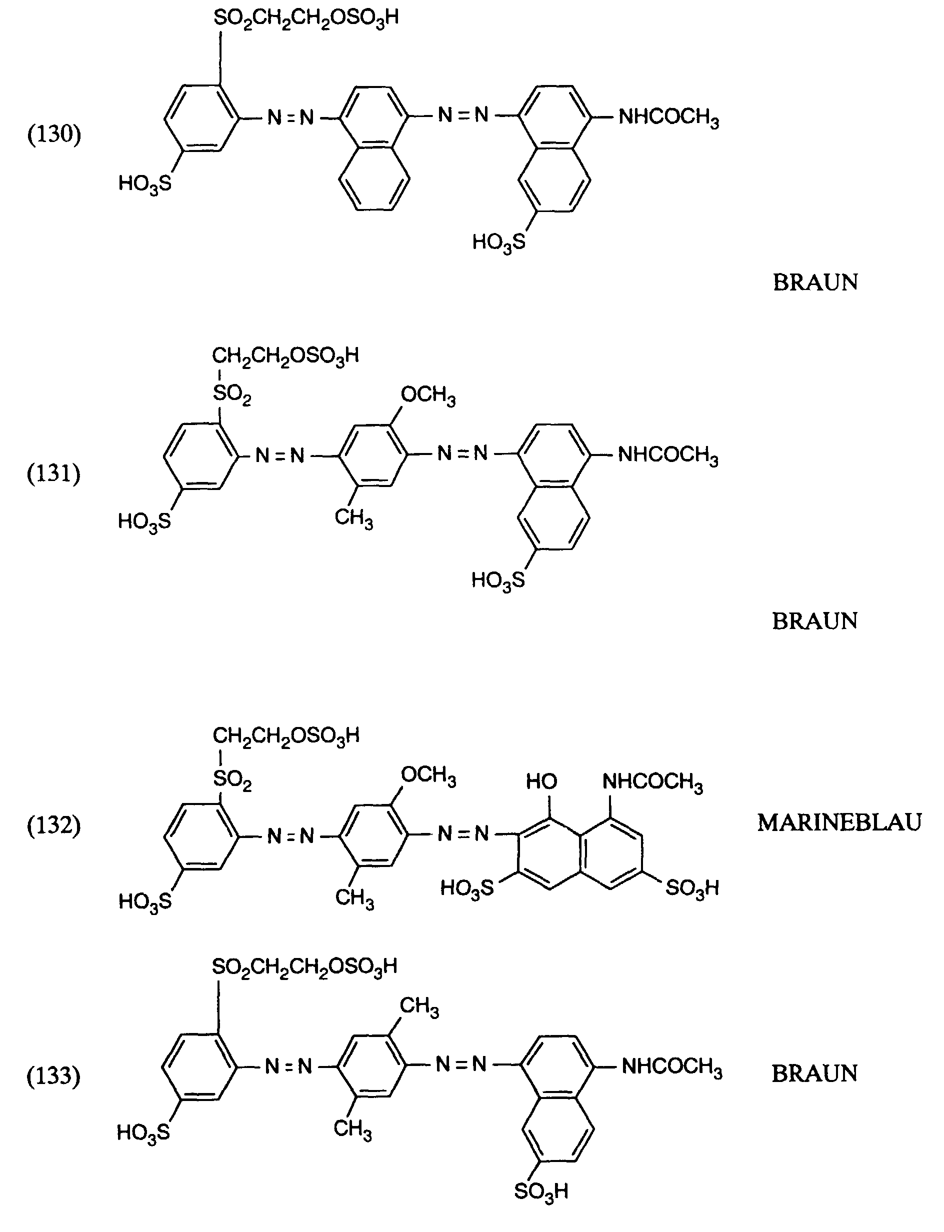

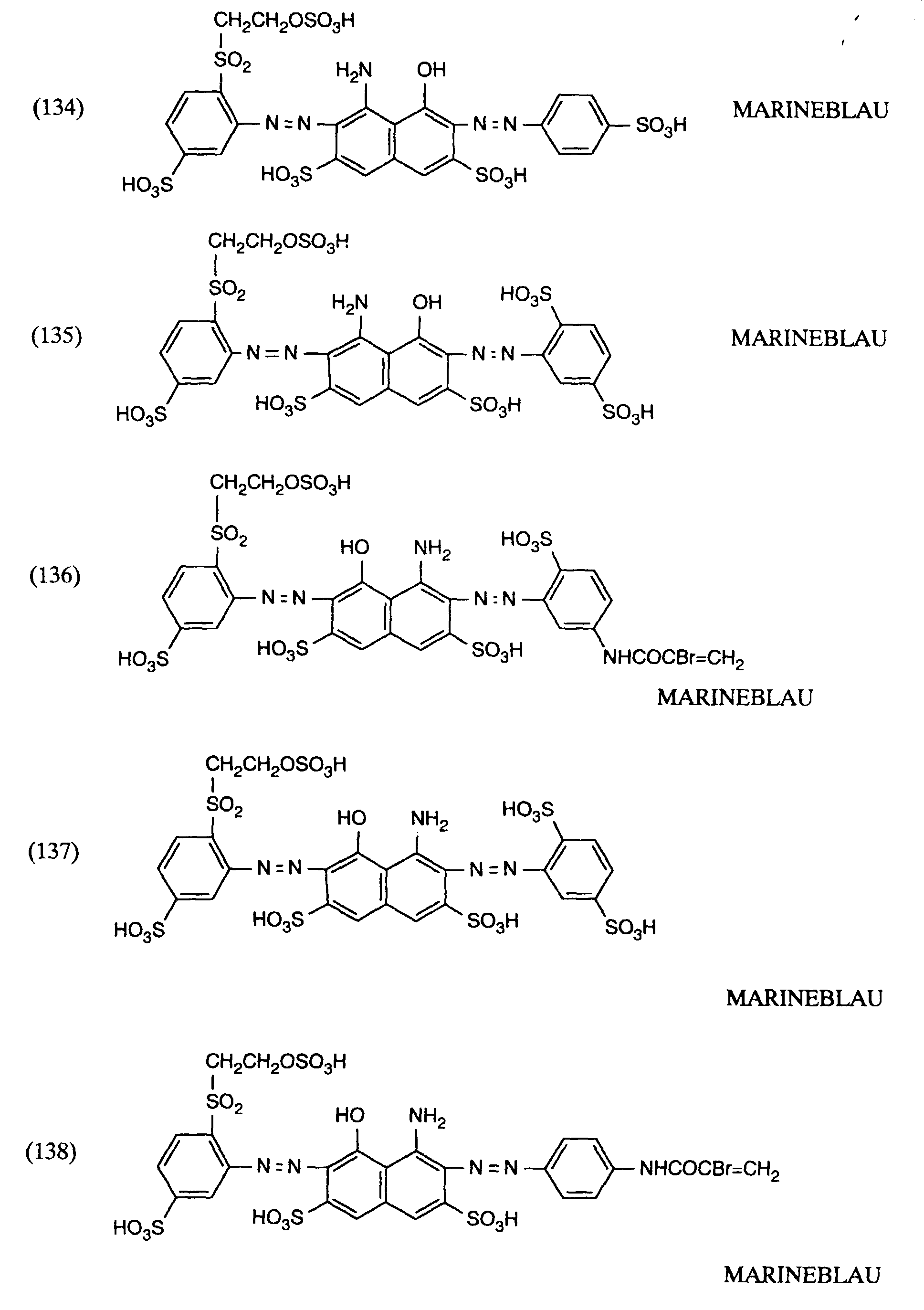

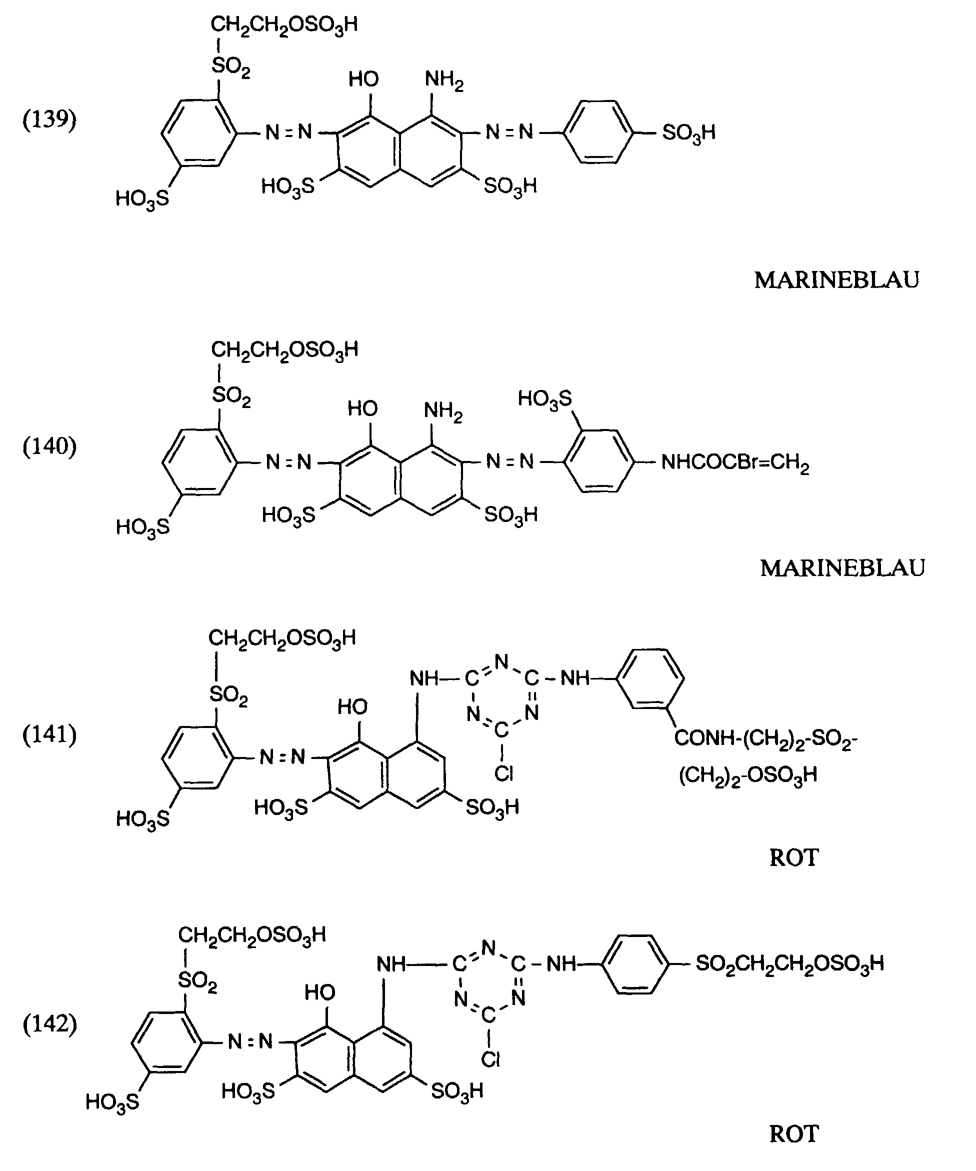

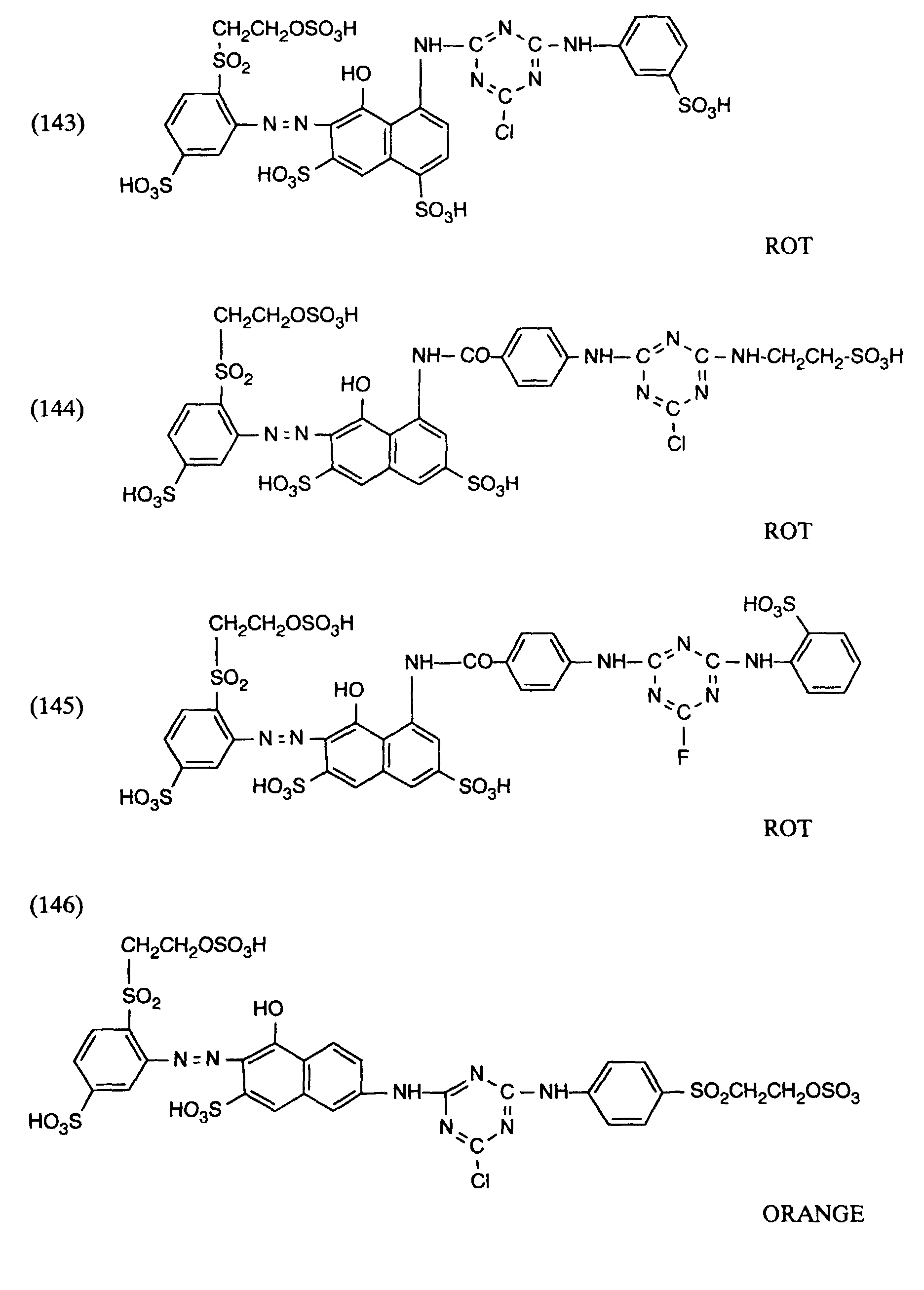

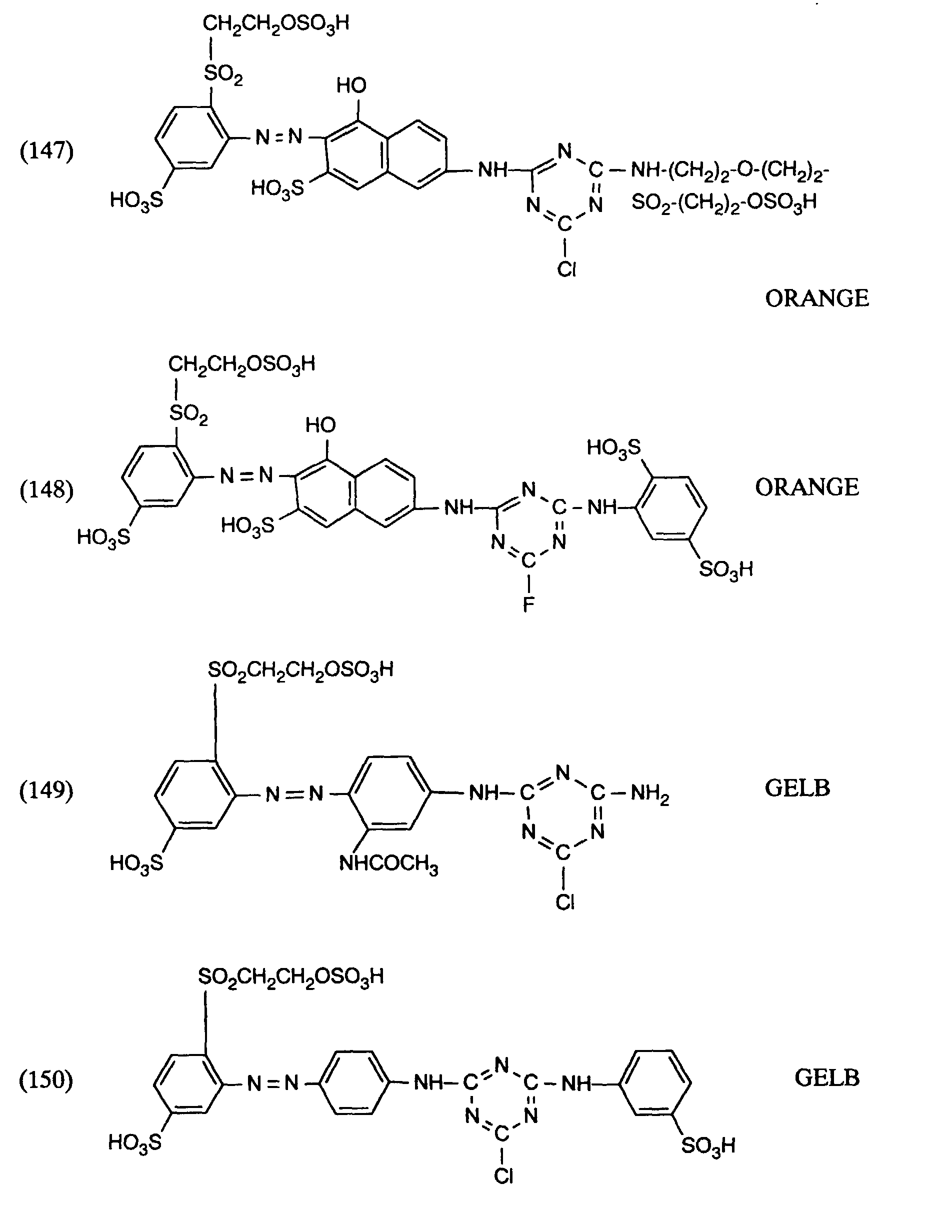

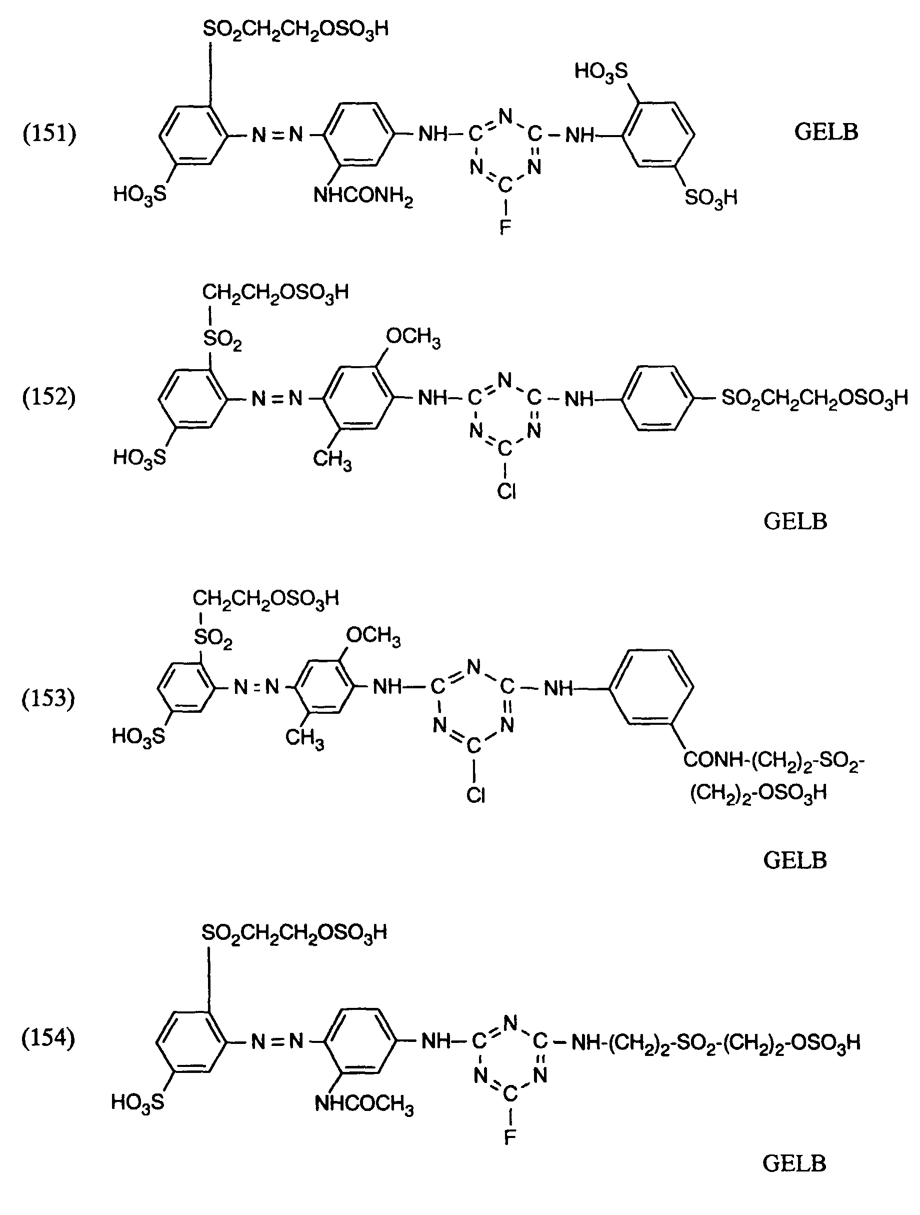

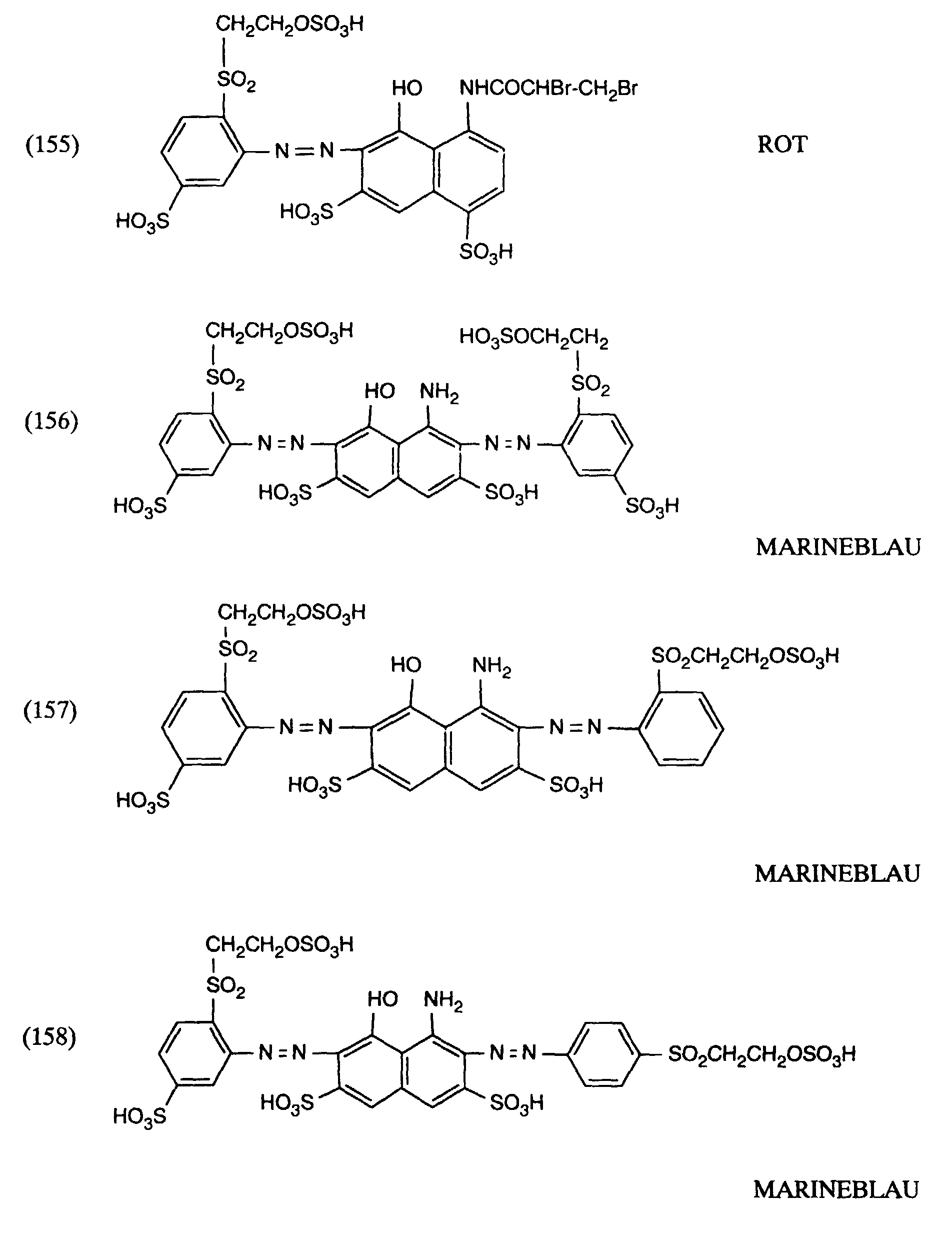

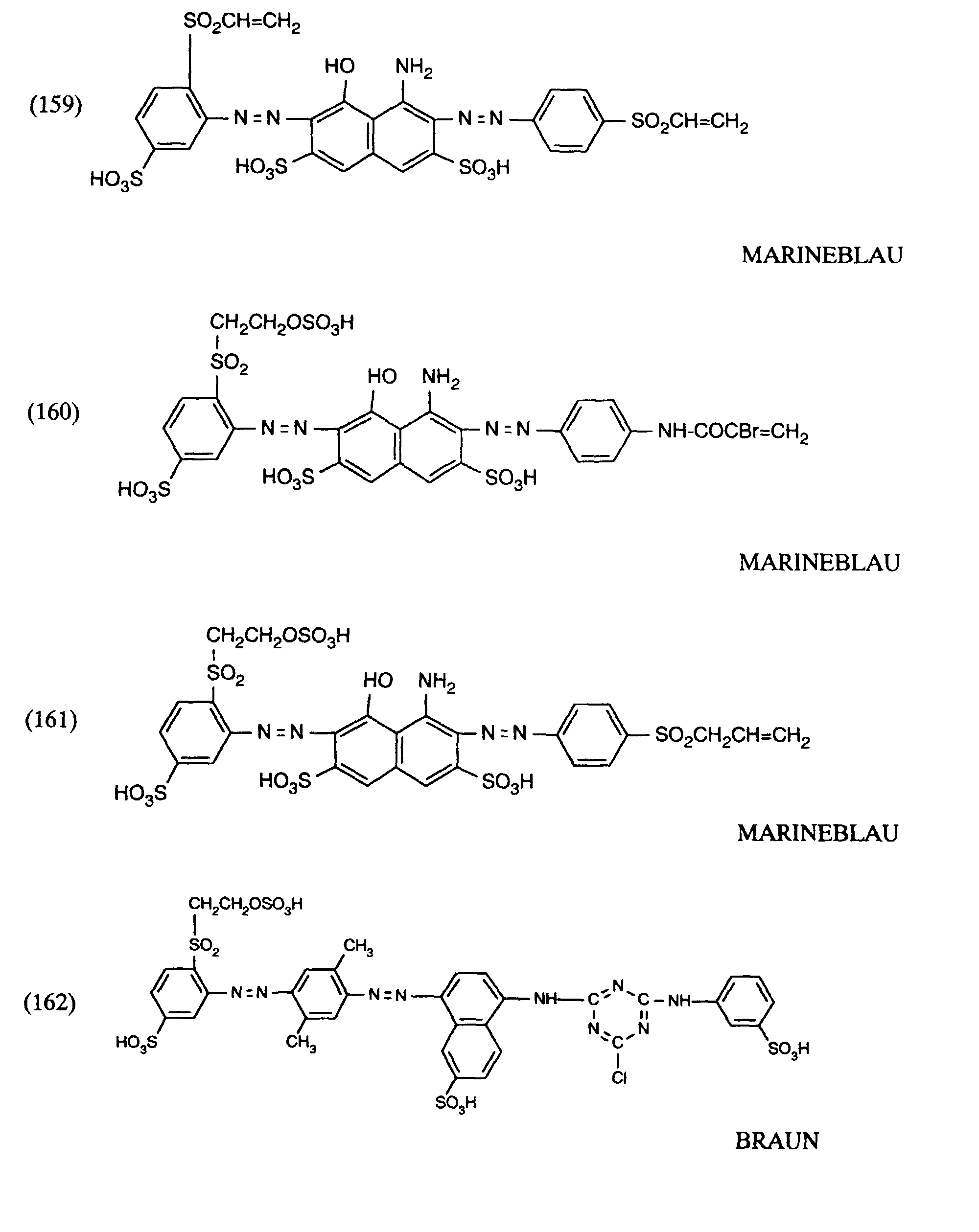

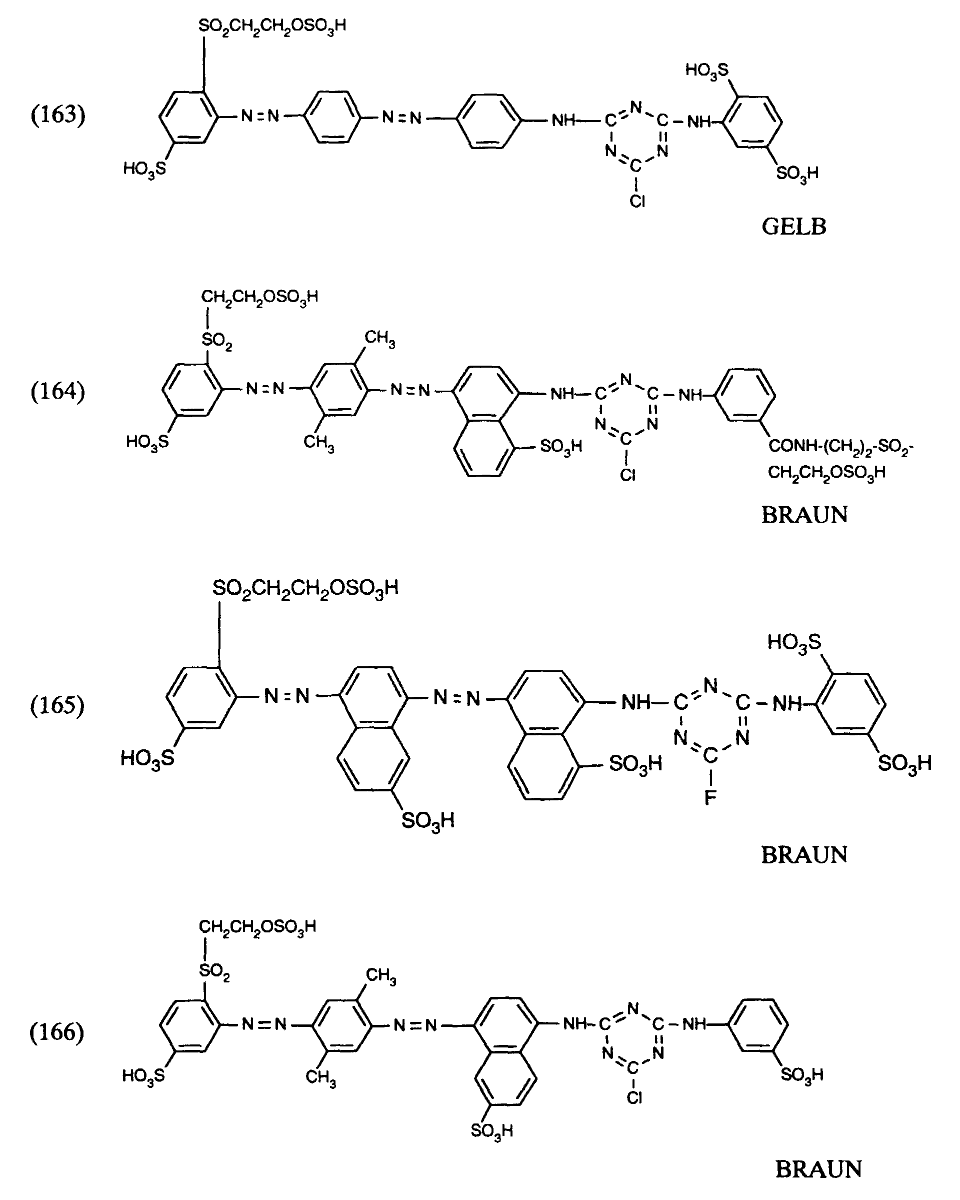

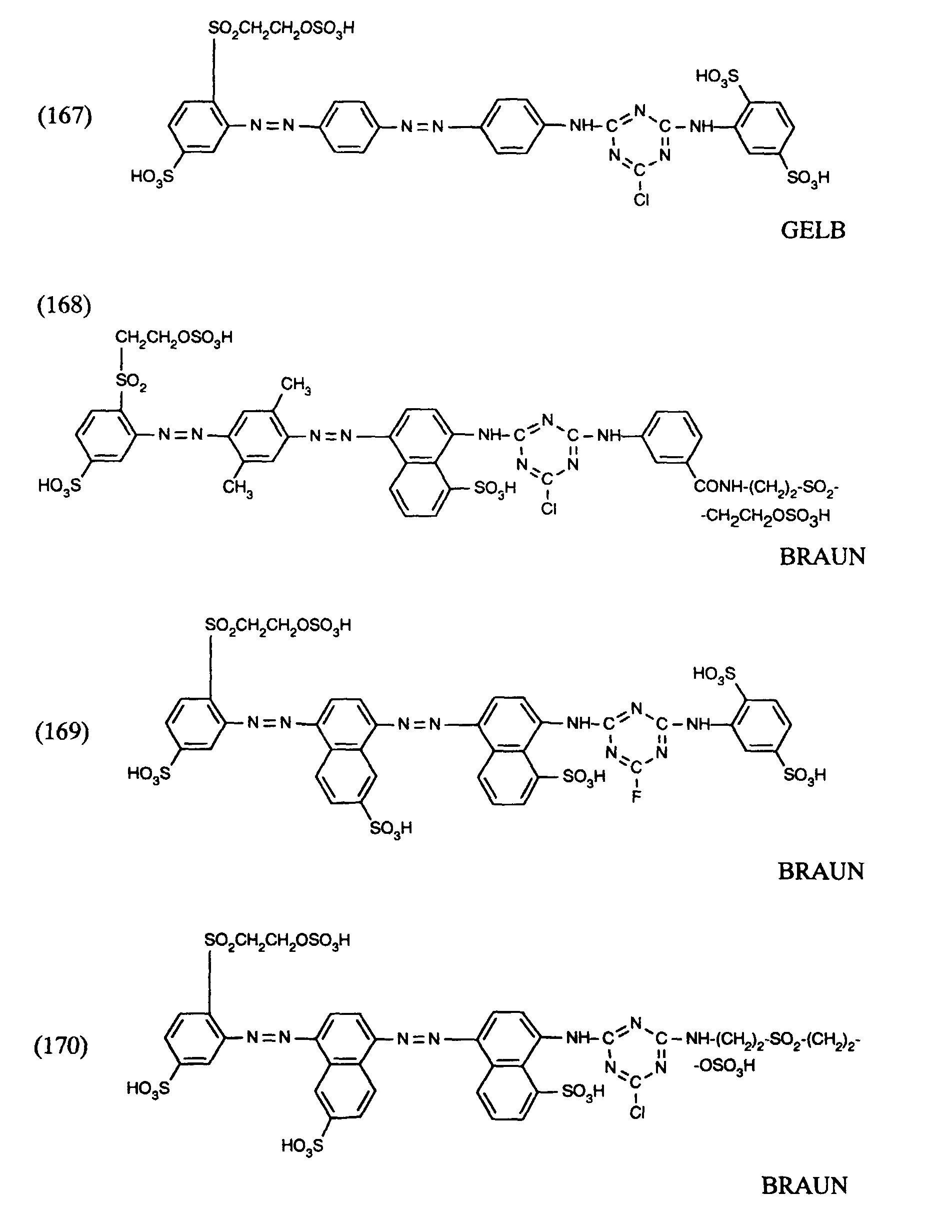

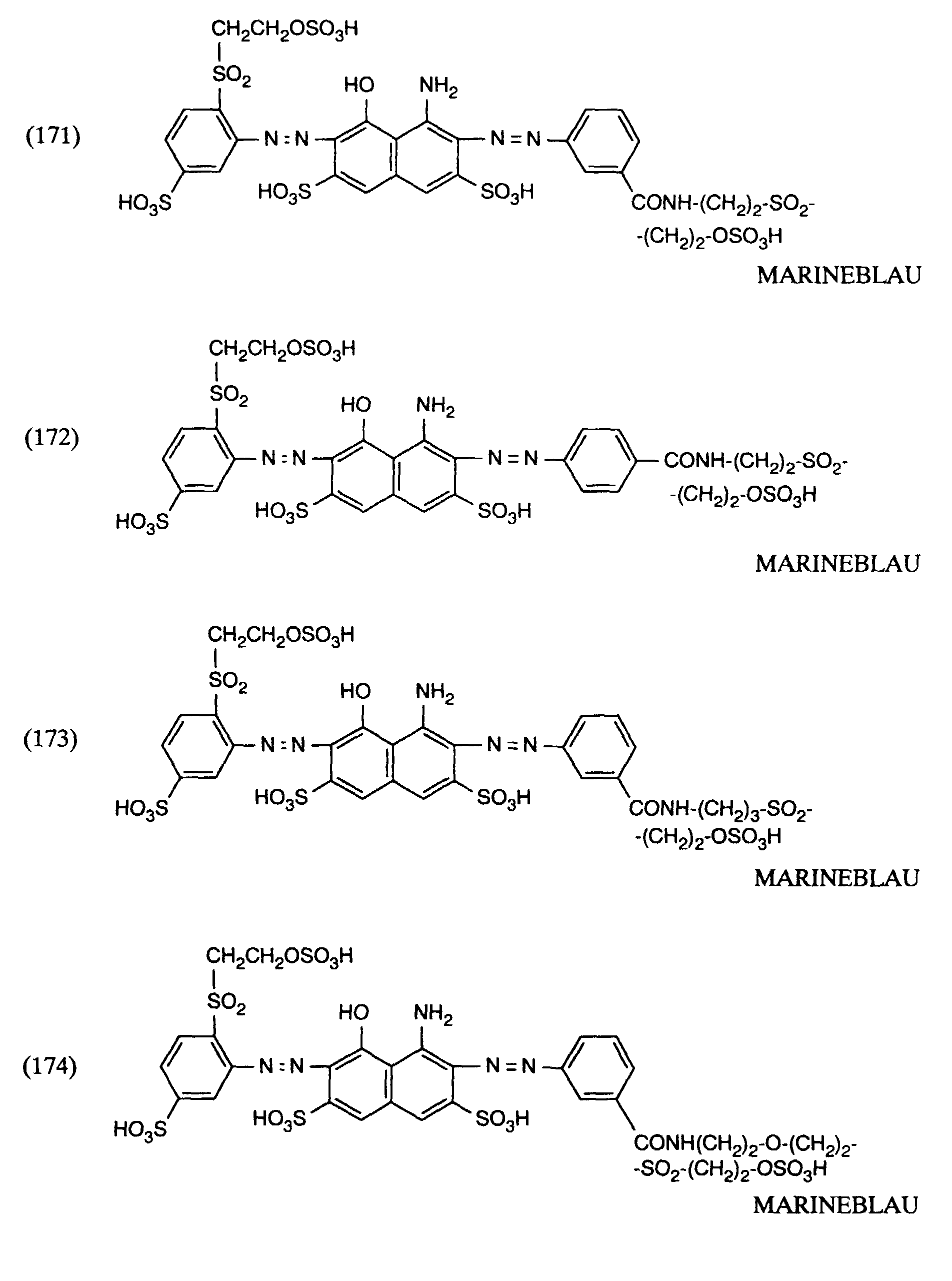

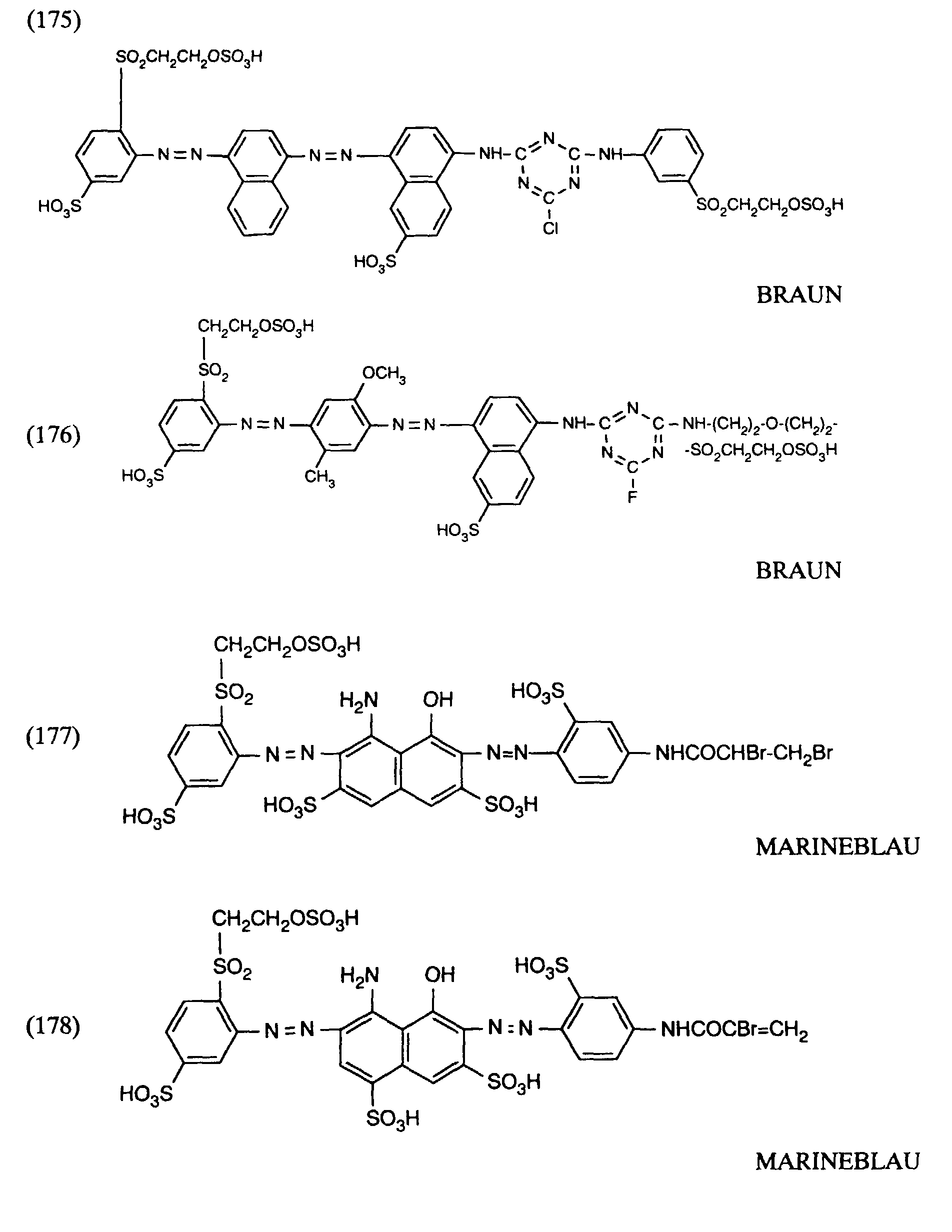

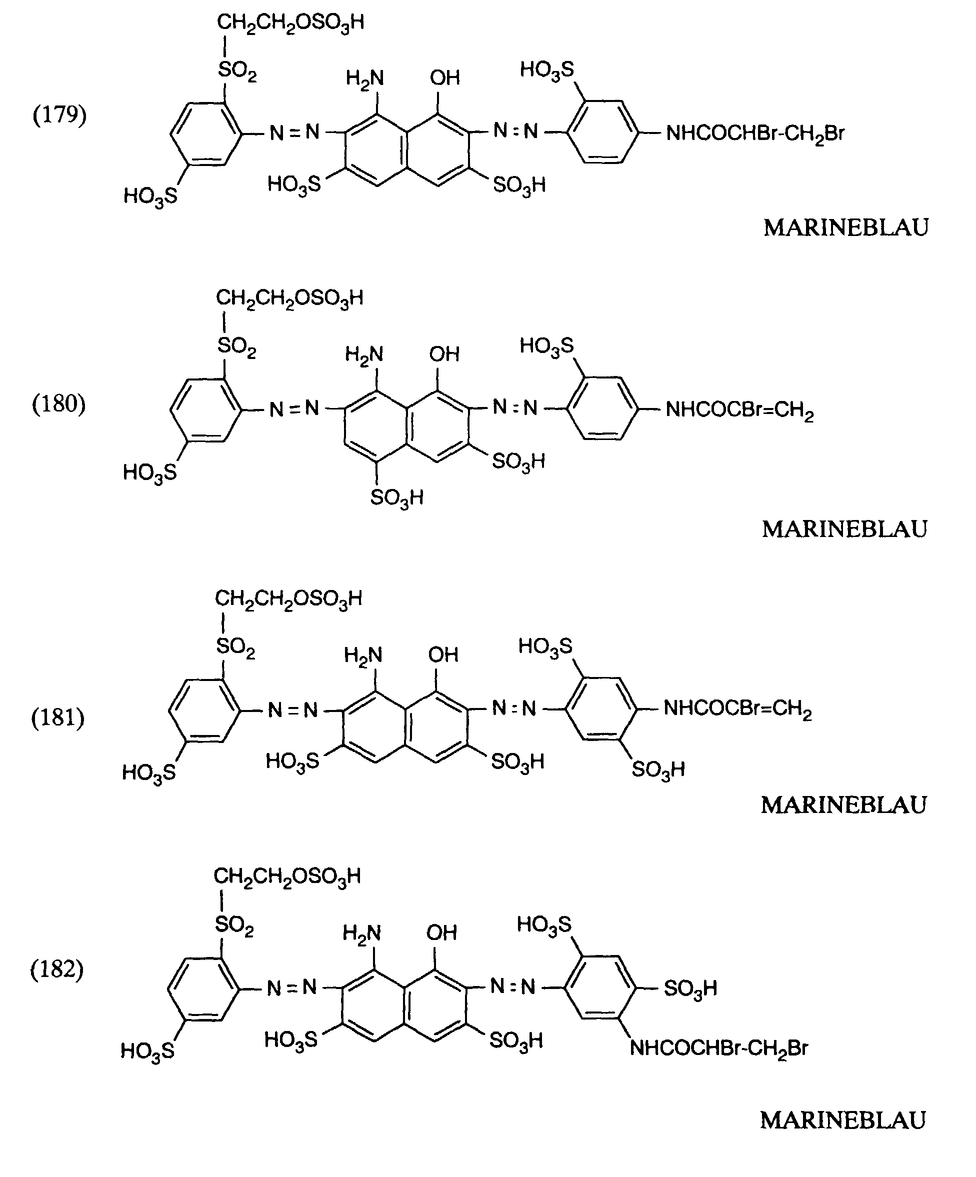

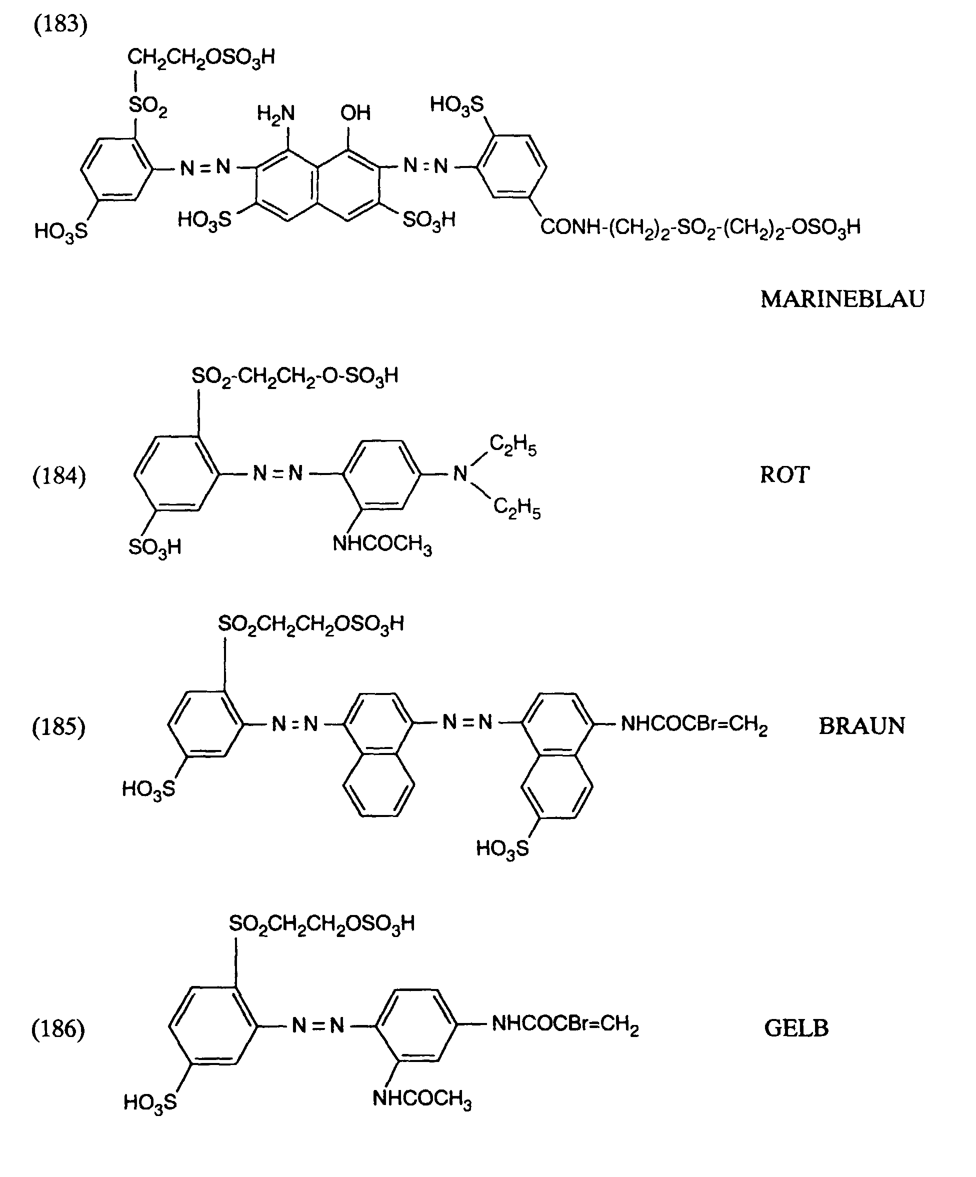

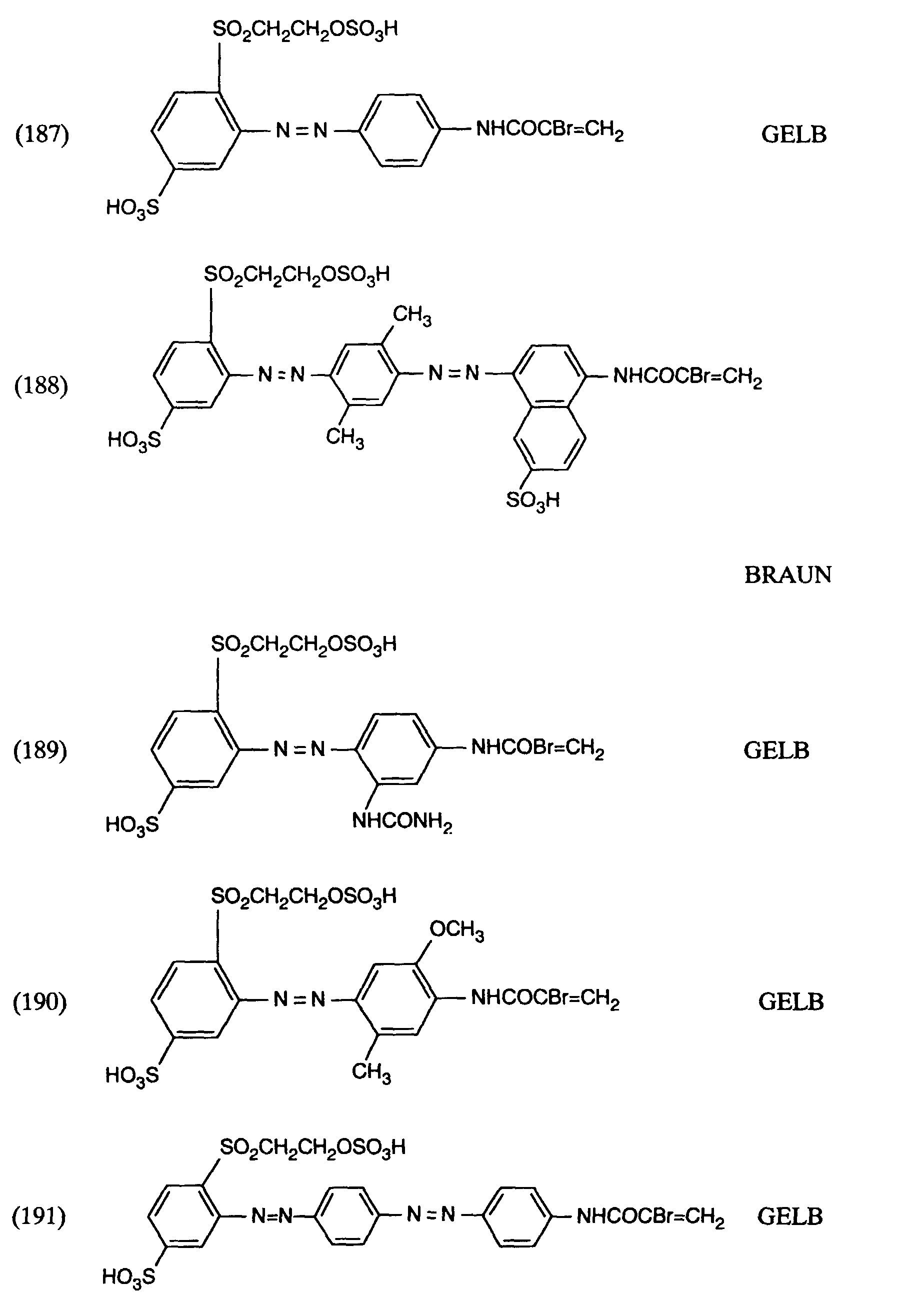

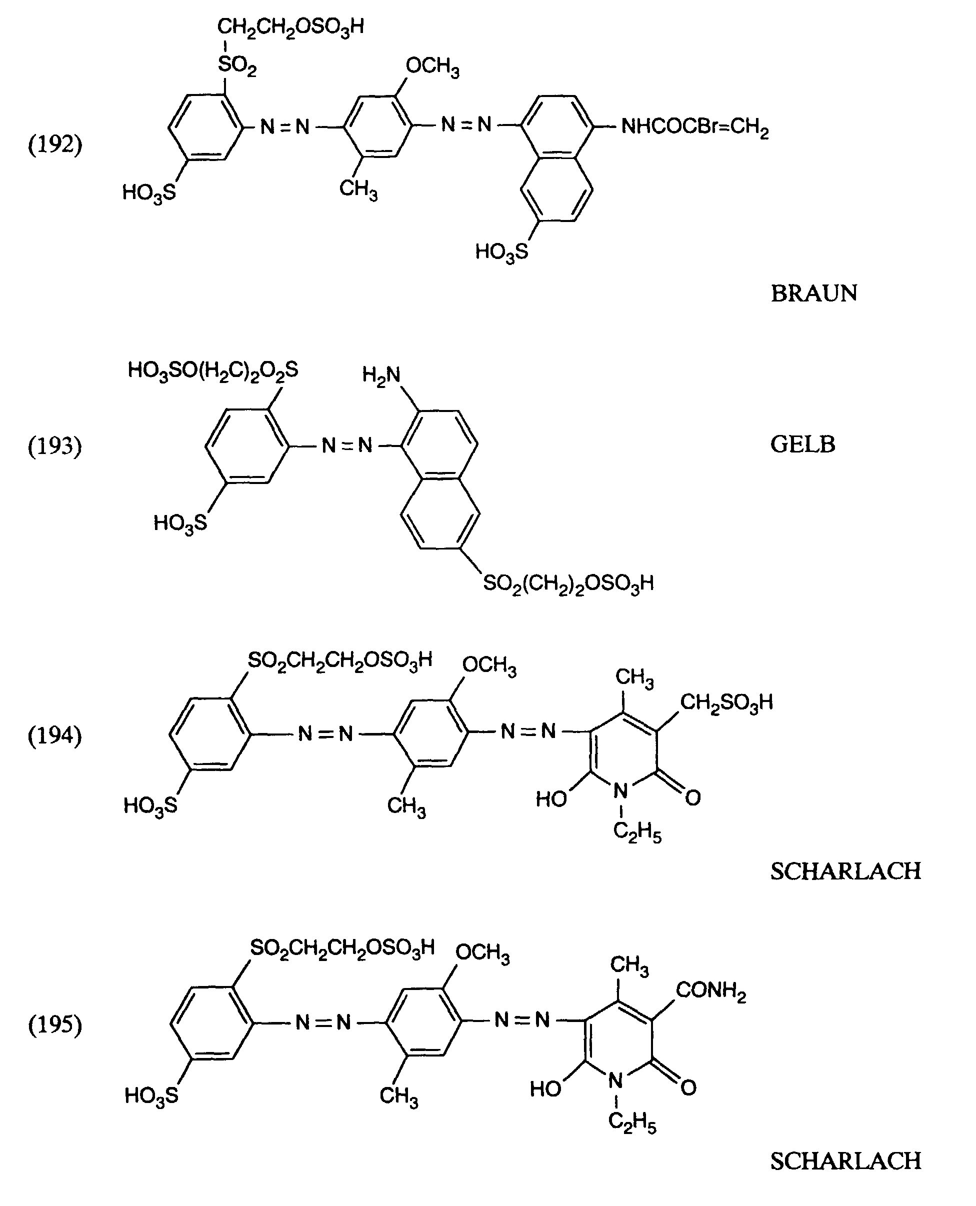

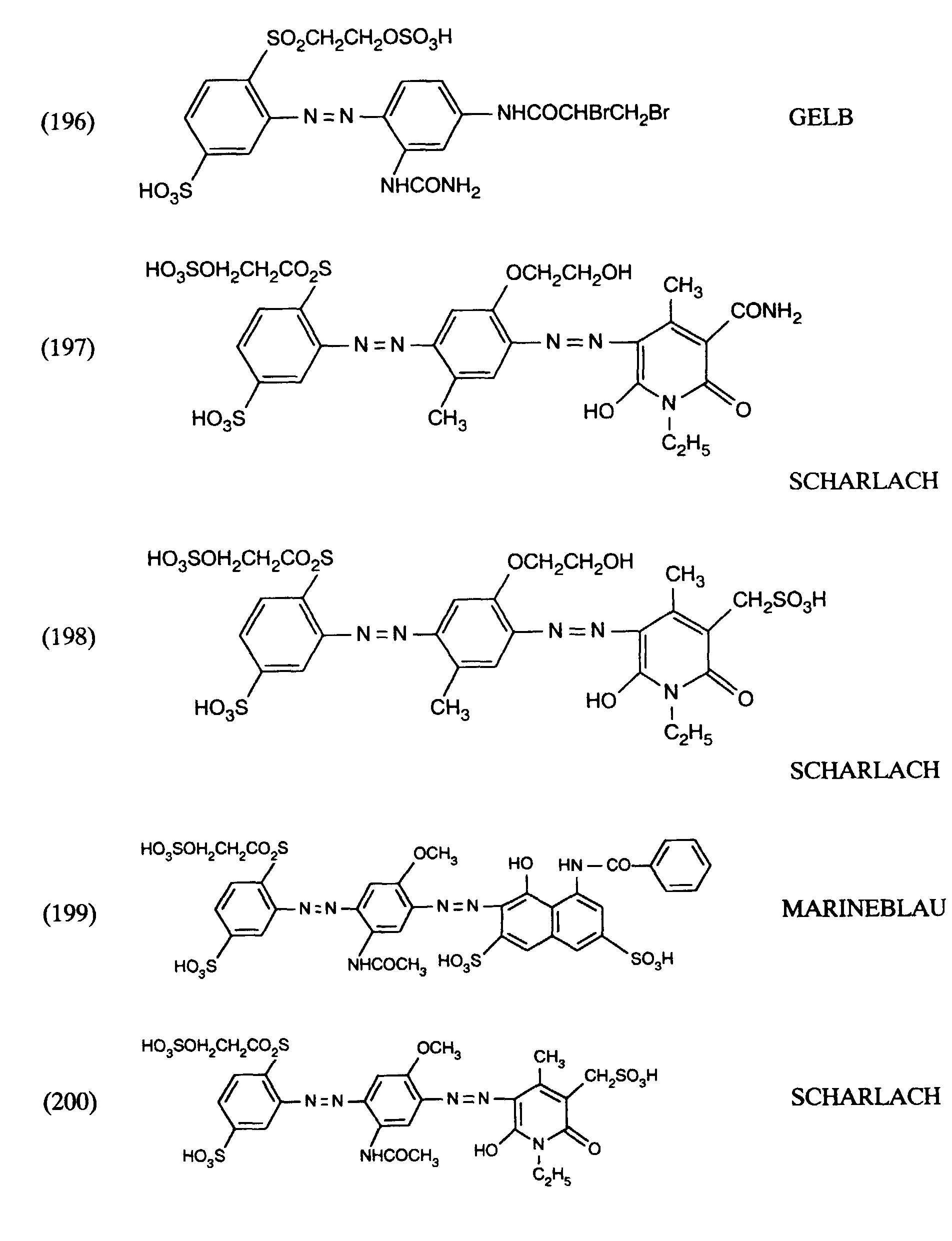

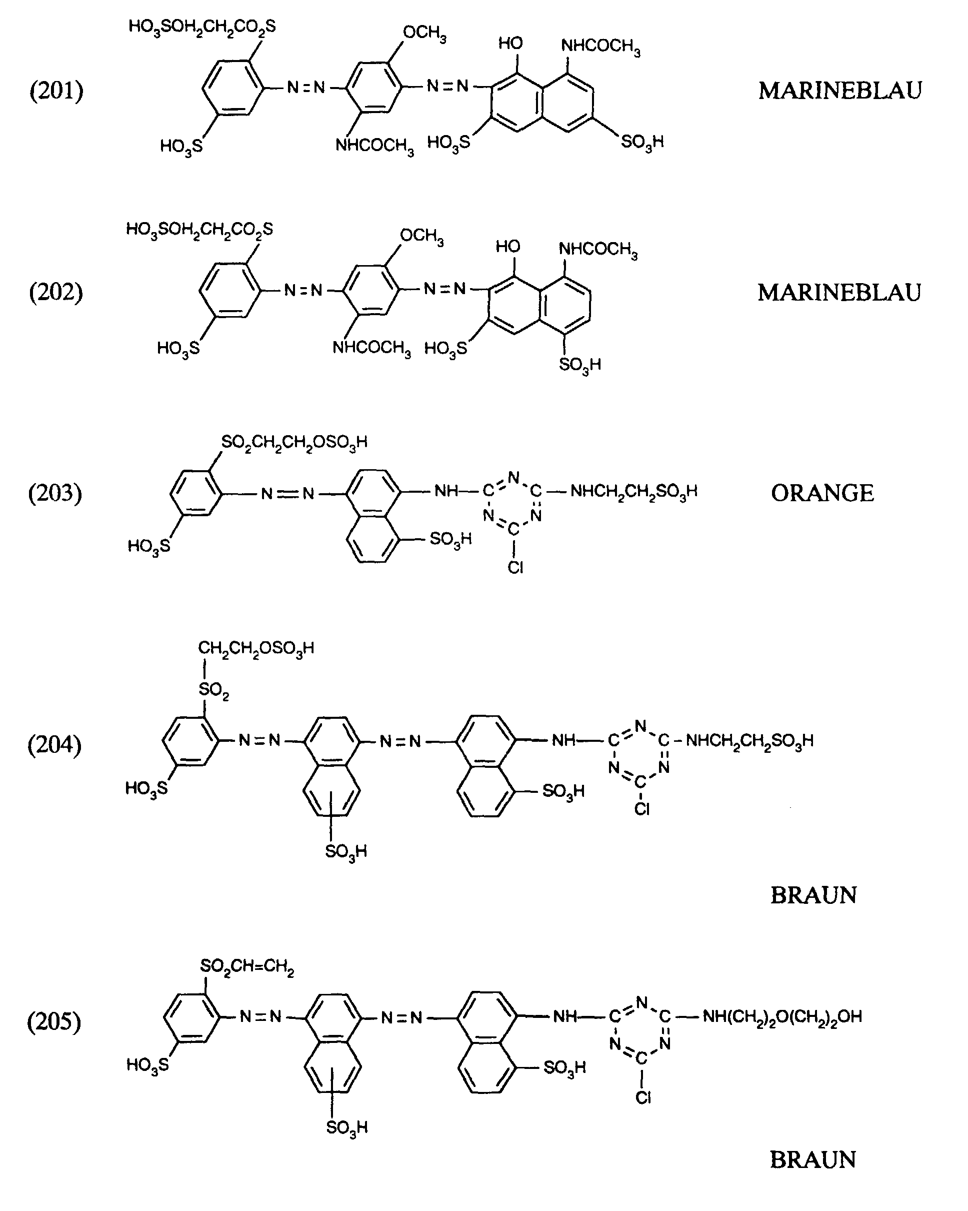

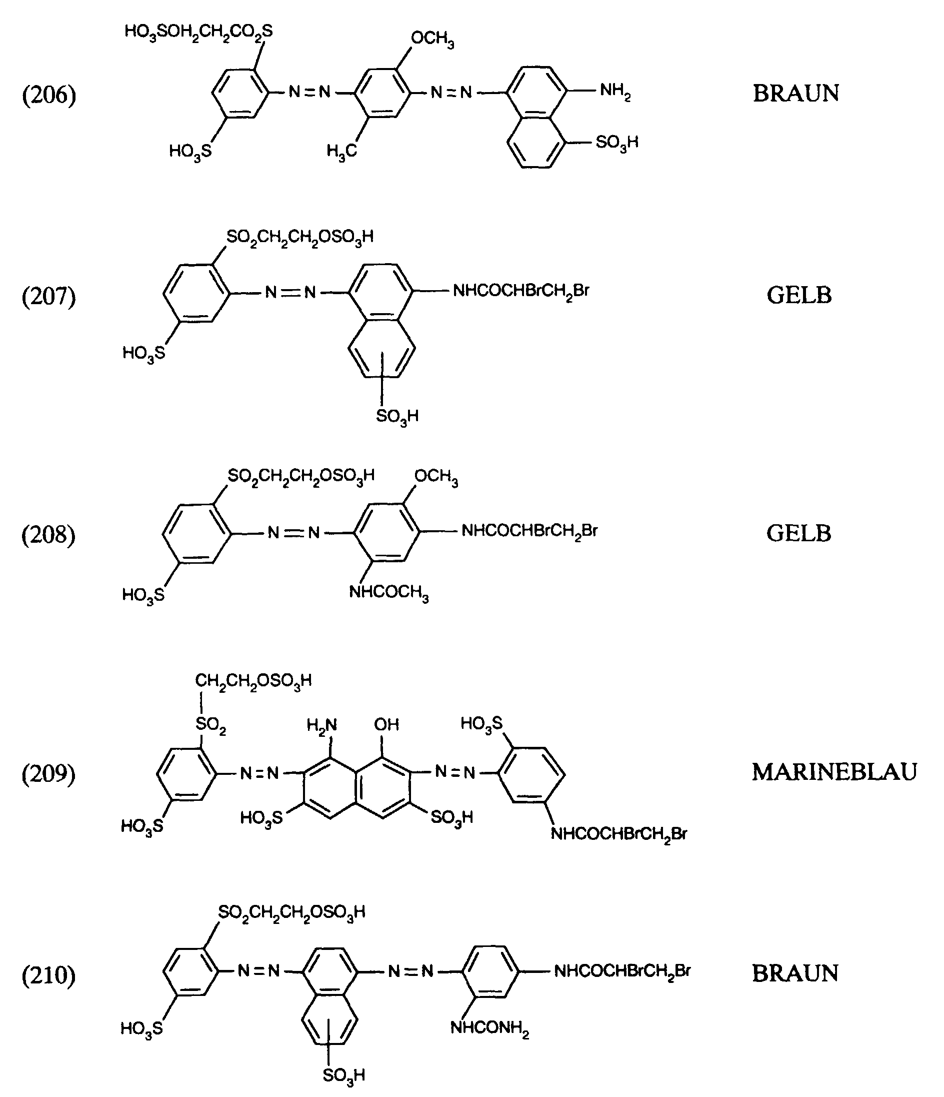

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 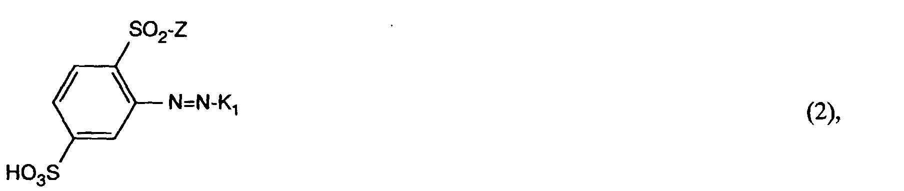 worin K₁ ein Rest der Formel 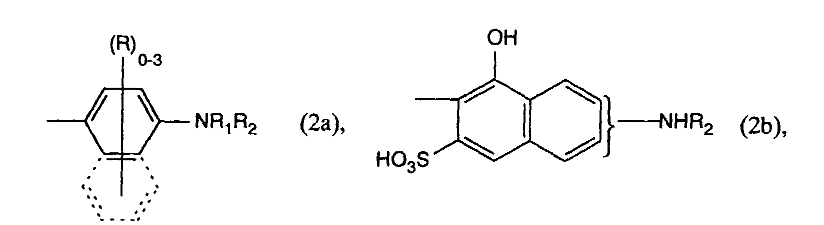 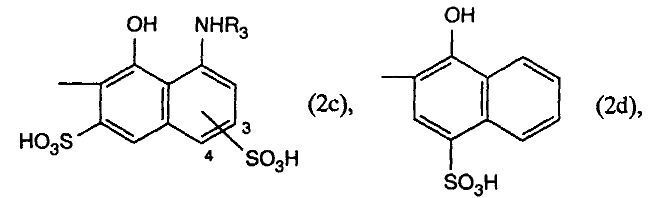 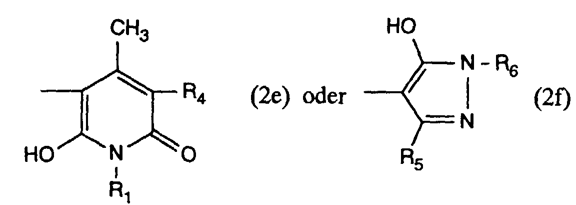 ist,
(R)₀₋₃ 0 bis 3 Substituenten R aus der Gruppe C₁₋₂-Alkyl, C₁₋₂-Alkoxy, Hydroxy-C₁-C₂-Alkoxy, Halogen, Carboxy, Hydroxy, Amino, Acetylamino, Ureido oder Sulfo sind,
R₁ Wasserstoff oder C₁₋₄-Alkyl,
R₂ Wasserstoff, C₁₋₄-Alkyl, C₁₋₄-Alkanoyl oder C₁₋₄-Hydroxyalkyl,
R₃ Wasserstoff, C₁₋₄-Alkyl, C₁₋₄-Alkanoyl, Benzoyl oder Aminobenzoyl ist und
R₄ -CONH₂ oder -CH₂SO₃H,
R₅ C₁₋₃-Alkyl oder Carboxy,
R₆ Chloro- und/oder Sulfo-substituiertes Phenyl oder Naphthyl ist,
Z β-Sulfatoäthyl, β-Thiosulfatoäthyl, β-Phosphatoäthyl, β-Acyloxyäthyl, β-Halogenäthyl oder Vinyl ist und die zweite Sulfogruppe in Formel (2c) entweder in Position 3 oder 4 ist,
Reaktivfarbstoffe der Formel 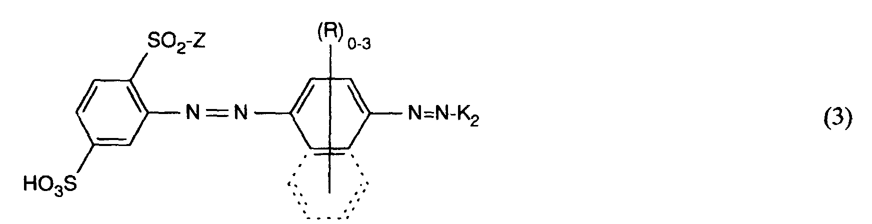 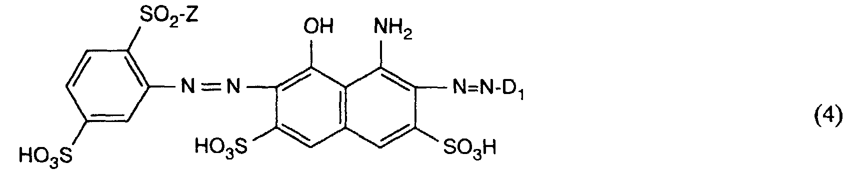 und 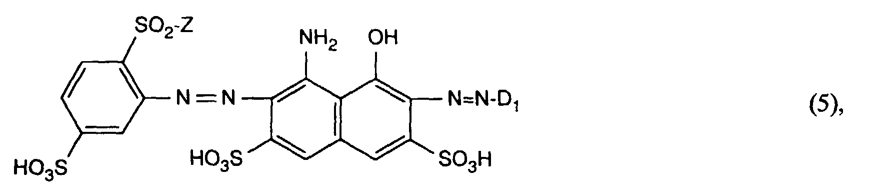 worin K₂ ein Rest der Formeln (2a) bis (2f) oder 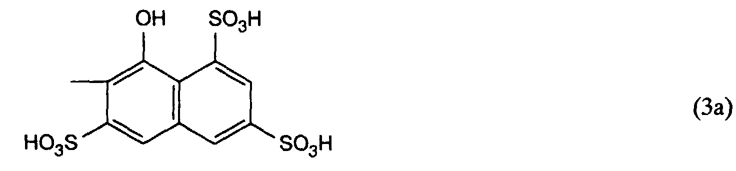 ist,
D₁ ein Rest der Formel 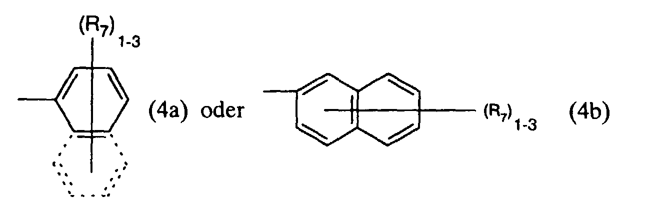 ist, worin
(R₇)₁₋₃ 1 bis 3 Substituenten aus der Gruppe C₁₋₂-Alkyl, C₁₋₂-Alkoxy, Halogen, Carboxy, Hydroxy, Amino oder Sulfo sind und
Z und (R)₀₋₃ die unter Formel (2) angegebene Bedeutung haben,
Reaktivfarbstoffe der Formel 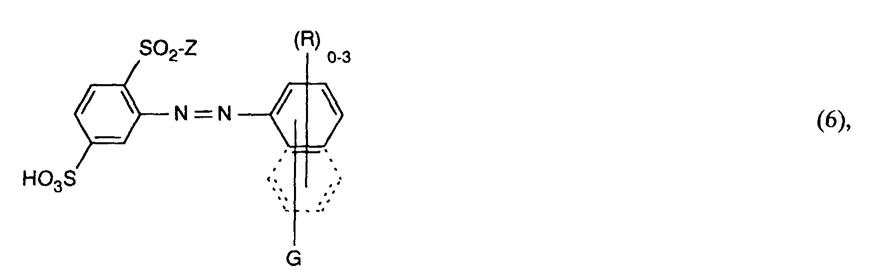 worin
Z und (R)₀₋₃ die unter der Formel (2) angegebene Bedeutung haben und
G ein Rest -NHCOCBr=CH₂, -NHCOCHBr-CH₂Br oder -SO₂Z, worin Z die zuvor angegebene Bedeutung hat, oder ein Rest der Formel 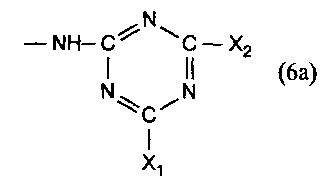 ist,
worin
X₁ Halogen und
X₂ Halogen, Carboxy, Sulfo, Hydroxy, C₁-C₄-Alkoxy, Amino, N-Mono- oder
N,N-Dimethylamino, N-Mono- oder N,N-Diaethylamino, N-Methyl- oder
N-Aethyl-N-phenylamino, Morpholino, unsubstituiertes oder durch Methyl, Methoxy, Chlor oder Sulfo substituiertes Phenylamino, oder ein Rest der Formel
-NH-(CH₂)₂₋₃-SO₂Z,
-NH-(CH₂)₂-O-(CH₂)₂-SO₂Z,
-NH-(CH₂)₂₋₃-NH-(CH₂)₂₋₃-SO₂Z,
-N[(CH₂)₂₋₃-SO₂Z]₂, 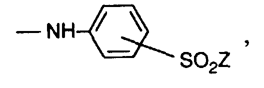 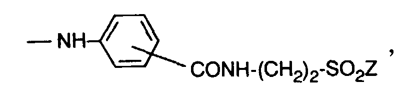
-NH-(CH₂)₂-O-(CH₂)₂-OH,
-NH-CH₂CH₂-OH
oder
-NH-CH₂CH₂SO₃H,
worin
Z jeweils die unter der Formel (2) angegebene Bedeutung hat, ist,
Reaktivfarbstoffe der Formel 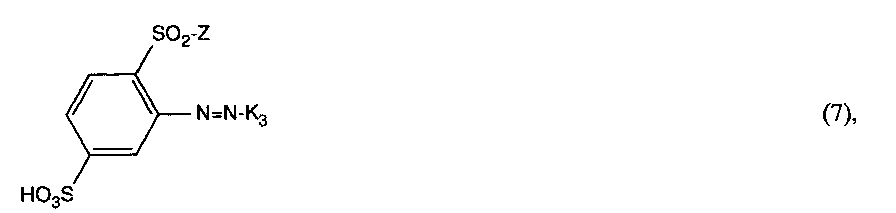 worin
K₃ den Rest von
1-Amino-8-hydroxynaphthalin-3,6-disulfosäure,
1-Amino-8-hydroxynaphthalin-4,6-disulfosäure oder
3-Amino-8-hydroxynaphthalin-6-sulfosäure,
worin die jeweilige Aminogruppe mit Benzoyl, halogenierten Acylgruppen oder einem Triazin gemäss Formel (6a) substituiert ist und Z die unter der Formel (2) angegebene Bedeutung hat,
oder den Rest von 2-Aminonaphthalin, welches in 5- oder 6-Stellung durch einen Rest -SO₂Z, worin Z die zuvor angegebene Bedeutung hat, substituiert ist, bedeutet,
Reaktivfarbstoffe der Formel 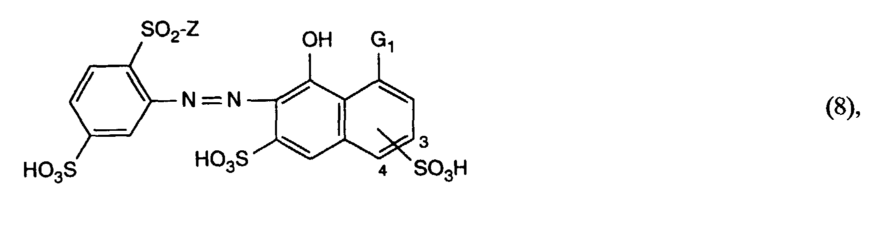 worin die zweite Sulfogruppe im Naphthalinrest entweder in Stellung 3 oder 4 ist,
G₁ ein Rest der Formel
-NHCOCHBr-CH₂Br (8a),
-NHCOCBr=CH₂ (8b),
-NHCOCH₂Cl (8c), 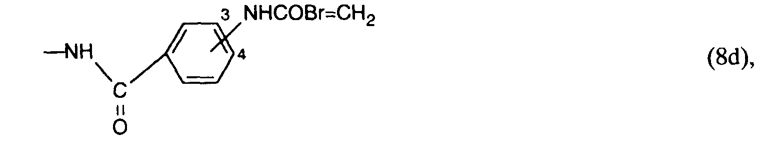 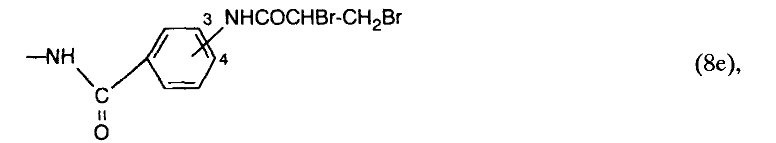 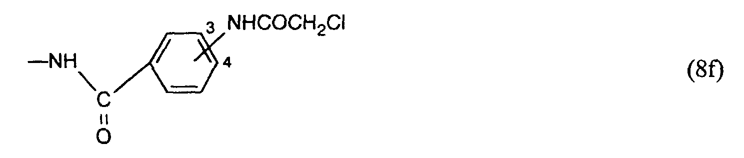
oder ein Rest der Formel (6a) ist, wobei die Reste der Formeln (8a), (8b) und (8c) in den Formeln (8d), (8e) und (8f) entweder in Stellung 3 oder 4 sind,
Z die in Formel (2) und X₁, X₂ die in Formel (6a) angegebene Bedeutung haben,
Reaktivfarbstoffe der Formel 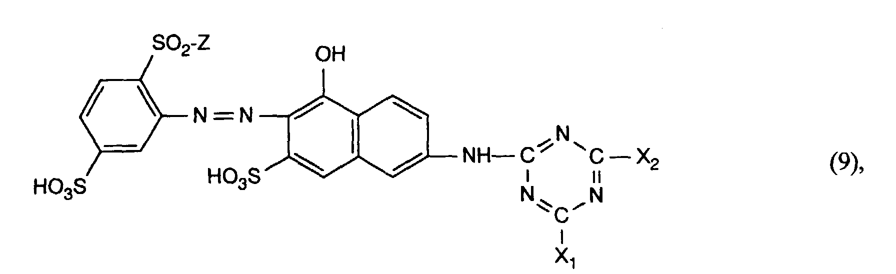 worin
Z die in Formel (2) und X₁, X₂ die in Formel (6a) angegebene Bedeutung haben,
Reaktivfarbstoffe der Formel 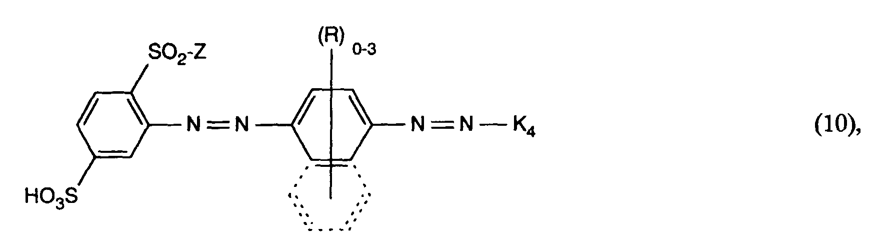 worin
K₄ der Rest der Formel 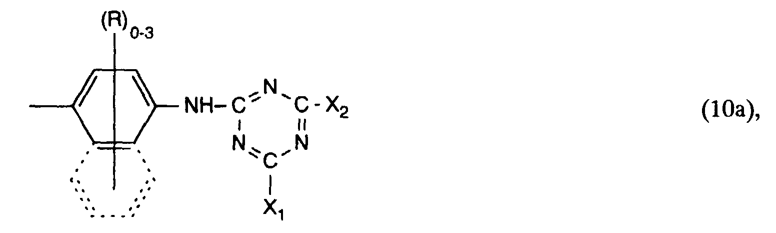 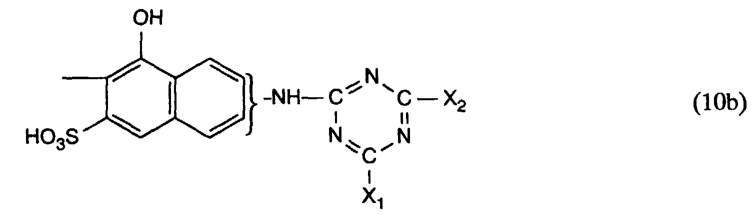 oder 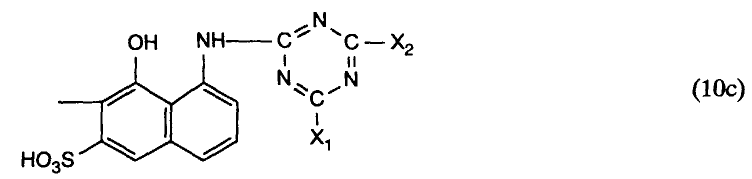 ist,
worin
Z und (R)₀₋₃ die unter der Formel (2) und X₁, X₂ die unter der Formel (6a) angegebene Bedeutung haben,
Reaktivfarbstoffe der Formel 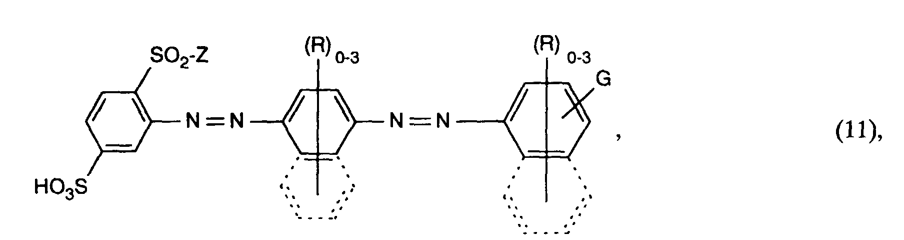 worin
Z und (R)₀₋₃ die in Formel (2) und G die in Formel (6) angegebene Bedeutung haben, sowie
Reaktivfarbstoffe der Formel 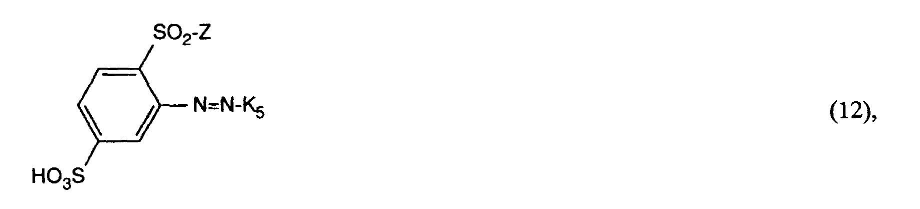 worin K₅ der Rest von
1-Amino-8-hydroxynaphthalin-3,6-disulfonsäure,
1-Amino-8-hydroxynaphthalin-3,5-disulfonsäure,
8-Amino-1-hydroxynaphthalin-3-(5,6)-disulfonsäure oder
8-Amino-1-hydroxynaphthalin-4,6-disulfonsäure
ist, der mit einem weiteren Rest der Formel 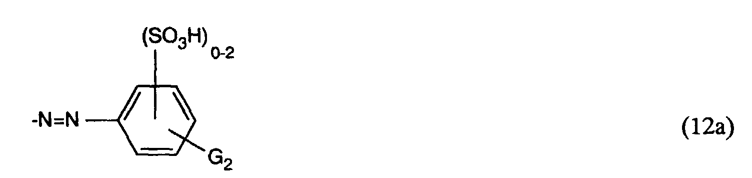 gekuppelt ist, worin
G₂ ein Rest der Formel
-SO₂-Z (12b),
-SO₂-CH₂CH=CH₂ (12c),
-NH-COCBr=CH₂ (8b),
-CONH-(CH₂)₂-SO₂-Z (12d),
-CONH-(CH₂)₂-O-(CH₂)₂-SO₂-Z (12f),
-NHCOCH₂Cl (8c)
oder
-NHCOCHBr-CH₂Br (8a)
ist, worin Z die in der Formel (2) angegebene Bedeutung hat.

2. Reaktivfarbstoffe gemäss Anspruch 1 der Formel 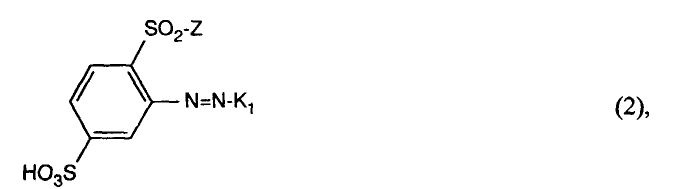 worin K₁ ein Rest der Formel 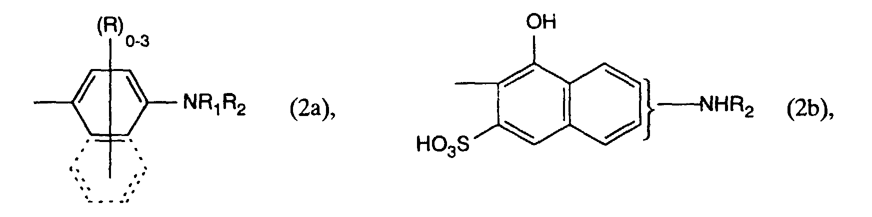 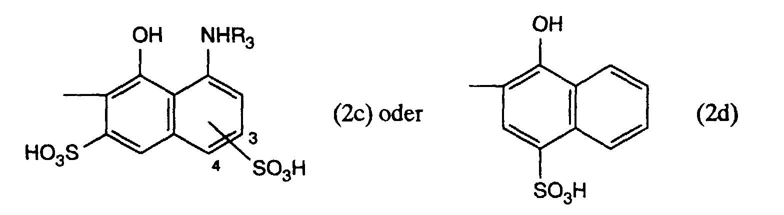 ist,
(R)₀₋₃ 0 bis 3 Substituenten R aus der Gruppe C₁₋₂-Alkyl, C₁₋₂-Alkoxy, Hydroxy-C₁-C₂-Alkoxy, Halogen, Carboxy, Hydroxy, Amino, Acetylamino, Ureido oder Sulfo sind.
R₁ Wasserstoff oder C₁₋₄-Alkyl,
R₂ Wasserstoff, C₁₋₄-Alkyl, C₁₋₄-Alkanoyl oder C₁₋₄-Hydroxyalkyl,
R₃ Wasserstoff, C₁₋₄-Alkyl, C₁₋₄-Alkanoyl, Benzoyl oder Aminobenzoyl ist,
Z die in Anspruch 1 angegebene Bedeutung hat und die zweite Sulfogruppe in Formel (2c) entweder in Position 3 oder 4 ist.

3. Reaktivfarbstoffe gemäss Anspruch 1 der Formel 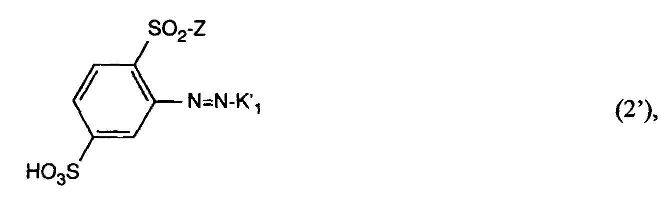 worin K'₁ einen Rest der Formel 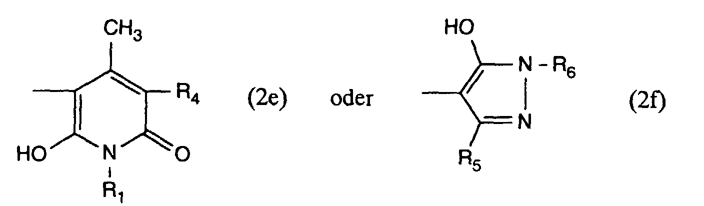 ist,
R₁ Wasserstoff oder C₁-C₄-Alkyl,
R₄ -CONH₂ oder -CH₂SO₃H,
R₅ C₁₋₃-Alkyl oder Carboxy,
R₆ chloro- und/oder sulfo-substituiertes Phenyl oder Naphthyl ist und
Z die in Anspruch 1 angegebene Bedeutung hat.

4. Reaktivfarbstoffe gemäss Anspruch 1 der Formel 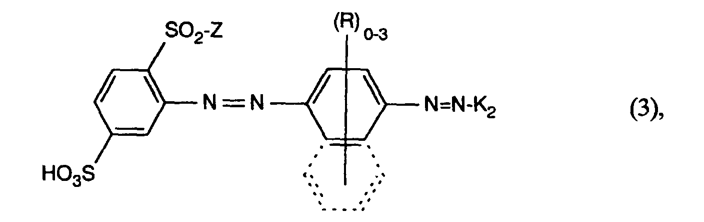 worin K₂ ein Rest der Formel (2a) bis (2f) oder 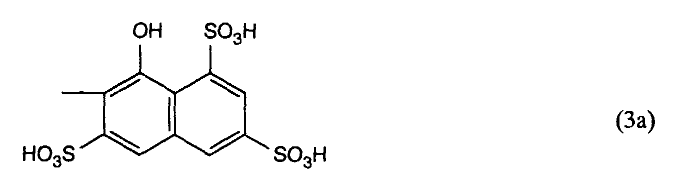 ist und (R)₀₋₃ und Z die in Anspruch 1 angegebenen Bedeutungen haben.

5. Reaktivfarbstoffe gemäss Anspruch 1 der Formel 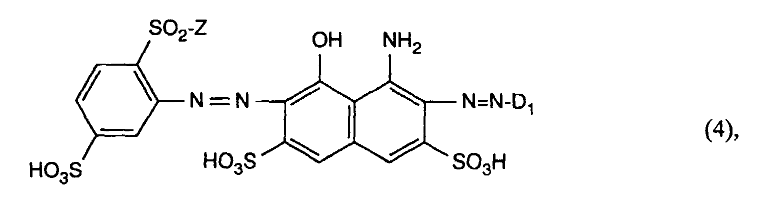 worin D₁ ein Rest der Formel 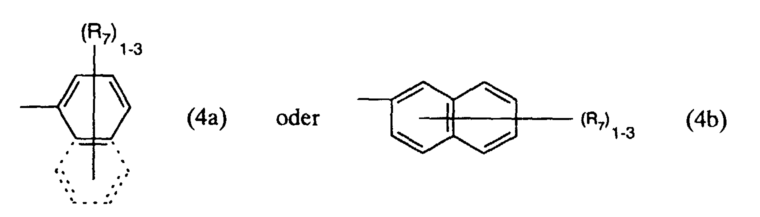 ist,
(R₇)₁₋₃ 1 bis 3 Substituenten aus der Gruppe C₁₋₂-Alkyl, C₁₋₂-Alkoxy, Halogen, Carboxy, Hydroxy, Amino oder Sulfo sind und
Z die in Anspruch 1 angegebene Bedeutung hat.

6. Reaktivfarbstoffe gemäss Anspruch 1 der Formel 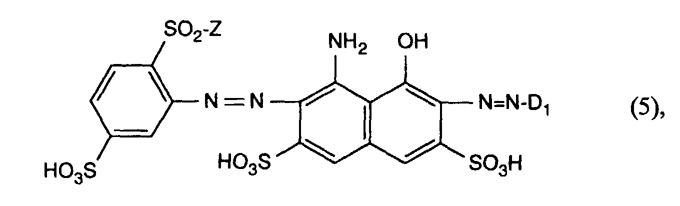 worin D₁ und Z die in Anspruch 1 angegebenen Bedeutungen haben.

7. Reaktivfarbstoffe gemäss Anspruch 1 der Formel 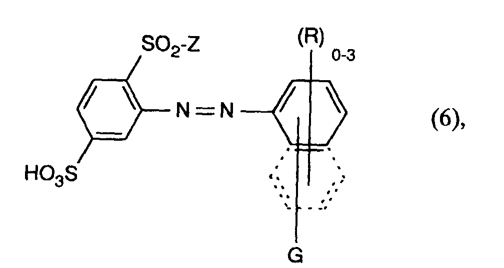 worin
(R)₀₋₃ 0 bis 3 Substituenten R aus der Gruppe C₁₋₂ Alkyl, C₁₋₂-Alkoxy, Halogen, Carboxy, Hydroxy, Amino, Acetylamino, Ureido oder Sulfo sind und
G ein Rest -NHCOCBr=CH₂, -NHCOCHBr-CH₂Br oder -SO₂Z ist und
Z β-Sulfatoäthyl, β-Thiosulfatoäthyl, β-Phosphatoäthyl, β-Acyloxyäthyl, β-Halogenäthyl oder Vinyl ist.

8. Reaktivfarbstoffe gemäss Anspruch 1 der Formel 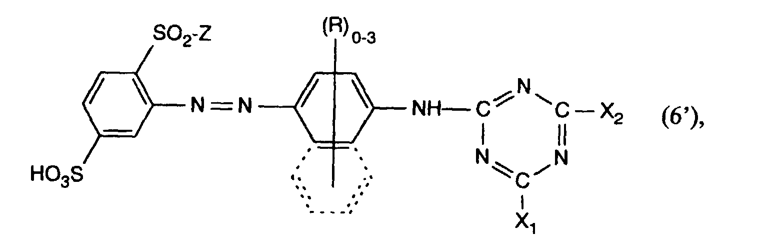 worin
(R)₀₋₃ 0 bis 3 Substituenten R aus der Gruppe C₁₋₂ Alkyl, C₁₋₂-Alkyl, Halogen, Carboxy, Hydroxy, Amino, Acetylamino, Ureido oder Sulfo sind und
X₁, X₂ und Z die in Anspruch 1 angegebenen Bedeutungen haben.

9. Reaktivfarbstoffe gemäss Anspruch 1 der Formel 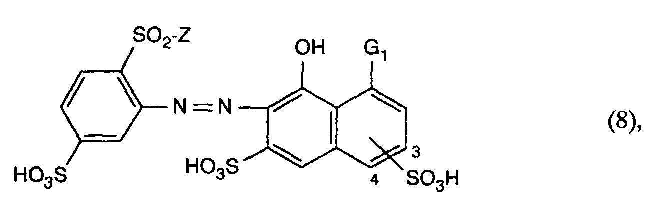 worin die zweite Sulfogruppe im Naphthalinrest entweder in Stellung 3 oder 4 ist, G₁ ein Rest der Formel
-NHCOCHBr - CH₂Br (8a),
-NHCOCBr = CH₂ (8b),
-NHCOCH₂Cl (8c), 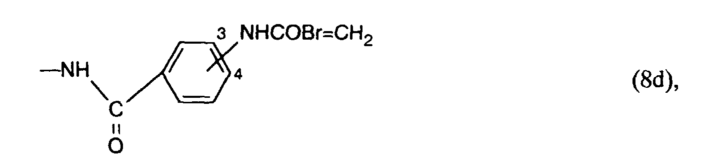 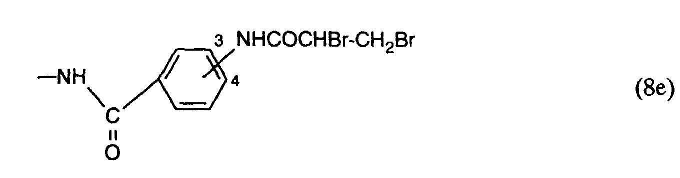
oder 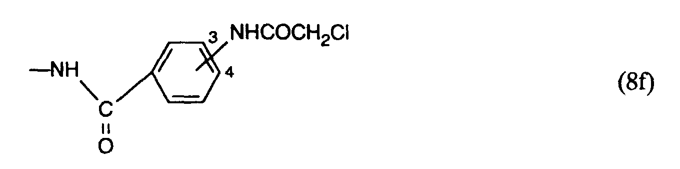 ist, wobei die Reste der Formeln (8a), (8b) und (8c) in den Formeln (8d), (8e) und (8f) entweder in Stellung 3 oder 4 sind, und
Z β-Sulfatoäthyl, β-Thiosulfatoäthyl, β-Phosphatoäthyl, β-Acyloxyäthyl, β-Halogenäthyl oder Vinyl ist.

10. Reaktivfarbstoffe gemäss Anspruch 1 der Formel 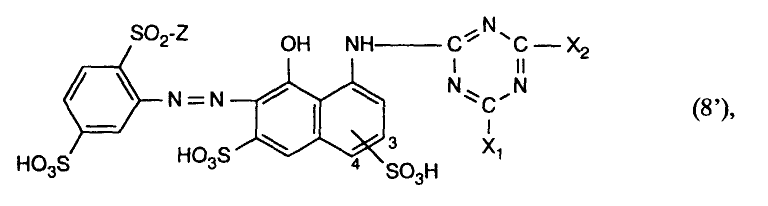 worin die zweite Sulfogruppe im Naphthalinrest entweder in Position 3 oder 4 ist, und
X₁, X₂ und Z die in Anspruch 1 angegebenen Bedeutungen haben.

11. Reaktivfarbstoffe gemäss Anspruch 1 der Formel 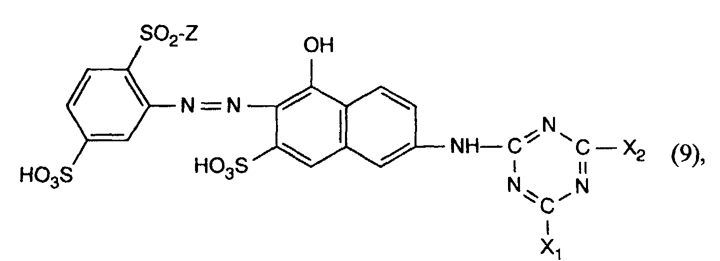 worin X₁, X₂ und Z die in Anspruch 1 angegebenen Bedeutungen haben.

12. Reaktivfarbstoffe gemäss Anspruch 1 der Formel 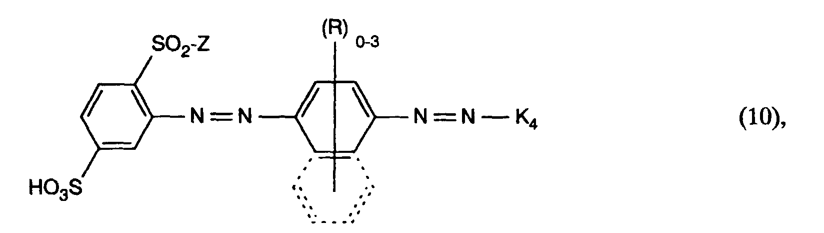 worin K₄ der Rest der Formel 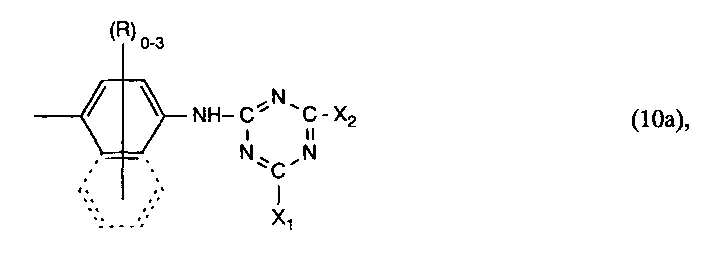 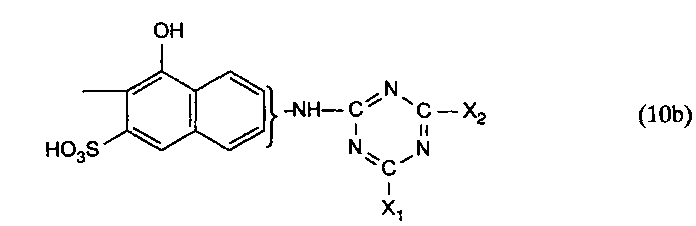 oder 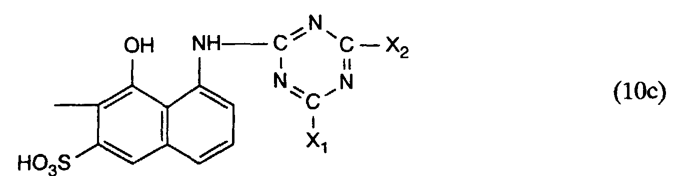 ist, worin
(R)₀₋₃ 0 bis 3 Substituenten R aus der Gruppe C₁₋₂ Alkyl, C₁₋₂-Alkoxy, Halogen, Carboxy, Hydroxy, Amino, Acetylamino, Ureido oder Sulfo sind und
X₁, X₂ und Z die in Anspruch 1 angegebenen Bedeutungen haben.

13. Reaktivfarbstoffe gemäss Anspruch 1 der Formel 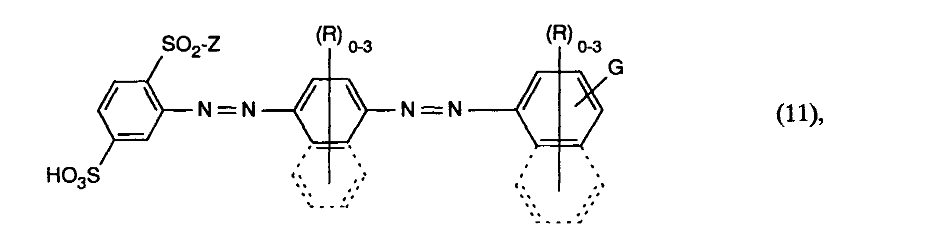 worin
(R)₀₋₃ 0 bis 3 Substituenten R aus der Gruppe C₁₋₂ Alkyl, C₁₋₂-Alkoxy, Halogen, Carboxy, Hydroxy, Amino, Acetylamino, Ureido oder Sulfo sind
G ein Rest -NHCOCBr=CH₂ oder -NHCOCHBr-CH₂Br und
Z β-Sulfatoäthyl, β-Thiosulfatoäthyl, β-Phosphatoäthyl, β-Acyloxyäthyl, β-Halogenäthyl oder Vinyl ist.

14. Reaktivfarbstoffe gemäss Anspruch 1 der Formel 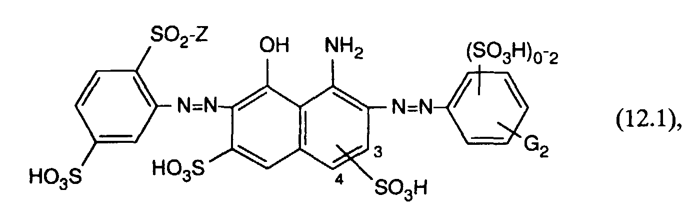 worin die zweite Sulfogruppe im Naphthalinrest entweder in Position 3 oder 4 ist,
G₂ ein Rest der Formel
-SO₂-Z (12b),
-SO₂-CH₂CH=CH₂ (12c),
-NH-COCBr=CH₂ (8b),
-CONH-(CH₂)₂-SO₂-Z (12d),
-CONH-(CH₂)₂-O-(CH₂)₂-SO₂-Z (12f),
-NHCOCH₂Cl (8c)
oder
-NHCOCHBr-CH₂Br (8a)
und
Z β-Sulfatoäthyl, β-Thiosulfatoäthyl, β-Phosphatoäthyl, β-Acyloxyäthyl, β-Halogenäthyl oder Vinyl ist.

15. Reaktivfarbstoffe gemäss Anspruch 14 der Formel 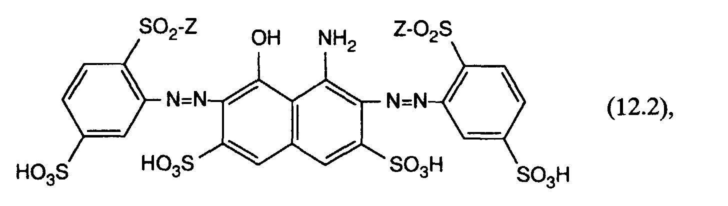 worin Z die in Anspruch 14 angegebene Bedeutung hat.

16. Reaktivfarbstoffe gemäss Anspruch 1 der Formel 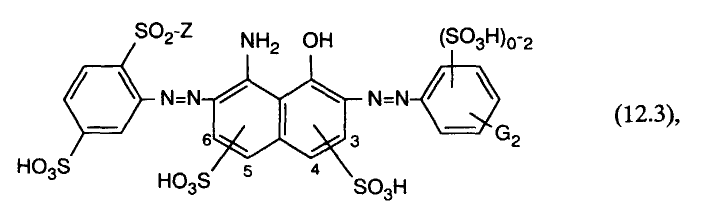 worin die beiden Sulfogruppen im Naphthalinrest entweder in Positionen 3,5 oder 3,6 oder 4,6 sind und G₂ und Z die in Anspruch 1 angegebene Bedeutung haben.

17. Reaktivfarbstoffe gemäss Anspruch 1 der Formel 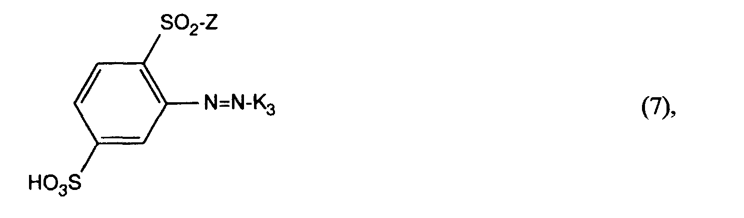 worin Z Vinyl oder β-Sulfatoäthyl und K₃ 2-Amino-6-vinyl- oder
2-Amino-6-β-Sulfatoäthylsulfonyl-1-naphthyl ist.

18. Reaktivfarbstoffe der Formel (3) gemäss Anspruch 4, worin Z Vinylsulfonyl oder β-Sulfatoaethylsulfonyl bedeutet, (R)₀₋₃ für 0-3 gleiche oder verschiedene Substituenten aus der Gruppe Methyl, Aethyl, Methoxy, Aethoxy, Hydroxy, Hydroxyäthoxy, Acetylamino, Ureido und Sulfo steht, und K₂ ein Rest der Formel 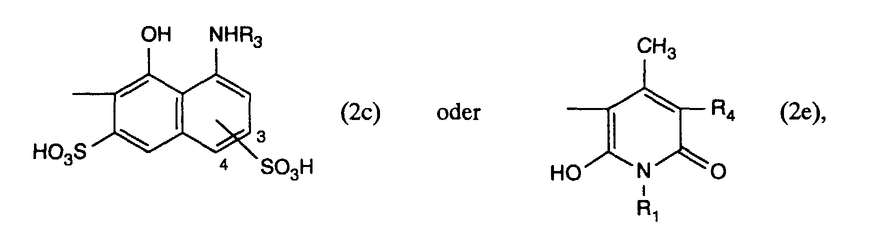 worin R₁ Methyl oder Ethyl, R₃ Acetyl oder Benzoyl und R₄ -CONH₂ oder -CH₂SO₃H bedeuten, ist.

19. Verwendung der Reaktivfarbstoffe gemäss Anspruch 1 zum Färben oder Bedrucken von cellulosehaltigen Materialien.

20. Verwendung gemäss Anspruch 19 zum Färben oder Bedrucken von Baumwolle.

## Claims

1. Reactive dyes of the formula 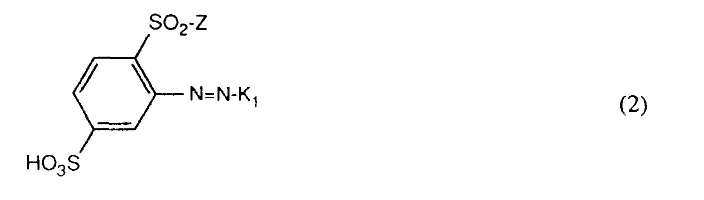 in which K₁ is a radical of the formula 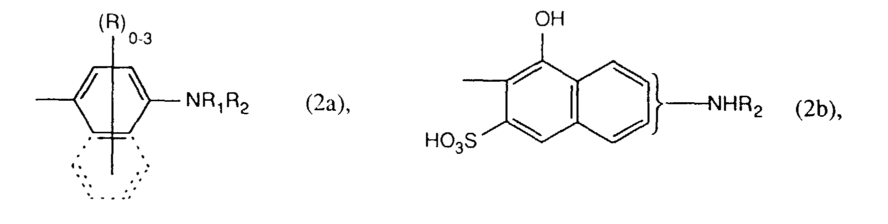 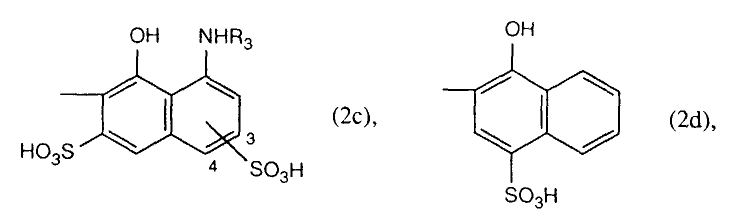 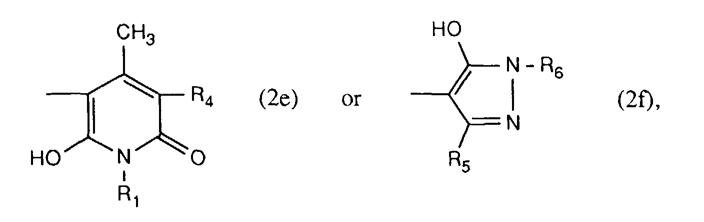
(R)₀₋₃ are 0 to 3 substituents R from the group consisting of C₁₋₂alkyl, C₁₋₂alkoxy, hydroxy-C₁-C₂alkoxy, halogen, carboxyl, hydroxyl, amino, acetylamino, ureido or sulfo,
R₁ is hydrogen or C₁₋₄alkyl,
R₂ is hydrogen, C₁₋₄alkyl, C₁₋₄alkanoyl or C₁₋₄hydroxyalkyl,
R₃ is hydrogen, C₁₋₄alkyl, C₁₋₄alkanoyl, benzoyl or aminobenzoyl and
R₄ is -CONH₂ or -CH₂SO₃H,
R₅ is C₁₋₃alkyl or carboxyl,
R₆ is chloro- and/or sulfo-substituted phenyl or naphthyl,
Z is β-sulfatoethyl, β-thiosulfatoethyl, β-phosphatoethyl, β-acyloxyethyl, β-haloethyl or vinyl and the second sulfo group in formula (2c) is either in the 3 or 4 position,
reactive dyes of the formula 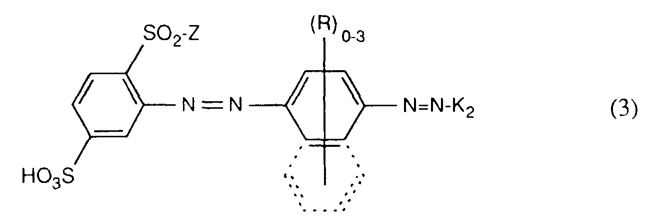 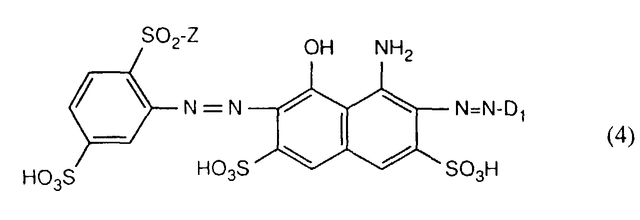 and 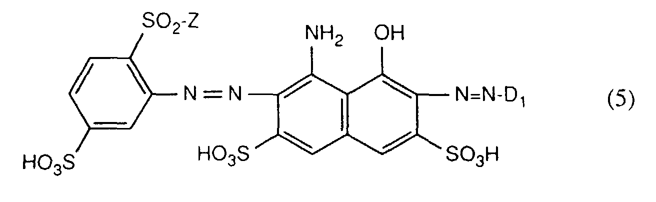 in which K₂ is a radical of formulae (2a) to (2f) or is 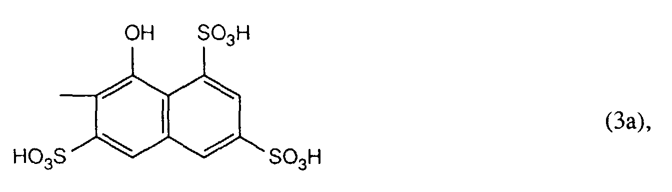 D₁ is a radical of the formula 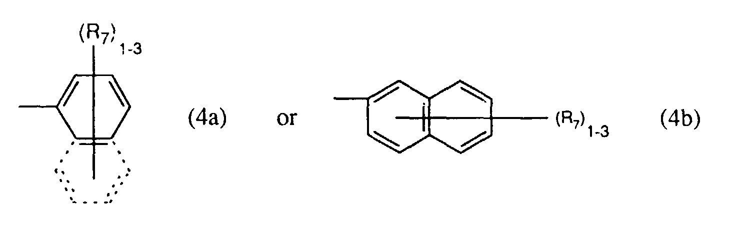 in which
(R₇)₁₋₃ are 1 to 3 substituents from the group consisting of C₁₋₂alkyl, C₁₋₂alkoxy, halogen, carboxyl, hydroxyl, amino or sulfo and
Z and (R)₀₋₃ are as defined under formula (2),
reactive dyes of the formula 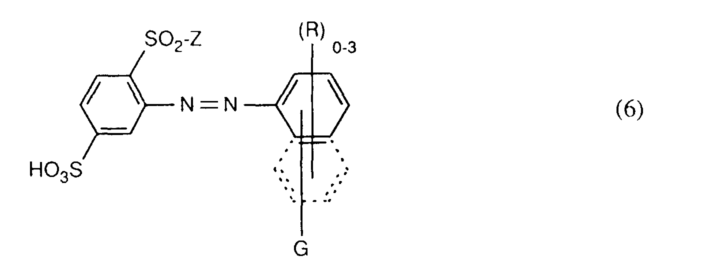 in which
Z and (R)₀₋₃ are as defined under formula (2) and
G is a radical -NHCOCBr=CH₂, -NHCOCHBr-CH₂Br or -SO₂Z in which Z is as defined above, or is a radical of the formula 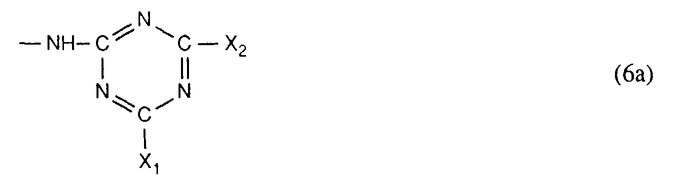
in which
X₁ is halogen and
X₂ is halogen, carboxyl, sulfo, hydroxyl, C₁-C₄alkoxy, amino, N-mono- or
N,N-dimethylamino, N-mono- or N,N-diethylamino, N-methyl- or
N-ethyl-N-phenylamino, morpholino, phenylamino which is unsubstituted or substituted by methyl, methoxy, chlorine or sulfo, or is a radical of the formula
-NH-(CH₂)₂₋₃-SO₂Z,
-NH-(CH₂)₂-O-(CH₂)₂-SO₂Z,
-NH-(CH₂)₂₋₃-NH-(CH₂)₂₋₃-SO₂Z,
-N[(CH₂)₂₋₃-SO₂Z]₂, 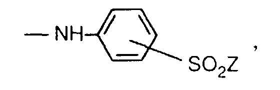 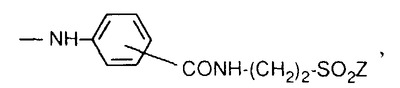
-NH-(CH₂)₂-O-(CH₂)₂-OH,
-NH-CH₂CH₂-OH
or
-NH-CH₂CH₂SO₃H,
in which
Z is in each case as defined under formula (2),
reactive dyes of the formula 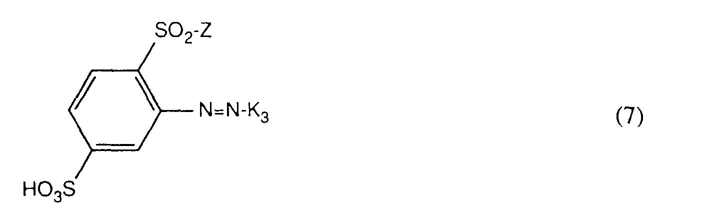 in which
K₃ is the radical of
1-amino-8-hydroxynaphthalene-3,6-disulfonic acid
1-amino-8-hydroxynaphthalene-4,6-disulfonic acid or
3-amino-8-hydroxynaphthalene-6-sulfonic acid,
in which each amino group is substituted by benzoyl, halogenated acyl groups or a triazine according to formula (6a), and Z is as defined under formula (2),
or is the radical of 2-aminonaphthalene which is substituted in the 5 or 6 position by a radical -SO₂Z in which Z is as defined above,
reactive dyes of the formula 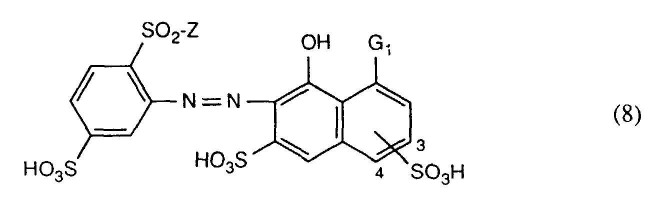 in which the second sulfo group in the naphthalene radical is either in the 3 or 4 position, G₁ is a radical of the formula
-NHCOCHBr - CH₂Br (8a),
-NHCOCBr = CH₂ (8b),
-NHCOCH₂Cl (8c), 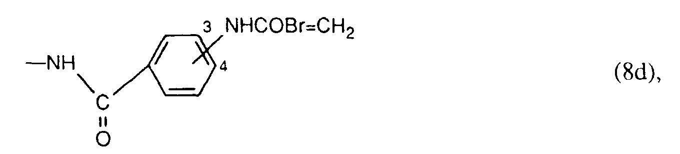 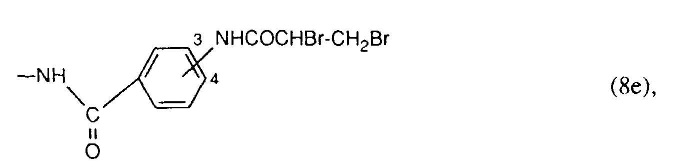 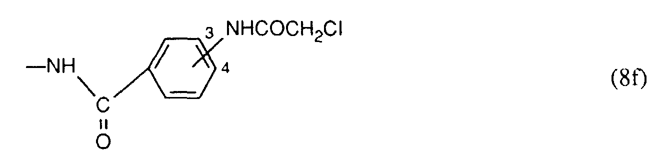
or a radical of the formula (6a), the radicals of formulae (8a), (8b) and (8c) in formulae (8d), (8e) and (8f) being either in the 3 or 4 position,
Z being as defined in formula (2) and X₁, X₂ being as defined in formula (6a),
reactive dyes of the formula 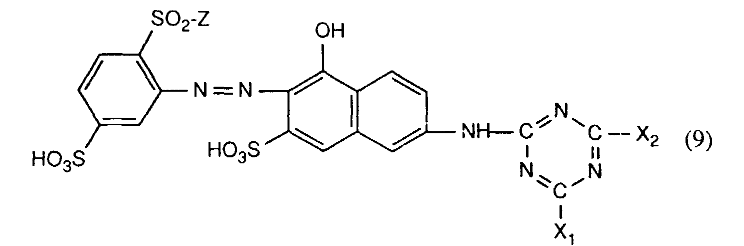 in which
Z is as defined in formula (2) and X₁, X₂ are as defined in formula (6a),
reactive dyes of the formula 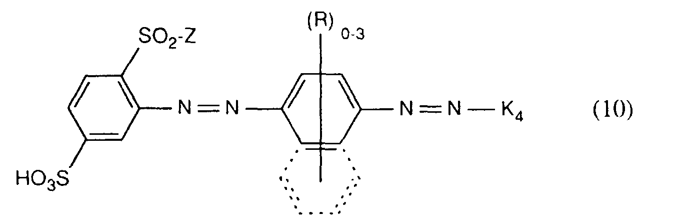 in which
K₄ is the radical of the formula 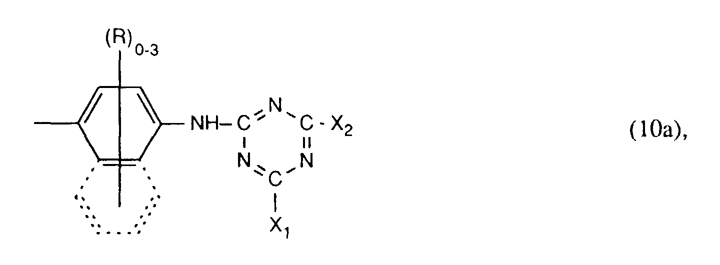 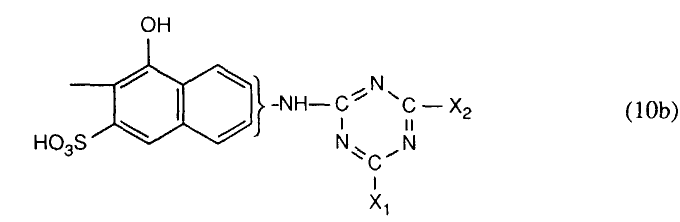 or 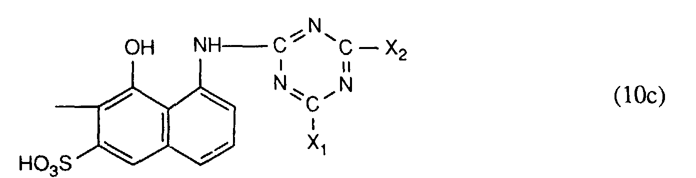 in which
Z and (R)₀₋₃ are as defined under formula (2) and X₁, X₂ are as defined under formula (6a),
reactive dyes of the formula 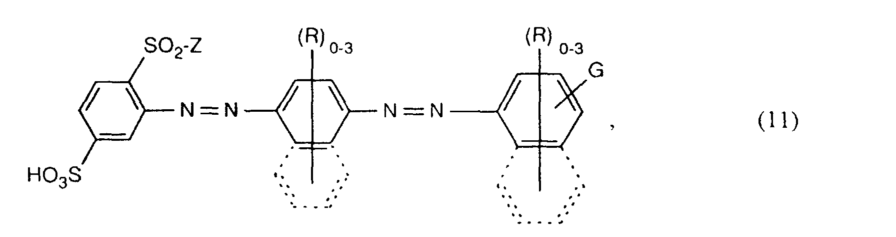 in which
Z and (R)₀₋₃ are as defined in formula (2) and G is as defined in formula (6),
and reactive dyes of the formula 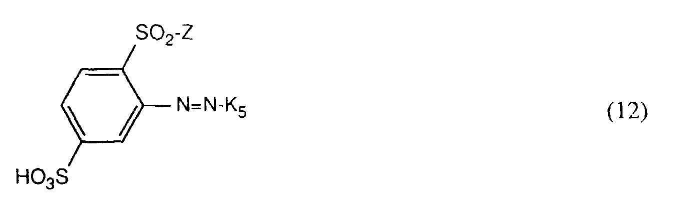 in which K₅ is the radical of
1-amino-8-hydroxynaphthalene-3,6-disulfonic acid,
1-amino-8-hydroxynaphthalene-3,5-disulfonic acid,
8-amino-1-hydroxynaphthalene-3-(5,6)-disulfonic acid or
8-amino-1-hydroxynaphthalene-4,6-disulfonic acid
which is coupled with a further radical of the formula 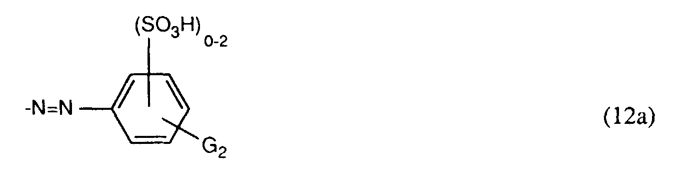 in which
G₂ is a radical of the formula
-SO₂-Z (12b),
-SO₂-CH₂CH=CH₂ (12c),
-NH-COCBr=CH₂ (8b),
-CONH-(CH₂)₂-SO₂-Z (12d),
-CONH-(CH₂)₂-O-(CH₂)₂-SO₂-Z (12f),
-NHCOCH₂Cl (8c)
or
-NHCOCHBr-CH₂Br (8a)
in which Z is as defined in formula (2).

2. Reactive dyes according to claim 1 of the formula 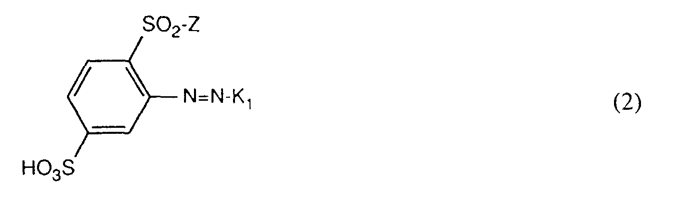 in which K₁ is a radical of the formula 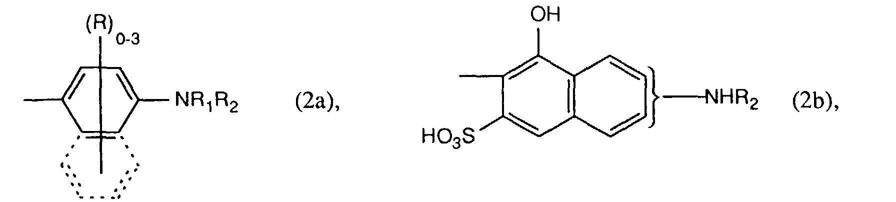 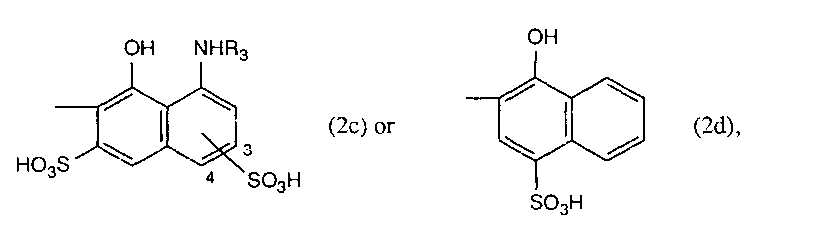
(R)₀₋₃ are 0 to 3 substituents R from the group consisting of C₁₋₂alkyl, C₁₋₂alkoxy, hydroxy-C₁-C₂alkoxy, halogen, carboxyl, hydroxyl, amino, acetylamino, ureido or sulfo.
R₁ is hydrogen or C₁₋₄alkyl,
R₂ is hydrogen, C₁₋₄alkyl, C₁₋₄alkanoyl or C₁₋₄hydroxyalkyl,
R₃ is hydrogen, C₁₋₄alkyl, C₁₋₄alkanoyl, benzoyl or aminobenzoyl,
Z is as defined in claim 1 and the second sulfo group in formula (2c) is either in the 3 or 4 position.

3. Reactive dyes according to claim 1 of the formula 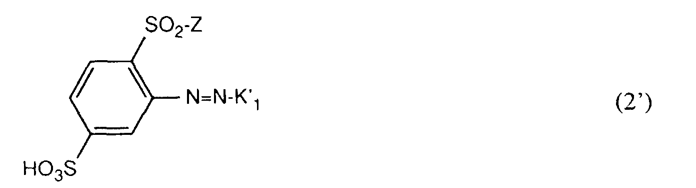 in which K'₁ is a radical of the formula 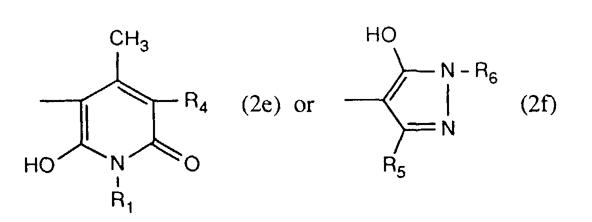
R₁ is hydrogen or C₁-C₄alkyl,
R₄ is -CONH₂ or -CH₂SO₃H,
R₅ is C₁₋₃alkyl or carboxyl,
R₆ is chloro- and/or sulfo-substituted phenyl or naphthyl and
Z is as defined in claim 1.

4. Reactive dyes according to claim 1 of the formula 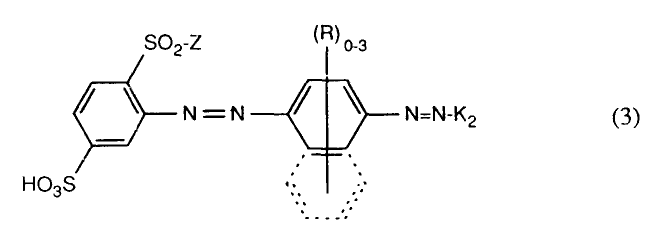 in which K₂ is a radical of the formula (2a) to (2f) or 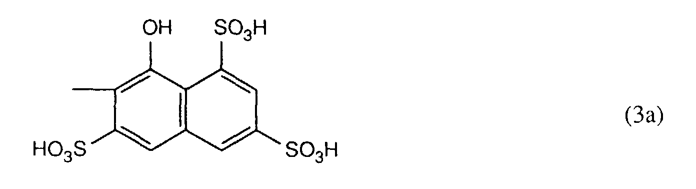 and (R)₀₋₃ and Z are as defined in claim 1.

5. Reactive dyes according to claim 1 of the formula 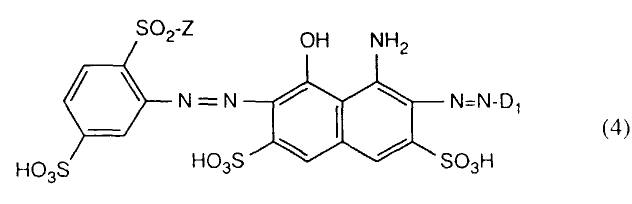 in which D₁ is a radical of the formula 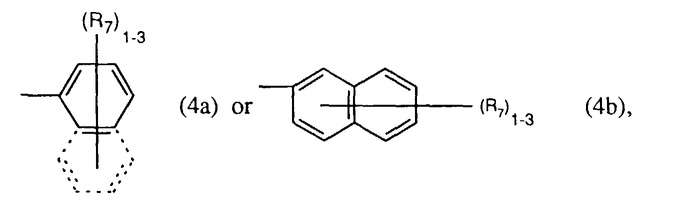 (R₇)₁₋₃ are 1 to 3 substituents from the group consisting of C₁₋₂alkyl, C₁₋₂alkoxy, halogen, carboxyl, hydroxyl, amino or sulfo and
Z is as defined in claim 1.

6. Reactive dyes according to claim 1 of the formula 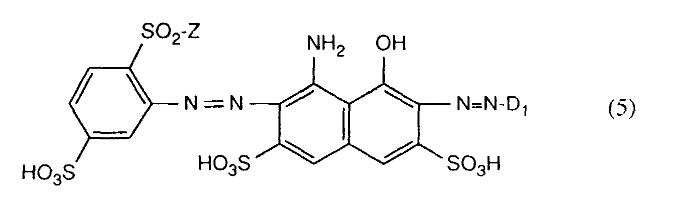 in which D₁ and Z are as defined in claim 1.

7. Reactive dyes according to claim 1 of the formula 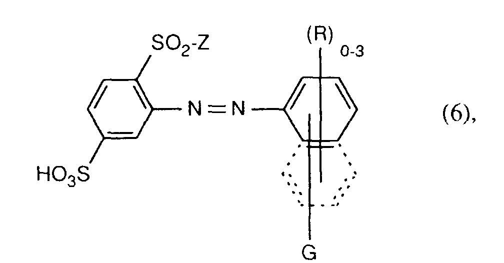 in which
(R)₀₋₃ are 0 to 3 substituents R from the group consisting of C₁₋₂alkyl, C₁₋₂alkoxy, halogen, carboxyl, hydroxyl, amino, acetylamino, ureido or sulfo and
G is a radical -NHCOCBr=CH₂, -NHCOCHBr-CH₂Br or -SO₂Z and
Z is β-sulfatoethyl, β-thiosulfatoethyl, β-phosphatoethyl, β-acyloxyethyl, β-haloethyl or vinyl.

8. Reactive dyes according to claim 1 of the formula 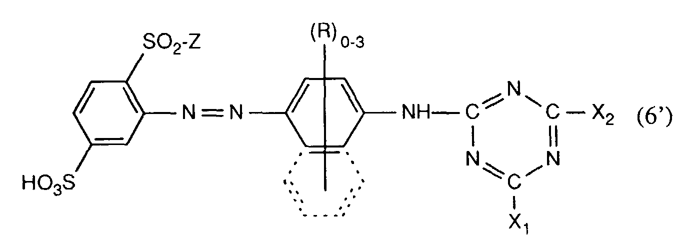 in which
(R)₀₋₃ are 0 to 3 substituents R from the group consisting of C₁₋₂alkyl, C₁₋₂alkoxy, halogen, carboxyl, hydroxyl, amino, acetylamino, ureido or sulfo and
X₁, X₂ and Z are as defined in claim 1.

9. Reactive dyes according to claim 1 of the formula 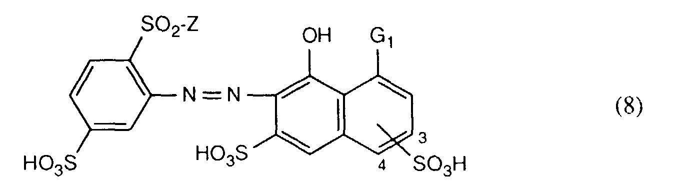 in which the second sulfo group in the naphthalene radical is either in the 3 or 4 position,
G₁ is a radical of the formula
-NHCOCHBr - CH₂Br (8a),
-NHCOCBr = CH₂ (8b),
-NHCOCH₂Cl (8c), 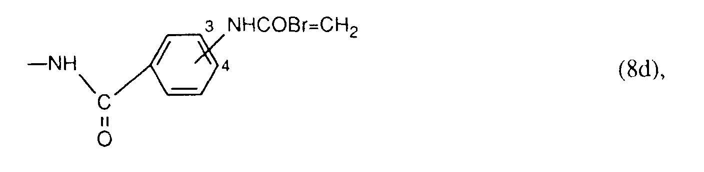 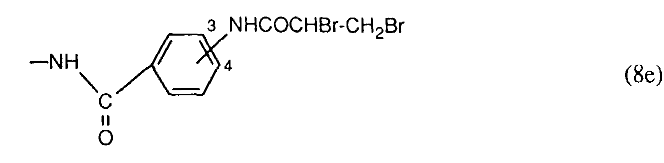
or 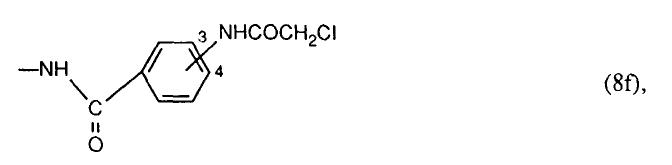 the radicals of formulae (8a), (8b) and (8c) in formulae (8d), (8e) and (8f) being either in the 3 or 4 position, and
Z is β-sulfatoethyl, β-thiosulfatoethyl, β-phosphatoethyl, β-acyloxyethyl, β-haloethyl or vinyl.

10. Reactive dyes according to claim I of the formula 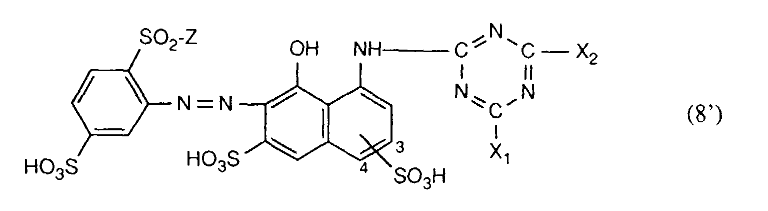 in which the second sulfo group in the naphthalene radical is either in the 3 or 4 position, and X₁, X₂ and Z are as defined in claim 1.

11. Reactive dyes according to claim 1 of the formula 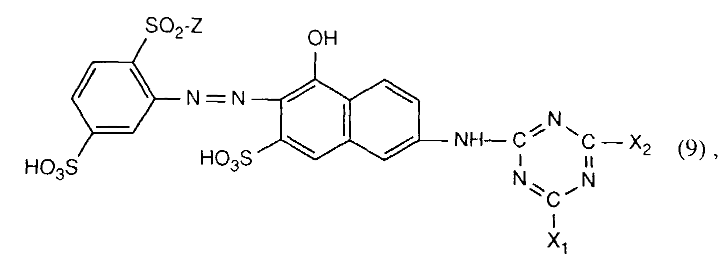 in which X₁, X₂ and Z are as defined in claim 1.

12. Reactive dyes according to claim 1 of the formula 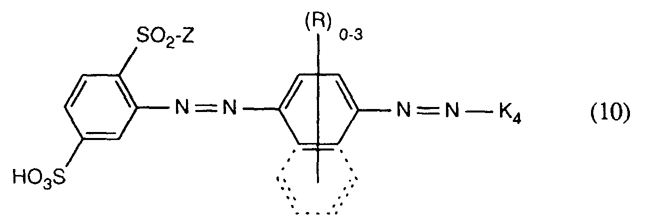 in which K₄ is the radical of the formula 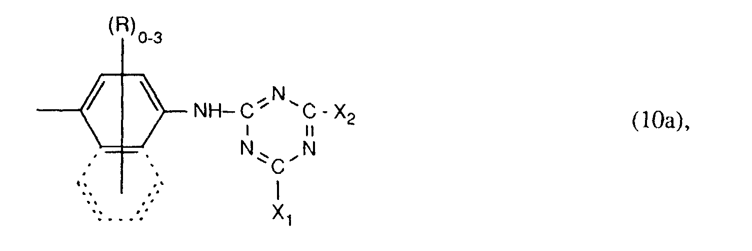 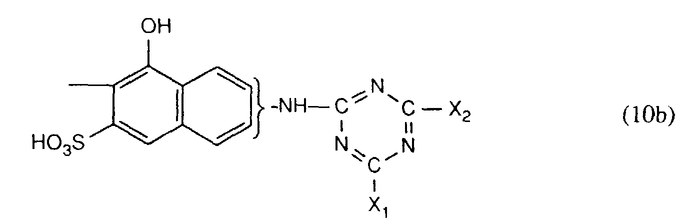 or 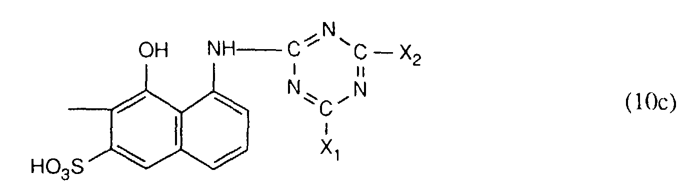 in which
(R)₀₋₃ are 0 to 3 substituents R from the group consisting of C₁₋₂alkyl, C₁₋₂alkoxy, halogen, carboxyl, hydroxyl, amino, acetylamino, ureido or sulfo and
X₁, X₂ and Z are as defined in claim 1.

13. Reactive dyes according to claim 1 of the formula 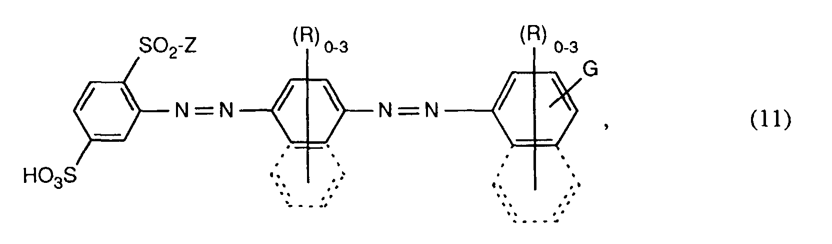 in which
(R)₀₋₃ are 0 to 3 substituents R from the group consisting of C₁₋₂alkyl, C₁₋₂alkoxy, halogen, carboxyl, hydroxyl, amino, acetylamino, ureido or sulfo
G is a radical -NHCOCBr=CH₂ or -NHCOCHBr-CH₂Br and
Z is β-sulfatoethyl, β-thiosulfatoethyl, β-phosphatoethyl, β-acyloxyethyl, β-haloethyl or vinyl.

14. Reactive dyes according to claim 1 of the formula 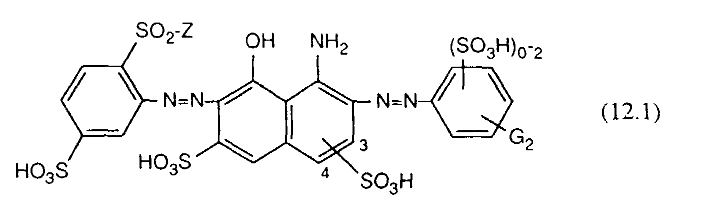 in which the second sulfo group in the naphthalene radical is either in the 3 or 4 position,
G₂ is a radical of the formula
-SO₂-Z (12b),
-SO₂-CH₂CH=CH₂ (12c),
-NH-COCBr=CH₂ (8b),
-CONH-(CH₂)₂-SO₂-Z (12d),
-CONH-(CH₂)₂-O-(CH₂)₂-SO₂-Z (12f),
-NHCOCH₂Cl (8c)
or
-NHCOCHBr-CH₂Br (8a)
and
Z is β-sulfatoethyl, β-thiosulfatoethyl, β-phosphatoethyl, β-acyloxyethyl, β-haloethyl or vinyl.

15. Reactive dyes according to claim 14 of the formula 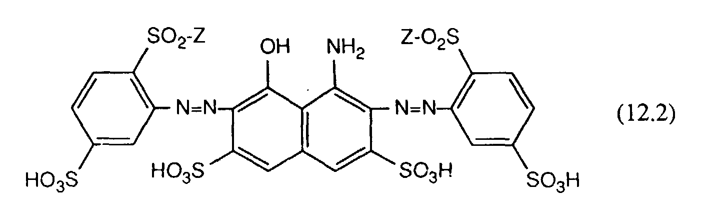 in which Z is as defined in claim 14.

16. Reactive dyes according to claim 1 of the formula 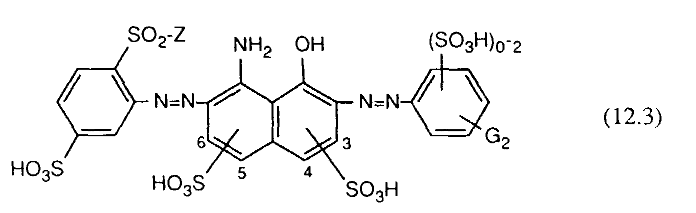 in which the two sulfo groups in the naphthalene radical are either in the 3,5 or 3,6 or 4,6 positions and G₂ and Z are as defined in claim 1.

17. Reactive dyes according to claim 1 of the formula 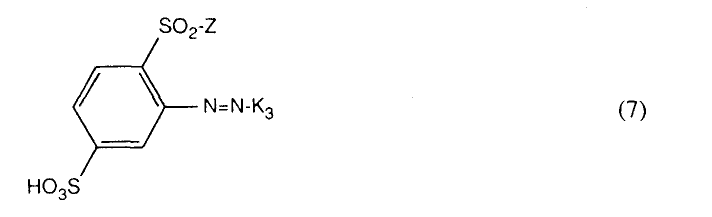 in which Z is vinyl or β-sulfatoethyl and K₃ is 2-amino-6-vinyl- or 2-amino-6-β-sulfatoethylsulfonyl-1-naphthyl.

18. Reactive dyes of formula (3) according to claim 4, in which Z is vinylsulfonyl or β-sulfatoethylsulfonyl, (R)₀₋₃ are 0-3 identical or different substituents from the group consisting of methyl, ethyl, methoxy, ethoxy, hydroxyl, hydroxyethoxy, acetylamino, ureido and sulfo, and K₂ is a radical of the formula 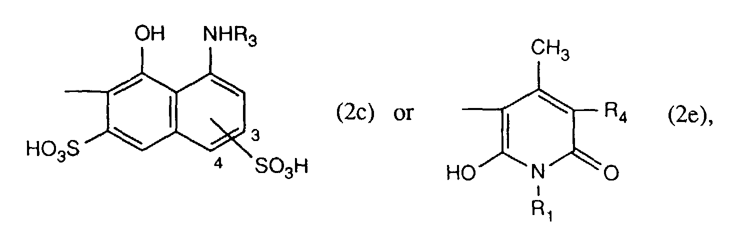 in which R₁ is methyl or ethyl, R₃ is acetyl or benzoyl and R₄ is -CONH₂ or -CH₂SO₃H.

19. Use of the reactive dyes according to claim 1 for the dyeing or printing of cellulosic materials.

20. Use according to claim 19 for the dyeing or printing of cotton.

## Revendications

1. Colorants réactifs de formule 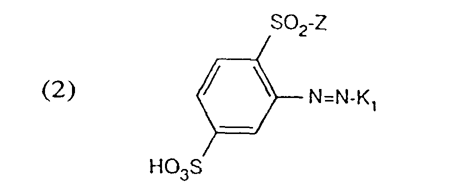 dans laquelle
K₁ représente un résidu de formule 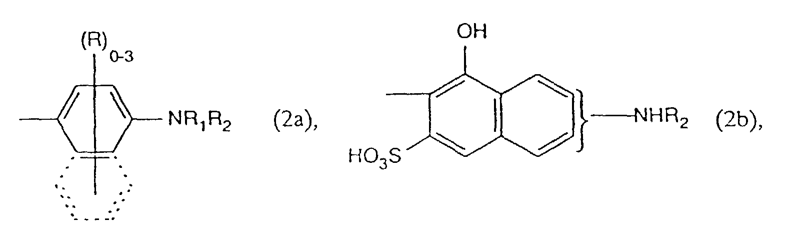 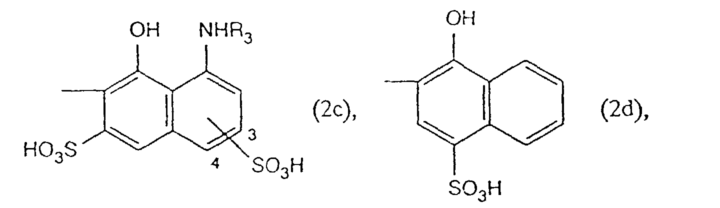 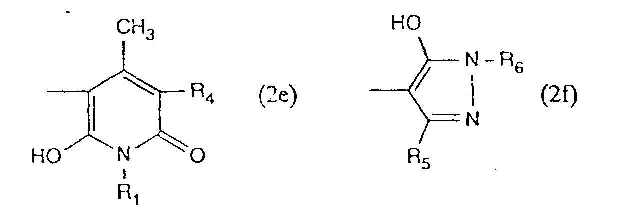
(R)₀₋₃ représente de 0 à 3 substituants R choisis parmi les groupes alkyle en C₁₋₂, alcoxy en C₁₋₂, hydroxyalcoxy en C₁₋₂, halogéno, carboxy, hydroxy, amino, acétylamino, uréido ou sulfo,
R₁ représente un atome d'hydrogène ou un groupe alkyle en C₁₋₄,
R₂ représente un atome d'hydrogène ou un groupe alkyle en C₁₋₄, alcanoyle en C₁₋₄ ou hydroxyalkyle en C₁₋₄,
R₃ représente un atome d'hydrogène ou un groupe alkyle en C₁₋₄, alcanoyle en C₁₋₄, benzoyle ou aminobenzoyle, et
R₄ représente un groupe -CONH₂ ou -CH₂SO₃H,
R₅ est un groupe alkyle en C₁₋₃ ou carboxy,
R₆ est un groupe phényle ou naphtyle portant un ou plusieurs substituants chloro et/ou sulfo,
Z est un groupe β-sulfatoéthyle, β-thiosulfatoéthyle, β-phosphatoéthyle, β-acyloxyéthyle, β-halogénoéthyle ou vinyle, et le deuxième groupe sulfo dans la formule (2c) est soit en position 3 soit en position 4;
des colorants réactifs de formule 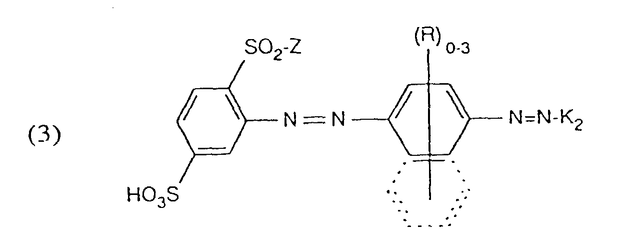 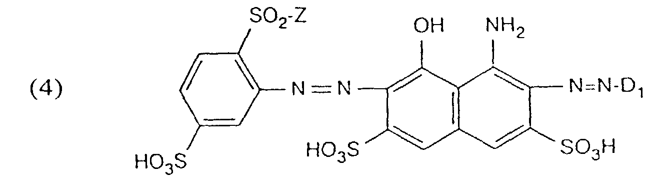 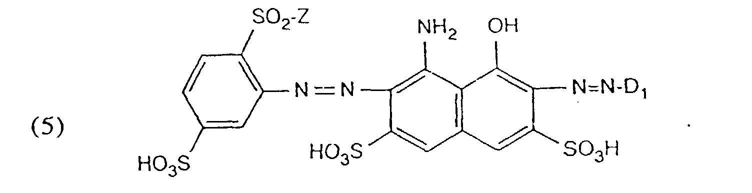 dans lesquelles K₂ représente un résidu de formule (2a) à (2f) ou un résidu 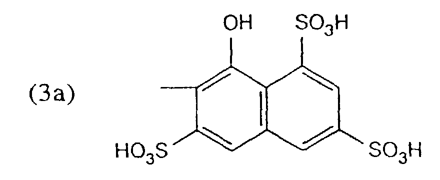
D₁ représente un résidu de formule 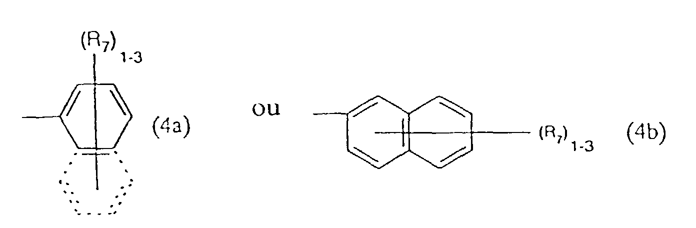 dans lesquelles
(R₇)₁₋₃ représente de 1 à 3 substituants choisis parmi les résidus alkyle en C₁₋₂, alcoxy en C₁₋₂, halogéno, carboxy, hydroxy, amino ou sulfo, et
Z et (R)₀₋₃ ont la signification indiquée à propos de la formule (2);
des colorants réactifs de formule 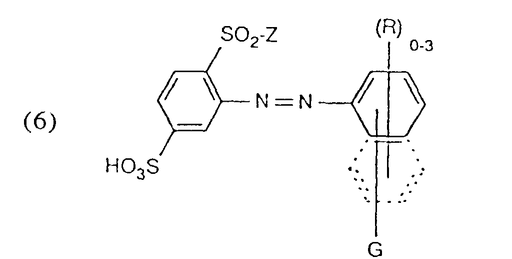 dans laquelle
Z et (R)₀₋₃ ont la signification indiquée à propos de la formule (2), et
G représente un résidu -NHCOCBr=CH₂, -NHCOCHBr-CH₂Br ou -SO₂Z où Z a la signification indiquée ci-dessus, ou un résidu de formule 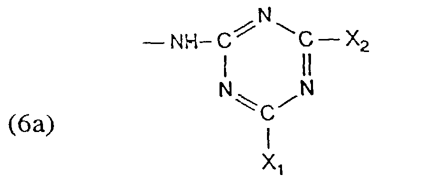
dans laquelle
X₁ représente un atome d'halogène et
X₂ représente un atome d'halogène, un groupe carboxy, sulfo, hydroxy, alcoxy en C₁₋₄, amino, N-mono- ou N,N-di-méthylamino, N-mono- ou N,N-di-éthylamino, N-méthyl- ou N-éthyl-N-phénylamino, morpholino, phénylamino portant ou non un substituant méthyle, méthoxy, chloro ou sulfo, ou un résidu de formule
-NH-(CH₂)₂₋₃-SO₂Z,
-NH-(CH₂)₂-O-(CH₂)₂-SO₂Z,
-NH-(CH₂)₂₋₃-NH-(CH₂)₂₋₃-SO₂Z,
-N[(CH₂)₂₋₃-SO₂Z]₂, 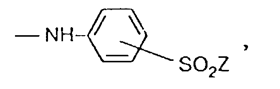 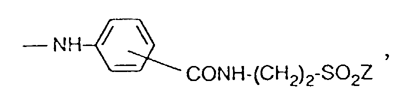
-NH-(CH₂)₂-O-(CH₂)₂-OH,
-NH-CH₂CH₂-OH
oder
-NH-CH₂CH₂SO₃H,
dans lesquelles
Z a la signification indiquée à propos de la formule (2);
des colorants de formule 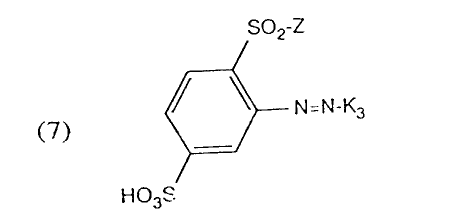
dans laquelle
K₃ représente un résidu
d'acide 1-amino-8-hydroxonaphtalène-3,6-disulfonique,
d'acide 1-amino-8-hydroxynaphtalène-4,6-disulfonique ou
d'acide 3-amino-8-hydroxynaphtalène-6-sulfonique,
le groupe amino portant un substituant benzoyle, acyle halogéné ou triazinyle conforme à la formule (6a) et Z ayant la signification indiquée à propos de la formule (2),
ou un résidu 2-aminonaphtalényle portant en position 5 ou 6 un résidu -SO₂Z où Z a la signification indiquée précédemment,
des colorants réactifs de formule 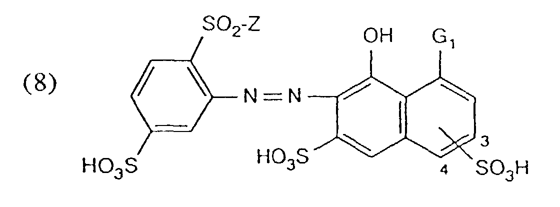 dans laquelle le deuxième groupe sulfo sur le résidu naphtalène est en position 3 ou 4, G₁ représente un résidu de formule
(8a) -NHCOCHBr-CH₂Br
(8b) -NHCOCBr=CH₂
(8c) -NHCOCH₂Cl 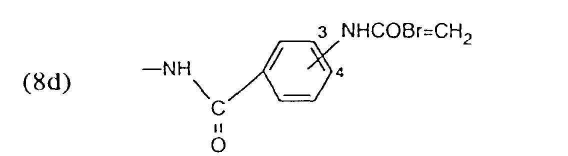 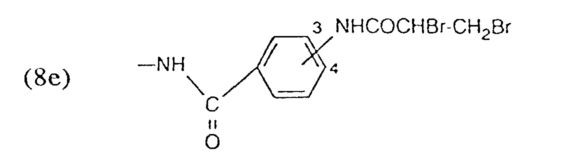 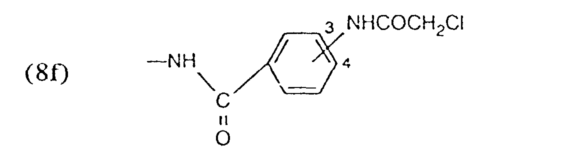
ou un résidu de formule (6a), les résidus de formule (8a), (8b) et (8c) dans les formules (8d), (8e) et (8f) étant en position 3 ou 4,
Z a la signification indiquée pour la formule (2) et X₁ et X₂ ont la signification indiquée pour la formule (6a);
des colorants réactifs de formule 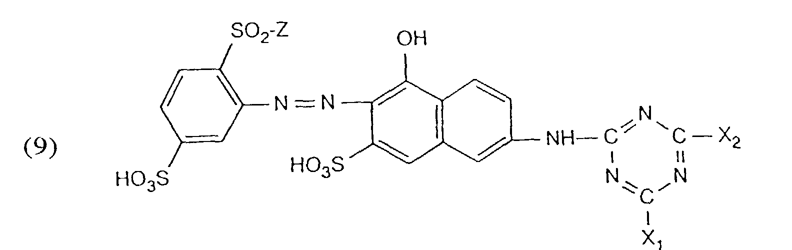 dans laquelle
Z a la signification indiquée pour la formule (2) et X₁ et X₂ ont la signification indiquée pour la formule (6a);
des colorants réactifs de formule 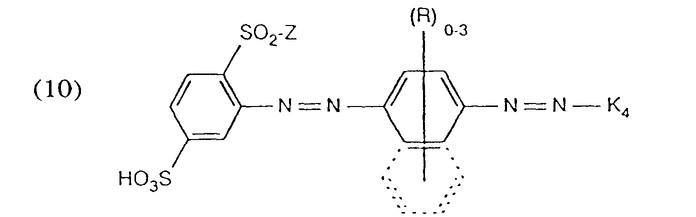 dans laquelle K₄ est un résidu de formule 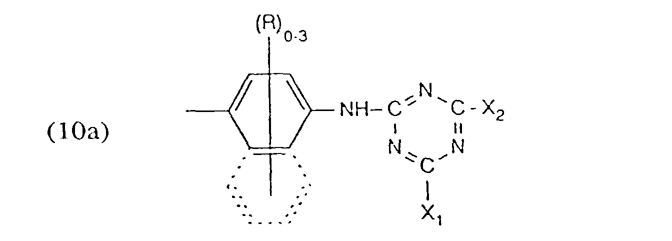 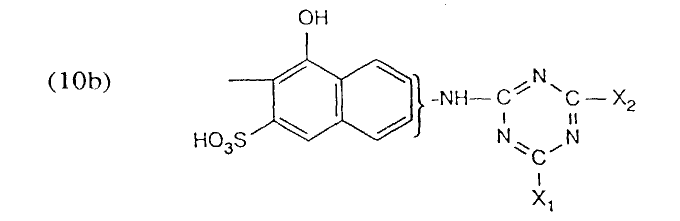 ou 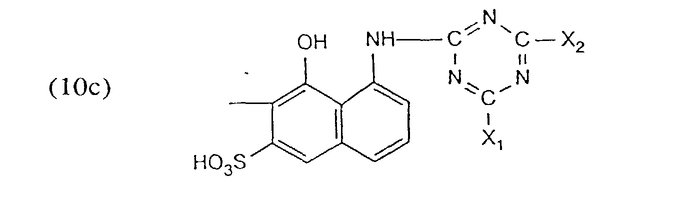
dans lesquelles
Z et (R)₀₋₃ ont la signification indiquée à propos de la formule (2) et X₁ et X₂ ont la signification indiquée à propos de la formule (6a);
des colorants réactifs de formule 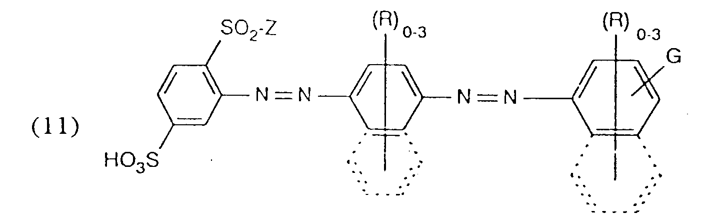
dans laquelle
Z et (R)₀₋₃ ont la signification indiquée à propos de la formule (2) et G a la signification indiquée à propos de la formule (6); ainsi que
des colorants réactifs de formule 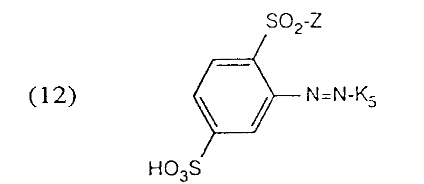 dans laquelle
K₅ représente un résidu
d'acide 1-amino-8-hydroxynaphtalène-3,6-disulfonique,
d'acide 1-amino-8-hydroxynaphtalène-3,5-disulfonique ou
d'acide 8-amino-1-hydroxynaphtalène-3-(5,6)-disulfonique ou
d'acide 8-amino-1-hydroxynaphtalène-4,6-disulfonique; couplé à un autre résidu de formule 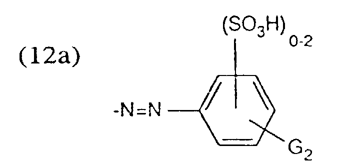
dans laquelle
G₂ représente un résidu de formule
(12b) -SO₂-Z
(12c) -SO₂-CH₂CH=CH₂
(8b) -NH-COCBr=CH₂
(12d) -CONH-(CH₂)₂-SO₂-Z
(12f) -CONH-(CH₂)₂-O-(CH₂)₂-SO₂-Z
(8c) -NHCOCH₂Cl
ou
(8a) -NHCOCHBr-CH₂Br
où Z a la signification indiquée à propos de la formule (2).

2. Colorants réactifs conformes à la revendication 1 de formule 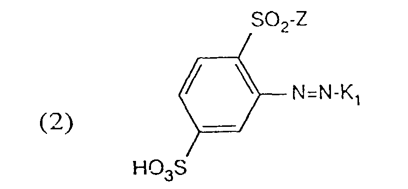 dans laquelle K₁ représente un résidu de formule 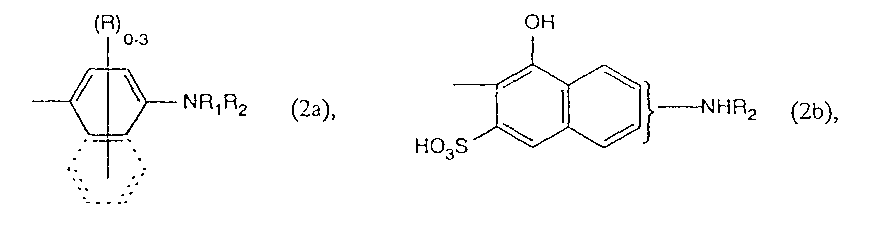 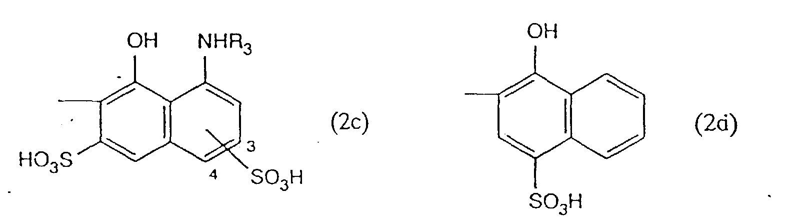
(R)₀₋₃ représente de 0 à 3 substituants R choisis parmi les groupes alkyle en C₁₋₂, alcoxy en C₁₋₂, hydroxyalcoxy en C₁₋₂, halogéno, carboxy, hydroxy, amino, acétylamino, uréido ou sulfo,
R₁ représente un atome d'hydrogène ou un groupe alkyle en C₁₋₄,
R₂ représente un atome d'hydrogène ou un groupe alkyle en C₁₋₄, alcanoyle en C₁₋₄ ou hydroxyalkyle en C₁₋₄,
R₃ représente un atome d'hydrogène ou un groupe alkyle en C₁₋₄, alcanoyle en C₁₋₄, benzoyle ou aminobenzoyle, et
Z a la signification indiquée dans la revendication 1 et le deuxième groupe sulfo dans la formule (2c) est soit en position 3 soit en position 4.

3. Colorants réactifs conformes à la revendication 1 de formule 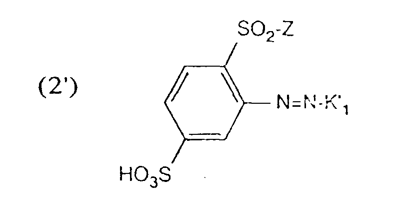 dans laquelle K'₁ représente un résidu de formule 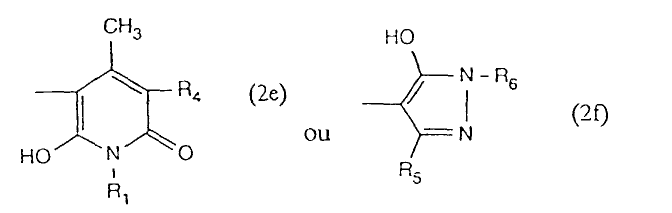
R₁ représente un atome d'hydrogène ou un groupe alkyle en C₁₋₄,
R₄ représente un groupe -CONH₂ ou -CH₂SO₃H,
R₅ représente un groupe alkyle en C₁₋₃ ou carboxy,
R₆ représente un groupe phényle ou naphtyle portant un ou plusieurs substituants chloro et/ou sulfo, et
Z a la signification indiqué dans la revendication 1.

4. Colorants réactifs conformes à la revendication 1 de formule 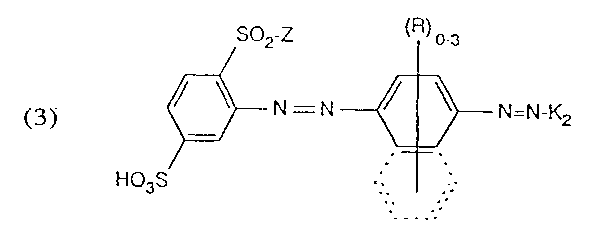 dans laquelle K₂ représente un résidu de formule (2a) à (2f) ou un résidu de formule 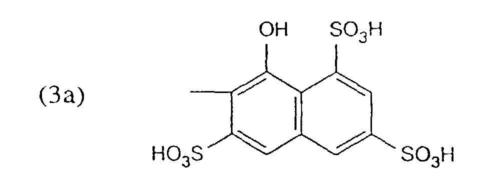 et (R)₀₋₃ et Z ont la signification indiquée dans la revendication 1.

5. Colorants réactifs conformes à la revendication 1 de formule 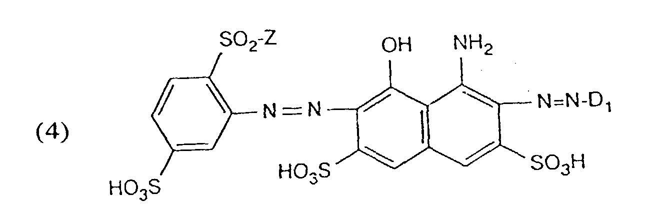 dans laquelle D₁ représente un résidu de formule 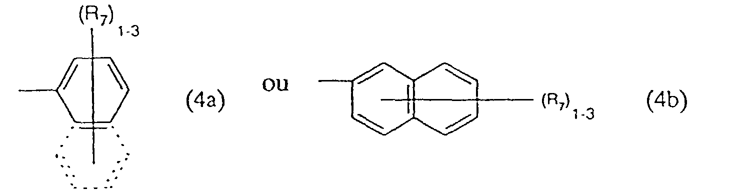
(R₇)₁₋₃ représente de 1 à 3 substituants choisis parmi les résidus alkyle en C₁₋₂, alcoxy en C₁₋₂, halogéno, carboxy, hydroxy, amino ou sulfo et
Z a la signification indiquée dans la revendication 1.

6. Colorants réactifs conformes à la revendication 1 de formule 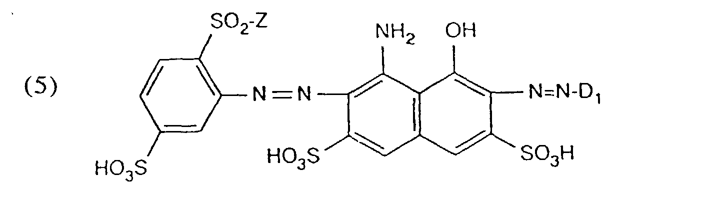 dans laquelle D₁ et Z ont la signification indiquée dans la revendication 1.

7. Colorants réactifs conformes à la revendication 1 de formule 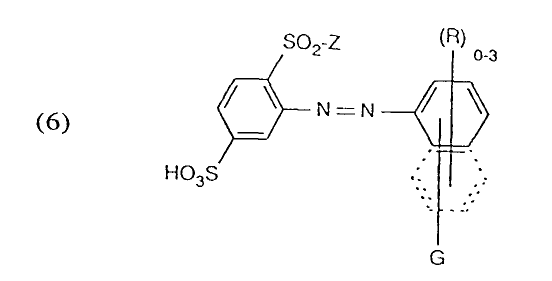 dans laquelle
(R)₀₋₃ représente de 0 à 3 substituants choisis parmi les résidus alkyle en C₁₋₂, alcoxy en C₁₋₂, halogéno, carboxy, hydroxy, amino, acétylamino, uréido ou sulfo, et
G représente un résidu -NHCOCBr=CH₂, -NHCOCHBr-CH₂Br ou -SO₂Z et
Z représente un groupe β-sulfatoéthyle, β-thiosulfatoéthyle, β-phosphatoéthyle, β-acyloxyéthyle, β-halogénoéthyle ou vinyle.

8. Colorants réactifs conformes à la revendication 1 de formule 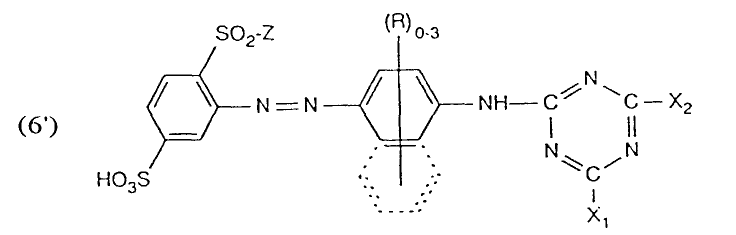 dans laquelle
(R)₀₋₃ représente de 0 à 3 substituants R choisis parmi les résidus alkyle en C₁₋₂, alcoxy en C₁₋₂, halogéno, carboxy, hydroxy, amino, acétylamino, uréido ou sulfo, et
X₁, X₂ et Z ont la signification indiquée dans la revendication 1.

9. Colorants réactifs conformes à la revendication 1 de formule 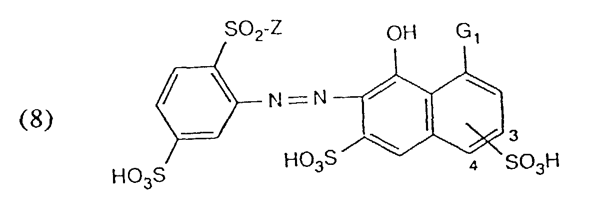 dans laquelle le deuxième groupe sulfo sur le résidu naphtalène est en position 3 ou 4 et G₁ représente un résidu de formule
(8a) -NHCOCHBr-CH₂Br
(8b) -NHCOCBr=CH₂
(8c) -NHCOCH₂Cl 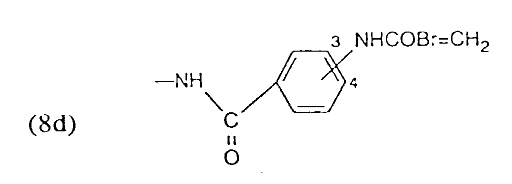 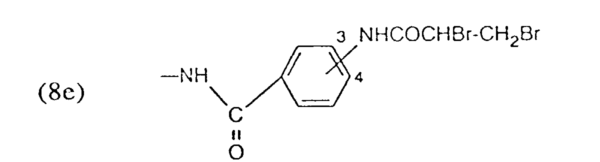 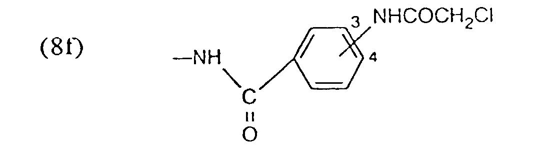
les résidus de formule (8a), (8b) et (8c) dans les formules (8d), (8e) et (8f) étant en position 3 ou 4, et Z représentant un groupe β-sulfatoéthyle, β-thiosulfatoéthyle, β-phosphatoéthyle, β-acyloxyéthyle, β-halogénoéthyle ou vinyle.

10. Colorants réactifs conformes à la revendication 1 de formule 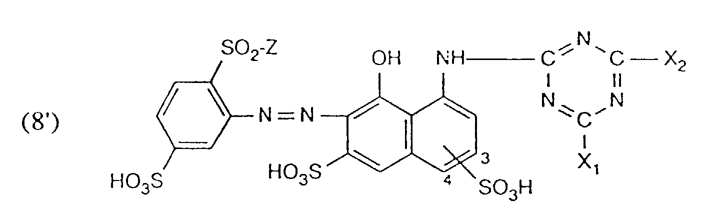 dans laquelle le deuxième groupe sulfo du noyau naphtalène est en position 3 ou 4 et X₁, X₂ et Z ont la signification indiquée dans la revendication 1.

11. Colorants réactifs conformes à la revendication 1 de formule 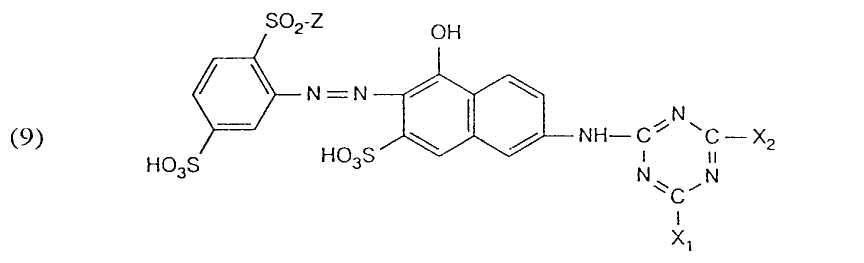 dans laquelle X₁, X₂ et Z ont la signification indiquée dans la revendication 1.

12. Colorants réactifs conformes à la revendication 1 de formule 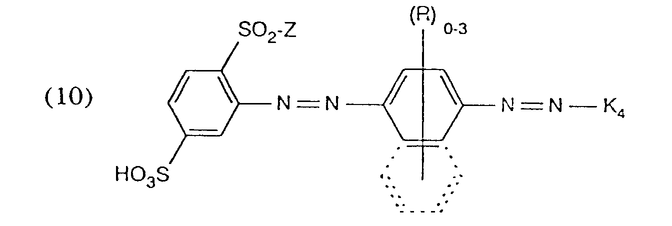 dans laquelle K₄ représente un résidu de formule 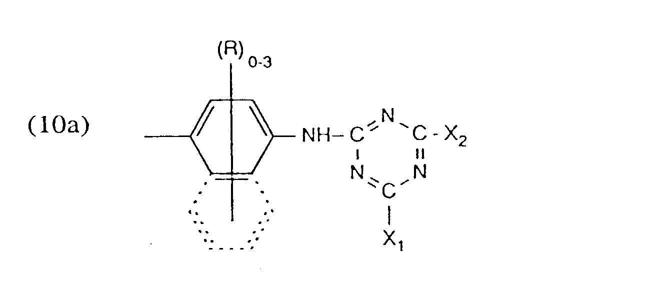 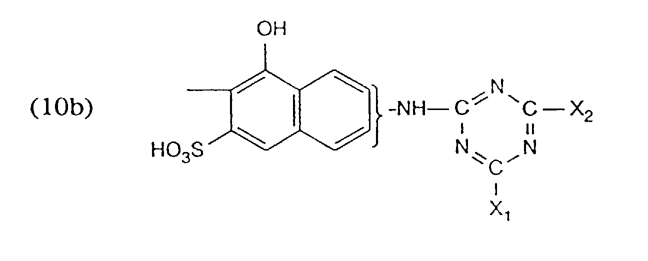 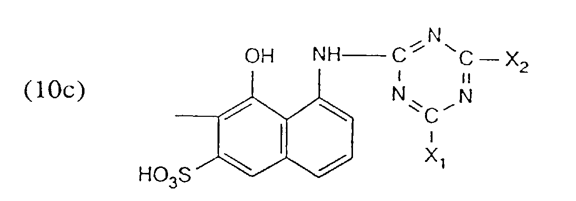 dans laquelle
(R)₀₋₃ représente de 0 à 3 substituants R choisis parmi les résidus alkyle en C₁₋₂, alcoxy en C₁₋₂, halogéno, carboxy, hydroxy, amino, acétylamino, uréido ou sulfo, et
X₁, X₂ et Z ont la signification indiquée dans la revendication 1.

13. Colorants réactifs conformes à la revendication 1 de formule 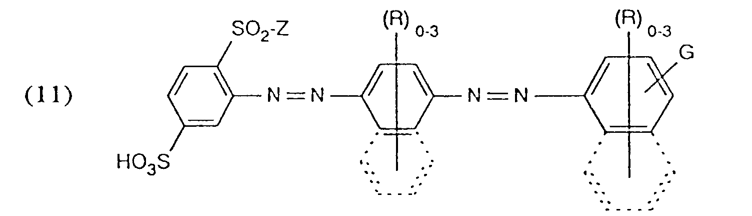 dans laquelle
(R)₀₋₃ représente de 0 à 3 substituants R choisis parmi les résidus alkyle en C₁₋₂, alcoxy en C₁₋₂, halogéno, carboxy, hydroxy, amino, acétylamino, uréido ou sulfo,
G représente un résidu -NHCOCBr=CH₂, -NHCOCHBr-CH₂Br,
Z représente un groupe β-sulfatoéthyle, β-thiosulfatoéthyle, β-phosphatoéthyle, β-acyloxyéthyle, β-halogénoéthyle ou vinyle.

14. Colorants réactifs conformes à la revendication 1 de formule 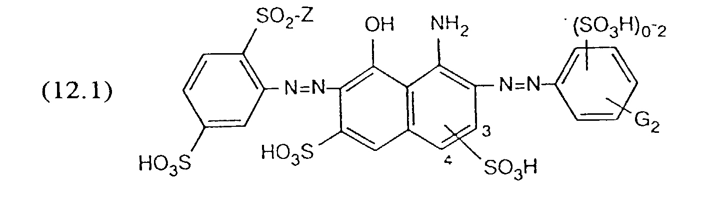 dans laquelle le deuxième groupe sulfo sur le noyau naphtalène est en position 3 ou 4,
G₂ représente un résidu de formule
(12b) -SO₂-Z
(12c) -SO₂-CH₂CH=CH₂
(8b) -NH-COCBr=CH₂
(12d) -CONH-(CH₂)₂-SO₂-Z
(12f) -CONH-(CH₂)₂-O-(CH₂)₂-SO₂-Z
(8c) -NHCOCH₂Cl
ou
(8a) -NHCOCHBr-CH₂Br
et
Z représente un groupe β-sulfatoethyle, β-thiosulfatoéthyle, β-phosphatoéthyle, β-acyloxyéthyle, β-halogénoéthyle ou vinyle.

15. Colorants réactifs. conformes à la revendication 14 de formule 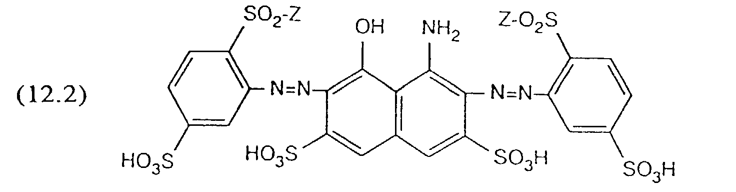 dans laquelle
Z a la signification indiquée dans la revendication 14.

16. Colorants réactifs conformes à la revendication 1 de formule 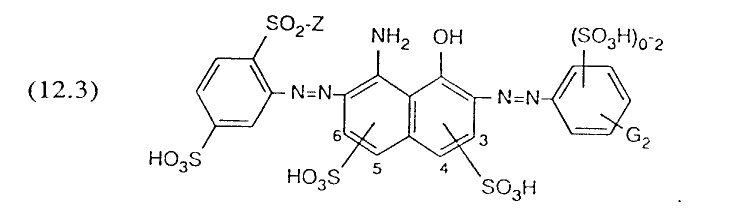 dans laquelle les deux groupe sulfo sur le noyau naphtalène sont en position 3 et 5, en position 3 et 6 ou en position 4 et 6 et G₂ et Z ont la signification indiquée dans la revendication 1.

17. Colorants réactifs conformes à la revendication 1 de formule 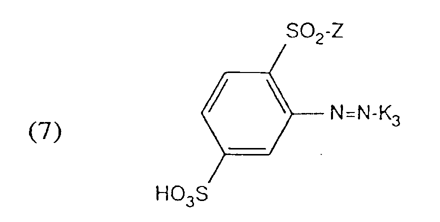 dans laquelle
Z est un groupe vinyle ou β-sulfatoéthyle et K₃ représente un groupe 2-amino-6-vinyl-1-naphtyle ou 2-amino-6-β-sulfatoéthylsulfonyl-1-naphtyle.

18. Colorants réactifs de formule (3) conformes à la revendication 4 dans lesquels Z représente un groupe vinylsulfonyle ou β-sulfatoéthylsulfonyle, (R)₀₋₃ représente de 0 à 3 substituants identiques ou différents choisis parmi les groupes méthyle, éthyle, méthoxy, éthoxy, hydroxy, hydroxyéthoxy, acétylamino, uréido ou sulfo, et K₂ représente un résidu de formule 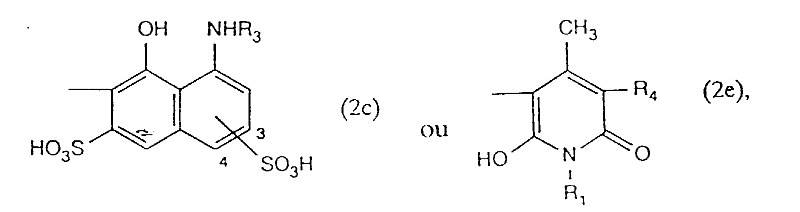 dans lesquelles R₁ représente un groupe méthyle ou éthyle, R₃ représente un groupe acétyle ou benzoyle et R₄ représente un groupe -CONH₂ ou-CH₂SO₃H.

19. Utilisation des colorants réactifs conformes à la revendication 1 pour la teinture et l'impression de matériaux cellulosiques.

20. Utilisation conforme à la revendication 19 pour la teinture ou l'impression de coton.
